# EUROPEAN PATENT APPLICATION

(11) **EP 4 589 892 A1**
(43) Date of publication of application: **23.07.2025**
(21) Application number: 22958496.6
(22) Date of filing: 16.09.2022
(51) Int. Cl.: H04L 27/00

(54) **COMMUNICATION DEVICE, METHOD AND APPARATUS, STORAGE MEDIUM, CHIP, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); SHI, Cong, Dongguan, Guangdong 523860 (CN); DU, Zhongda, Dongguan, Guangdong 523860 (CN)
(74) Representative: Aldridge, Henry Alexander
(86) International application number: PCT/CN2022/119409
(87) International publication number: WO 2024/055306

(57) **Abstract**

Provided in the embodiments of the present application are a communication device, method and apparatus, a storage medium, a chip, a product, and a program. When the communication device is a management device, the management device includes at least one target AI/ML entity, and each target AI/ML entity is configured to perform an AI/ML related task corresponding to the management device.

## Description

### TECHNICAL FIELD

Embodiments of the present disclosure relate to the technical field of mobile communication, and in particular, to a communication device, a communication method, a communication apparatus, a storage medium, a chip, a product and a program.

### RELATED ART

In light of the significant success achieved through Artificial Intelligence (AI) or Machine Learning (ML) technology in areas such as computer vision and natural language processing, the field of communication has begun to explore the utilization of the AI technology, to develop innovative technical approaches for addressing traditional problems that have been constrained by the existing technical solutions.

However, there is no technology that integrates the AI technology or ML technology with a communication system in the related art.

### SUMMARY

Embodiments of the present disclosure provide a communication device, a communication method, a communication apparatus, a storage medium, a chip, a product and a program.

In a first aspect, a management device is provided in the embodiments of the present disclosure. The management device includes at least one target AI/ML entity. Each target AI/ML entity is configured to perform an AI/ML related task corresponding to the management device.

In a second aspect, a core network device is provided in the embodiments of the present disclosure. The core network device includes at least one target AI/ML entity. Each target AI/ML entity is configured to perform an AI/ML related task corresponding to the core network device.

In a third aspect, an access network device is provided in the embodiments of the present disclosure. The access network device includes at least one target AI/ML entity. Each target AI/ML entity is configured to perform an AI/ML related task corresponding to the access network device.

In a fourth aspect, a terminal device is provided in the embodiments of the present disclosure. The terminal device includes at least one target AI/ML entity. Each target AI/ML entity is configured to perform an AI/ML related task corresponding to the terminal device.

In a fifth aspect, a communication method is provided in the embodiments of the present disclosure. The method includes the following operation.

A communication device performs an AI/ML related task corresponding to the communication device. Herein, the AI/ML related task corresponding to the communication device includes at least one of:
an AI/ML related task generated by the communication device;
an AI/ML related task requested by a target AI/ML entity deployed in a device other than the communication device;
an AI/ML related task transmitted by a target AI/ML entity deployed in a device other than the communication device; or
training, reasoning or monitoring an AI/ML model in the communication device.

In a sixth aspect, a communication apparatus is provided in the embodiments of the present disclosure. The communication apparatus includes an execution unit.

The execution unit is configured to perform an AI/ML related task corresponding to the communication apparatus. Herein, the AI/ML related task corresponding to the communication apparatus includes at least one of:
an AI/ML related task generated by the communication apparatus;
an AI/ML related task requested by a target AI/ML entity deployed in a device other than the communication apparatus;
an AI/ML related task transmitted by a target AI/ML entity deployed in a device other than the communication apparatus; or
training, reasoning or monitoring an AI/ML model in the communication apparatus.

In a seventh aspect, a communication device is provided in the embodiments of the present disclosure. The communication device includes a processor and a memory.

The memory is configured to store a computer program executable on the processor.

The processor is configured to implement the aforementioned method when executing the program.

In an eighth aspect, a computer storage medium storing one or more programs is provided in the embodiments of the present disclosure. The one or more programs are executable by one or more processors to implement the aforementioned method.

In a ninth aspect, a chip is provided in the embodiments of the present disclosure. The chip includes a processor, and the processor is configured to invoke and execute a computer program from a memory to implement the aforementioned method.

In a tenth aspect, a computer program product is provided in the embodiments of the present disclosure. The computer program product includes a computer storage medium storing a computer program, and the computer program includes instructions executable by at least one processor. When the instructions are executed by the at least one processor, the aforementioned method is implemented.

In an eleventh aspect, a computer program is provided in the embodiments of the present disclosure, and the computer program causes a computer to perform the aforementioned method.

In the embodiments of the present disclosure, the management device includes at least one target AI/ML entity, and each target AI/ML entity is configured to perform the AI/ML related task corresponding to the management device. In such way, through the management device including the at least one target AI/ML entity, the target AI/ML entity can perform the AI/ML related task corresponding to the management device, thereby realizing the solution that integrates the AI technology or ML technology with the communication system, and further improving the efficiency of information processing through the AI technology or ML technology.

### BRIEF DESCRIPTION OF THE DRAWINGS

The accompanying drawings constituting a part of the present disclosure provide further understanding of the present disclosure. The schematic embodiments of the present disclosure and description thereof are intended to be illustrative of the present disclosure and do not constitute an undue limitation of the present disclosure. In the accompanying drawings:
FIG. 1 is a schematic diagram of an application scenario of an embodiment of the present disclosure.
FIG. 2 is a schematic structural diagram of a management device according to an embodiment of the present disclosure.
FIG. 3 is a schematic structural diagram of a core network device according to an embodiment of the present disclosure.
FIG. 4 is a schematic structural diagram of an access network device according to an embodiment of the present disclosure.
FIG. 5 is a schematic structural diagram of a terminal device according to an embodiment of the present disclosure.
FIG. 6 is a schematic diagram of an architecture of a communication system according to an embodiment of the present disclosure.
FIG. 7 is a schematic diagram of communication between a management device and other communication nodes according to an embodiment of the present disclosure.
FIG. 8 is another schematic diagram of communication between a management device and other communication nodes according to an embodiment of the present disclosure.
FIG. 9 is a schematic diagram of communication between a core network device and other communication nodes according to an embodiment of the present disclosure.
FIG. 10 is another schematic diagram of communication between a core network device and other communication nodes according to an embodiment of the present disclosure.
FIG. 11 is a schematic diagram of communication between an access network device and other communication nodes according to an embodiment of the present disclosure.
FIG. 12 is another schematic diagram of communication between an access network device and other communication nodes according to an embodiment of the present disclosure.
FIG. 13 is a schematic structural diagram of a terminal device according to an embodiment of the present disclosure.
FIG. **14** is a schematic flowchart of a communication method according to an embodiment of the present disclosure.
FIG. 15 is a schematic structural diagram of a communication apparatus according to an embodiment of the present disclosure.
FIG. 16 is a schematic structural diagram of a communication device according to an embodiment of the present disclosure.
FIG. 17 is a schematic structural diagram of a chip of an embodiment of the present disclosure.

### DETAILED DESCRIPTION

Hereinafter, the technical solutions in the embodiments of the present disclosure will be described below with reference to the accompanying drawings in the embodiments of the present disclosure. It will be apparent that the described embodiments herein are only part of, but not all of, the embodiments in the present disclosure. Based on the embodiments in the present disclosure, all other embodiments obtained by those of ordinary skilled in the art without making any creative effort fall within the scope of protection of the present disclosure.

The technical solutions described in the embodiments of the present disclosure may be arbitrarily combined without any conflict. In the description of the present disclosure, "multiple" means two or more, unless otherwise defined explicitly and specifically.

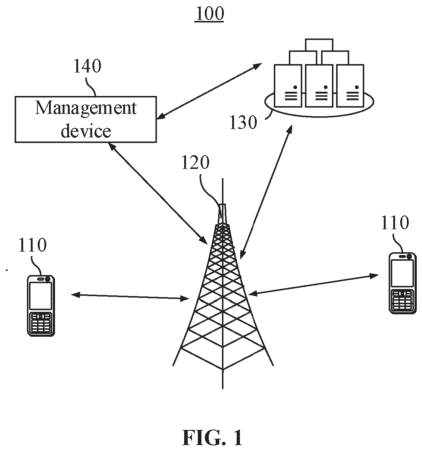

FIG. 1 is a schematic diagram of an application scenario of an embodiment of the present disclosure. As illustrated in FIG. 1, a communication system 100 may include terminal devices 110, an access network device 120, a Core Network (CN) device 130 and a management device 140.

The access network device may provide communication coverage for a particular geographic area and may communicate with the terminal devices 110 (e.g., User Equipment (UE)) located within the coverage area.

The technical solutions of the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Universal Mobile Telecommunication System (UMTS), Wireless Local Area Networks (WLAN), Wireless Fidelity (WiFi), LTE Time Division Duplex (TDD), a Universal Mobile Telecommunication System (UMTS), an Internet of Things (IoT) system, a Narrow Band Internet of Things (NB-IoT) System, an enhanced Machine-Type Communications (eMTC) system, or a future communication system (e.g., 6G, 7G communication systems), etc.

The terminal device in the present disclosure may be a device with a wireless communication function. The terminal device may be deployed on land, which includes an indoor, outdoor, handheld or vehicle-mounted device; the terminal device may also be deployed on the water (such as a ship, etc.); and the terminal device may further be deployed in the air (such as, on an aircraft, a balloon and a satellite, etc.). The terminal device in the present disclosure may be referred to as a UE, a Mobile Station (MS), a Mobile Terminal (MT), a subscriber unit, a subscriber station, a mobile site, a remote station, a remote terminal, a mobile device, a user terminal, a terminal, a wireless communication device, a user agent or a user apparatus. The terminal device may include one or a combination of at least two of the following: an Internet of Things (IoT) device, a satellite terminal, a Wireless Local Loop (WLL) station, a Personal Digital Assistant (PDA), a handheld device with a wireless communication function, a computing device or other processing device connected to a wireless modem, a server, a mobile phone, a Pad, a computer with a wireless transceiver function, a handheld computer, a desktop computer, a portable media player, a smart speaker, a navigation device, a smart watch, smart glasses, a smart necklace and other wearable devices, a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a vehicle in an Internet of Vehicles, a vehicle-mounted device, a vehicle-mounted module, a wireless modem, a handheld device, a Customer Premise Equipment (CPE), a smart home appliance, etc. Alternatively, each of the terminal devices 110 may be any terminal device, including but not limited to the terminal device that is connected to the access network device 120 or other terminal devices in a wired manner or a wireless manner. Alternatively, the terminal devices 110 may be used for Device-to-Device (D2D) communication.

The access network device 120 may include one or a combination of at least two of the following: an Evolutional Node B (eNB or eNodeB) in a LTE system, a Next Generation Radio Access Network (NG RAN) device, a base station (gNB) in a NR system, a small station, a micro station, a wireless controller in a Cloud Radio Access Network (CRAN), an access point of Wireless-Fidelity (Wi-Fi), a transmission reception point (TRP), a relay station, an access point, a vehicle-mounted device, a wearable device, a hub, a switch, a bridge, a router, a network device in the future evolutional Public Land Mobile Network (PLMN), etc.

The core network device 130 may be a 5G Core (5GC) device. The core network device may include one or a combination of at least two of the following: an Access and Mobility Management Function (AMF) network element, an Authentication Server Function (AUSF) network element, a User Plane Function (UPF) network element, a Session Management Function (SMF) network element, a Location Management Function (LMF) network element, a Policy Control Function (PCF) network element, or a unified data management (UDM) network element. In some other implementations, the core network device may also be an Evolved Packet Core (EPC) device in the LTE network, for example, a Session Management Function + Core Packet Gateway (SMF + PGW-C) device. It should be understood that the SMF + PGW-C can simultaneously implement the functions that are implemented by the SMF and the PGW-C. During the process of network evolution, the core network device 130 may be called by another name, or a new network entity may be formed by dividing the functions of the core network, which will not be limited in the embodiments of the present disclosure.

Various function units in the communication system 100 may also establish a connection between each other through a next generation network (NG) interface to achieve communication.

For example, the terminal device establishes an air interface connection with the access network device through a NR interface, for transmitting user plane data and control plane signaling. The terminal device may establish a control plane signaling connection with the AMF through an NG interface 1 (referred to as N1). The access network device, such as a next generation radio access base station (gNB), may establish a user plane data connection with the UPF through an NG interface 3 (referred to as N3). The access network device may establish a control plane signaling connection with the AMF through an NG interface 2 (referred to as N2). The UPF may establish a control plane signaling connection with the SMF through an NG interface 4 (referred to as N4). The UPF may interact user plane data with the data network through an NG interface 6 (referred to as N6). The AMF may establish a control plane signaling connection with the SMF through an NG interface 11 (referred to as N11). The SMF may establish a control plane signaling connection with the PCF through an NG interface 7 (referred to as N7).

FIG. 1 exemplarily illustrates one base station, one core network device, and two terminal devices. Alternatively, the wireless communication system 100 may include multiple base station devices, and another number of terminal devices may be included within the coverage range of each base station, which will not be limited in the embodiments of the present disclosure.

It should be noted that FIG. 1 only illustrates a system applicable to the present disclosure in the form of an example, and of course, the method in the embodiments of the present disclosure may also be applied to other systems. Further, the terms "system" and "network" are often used interchangeably herein. The term "and/or" herein is only used for describing an association relationship of association objects, which means that there may be three relationships. For example, A and/or B may mean that A exists alone, A and B exist simultaneously, and B exists alone. In addition, the character "/" in the present disclosure generally indicates that there is an "or" relationship between the association objects. It should also be understood that the term "indication" mentioned in the embodiments of the present disclosure may be a direct indication, an indirect indication, or used for describing an association relationship. For example, A indicates B may mean that A directly indicates B, for example, B may be acquired by A; it may also mean that A indicates B indirectly, for example, A indicates C, and B may be obtained through C; furthermore, it may also mean that there is an association relationship between A and B. It should also be understood that the term "correspondence" mentioned in the embodiments of the present disclosure may indicate that there is a direct correspondence or indirect correspondence relationship between the two objects. It may indicate that there is an association relationship between the two objects, or may indicate a relationship between indicating and being indicated, configuring and being configured, or the like. It should also be understood that the term "predefined", "agreed by protocol", "predetermined", or "predefined rule" mentioned in the embodiments of the present disclosure may be implemented by storing corresponding codes, tables, or other methods that may be used to indicate relevant information in advance in the devices (including, for example, terminal devices and network devices). The specific implementation methods are not limited in the present disclosure. For example, the term "predefined" may refer to be defined in the protocol. It should also be understood that, in the embodiments of the present disclosure, the term "protocol" may refer to a standard protocol in the field of communication, and may include, for example, an LTE protocol, an NR protocol, and related protocols applied to future communication systems, which will not be limited in the present disclosure.

In order to facilitate understanding of the technical solutions of the embodiments of the present disclosure, the technologies related to the embodiments of the present disclosure will be described below. The related technologies below may be arbitrarily combined with the technical solutions of the embodiments of the present disclosure as options solutions, and all of them belong to the scope of protection of the embodiments of the present disclosure.

5G introduces the following functions: a function of Self-Organizing Networks (SON) mechanism and Minimization of Drive Tests (MDT) mechanism, a function of Network Data Analytics Function (NWDAF) and a function of Management Data Analytics (MDA).

The function of SON mechanism and MDT mechanism is mainly used for data collection related to function optimization, such as, collection of the data required for the functions of handover optimization, coverage optimization, random access optimization, etc. The subject execution body of the data collection is Operation Administration and Maintenance (OAM). The utilization of the collected data and the definition of optimization behaviors are both processed based on implementation manners.

The function entity of the NWDAF function is deployed in the core network, and is mainly used for function optimization analysis. For each optimization goal, the NWDAF entity respectively defines the types of data to be collected and potential data sources, and further provides possible optimization analysis behavior outputs. Of course, how to use the collected data to obtain a behavior output of optimization analysis is also processed through the implementation manners.

The function entity of the MDA function is deployed in the OAM, and is mainly used for function optimization analysis. For each optimization goal, the MDA entity respectively defines the types of data to be collected and potential data sources, and further provides possible a behavior output of optimization analysis. Of course, how to use the collected data to obtain the behavior output of optimization analysis is also processed through the implementation manners. Different from the NWDAF function, the function entity of MDA even has a capability to use the data output by the function entity.

The existing data collection and data analysis functions in 5G basically adopt a centralized processing mode. Such processing mode presents at least one of the following problems: excessive centralization in data collection, which is unfavorable for accurate, timely and secure data transmission; overly centralized data analysis and processing that requires excessively high resources and functions from the data processing center, thereby impeding the timely resolution of problems based on the principle of proximity; and an inadequate supervisory mechanism for data analysis and processing, which fails to effectively evaluate the outcomes of the data analysis and processing, making it difficult to adjust the strategy for data analysis and processing in a timely manner.

Therefore, the aforementioned shortcomings indicate that the existing function optimization in 5G basically adopts a post-processing mode. This means that the optimization measures are implemented after the problem occurs, so that it is difficult to solve the problems in real time.

However, with the continuous development of AI/ML technology, the integration of communication technology and AI/ML technology is emerging as a significant trend in future communication. Nevertheless, various functions of communication systems often require high real-time performance. In many cases, there is an expectation that the problems can be addressed in real time or near real time. The existing centralized processing mode in 5G basically cannot achieve the goal of using AI/ML tools to optimize communication problems in real time or near real time.

Unless otherwise specified, the communication device in the embodiments of the present disclosure may represent at least one of the following: a management device, a core network device, an access network device or a terminal device.

In order to facilitate understanding of the technical solutions of the embodiments of the present disclosure, the technical solutions of the present disclosure will be described in detail below with reference to specific embodiments. The above related technologies may be combined in various ways with the technical solutions of the embodiments of the present disclosure as optional solutions, and all of them fall within the scope of protection of the embodiments of the present disclosure. The embodiments of the present disclosure include at least some of the following contents.

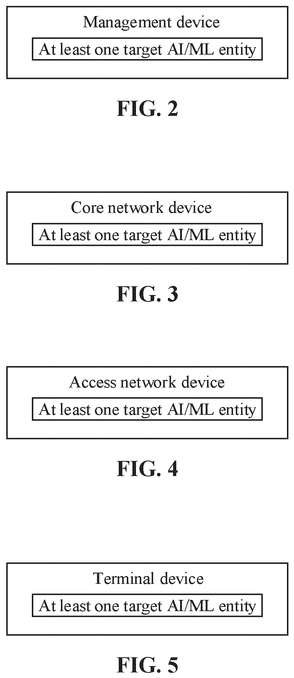

FIG. 2 is a schematic structural diagram of a management device according to an embodiment of the present disclosure. As illustrated in FIG. 2, the management device includes at least one target AI/ML entity. Each target AI/ML entity is configured to perform an AI/ML related task corresponding to the management device.

Alternatively, the AI/ML entity in the present disclosure may be an AI entity or an ML entity.

Alternatively, the management device in the present disclosure may be an OAM device. Alternatively, the management device may communicate with one or more communication nodes in a core network device. Alternatively, the management device may communicate with one or more communication nodes in an access network device.

Alternatively, functions of the management device may include: link performance detection, fault detection and alarm, and loop testing. The link performance detection is used to monitor various aspects of the link performance, including measurements for packet loss, time delay, jitter, etc., as well as statistics of various types of traffics. The fault detection and alarm is used to detect link connectivity by transmitting a detection message, and notifying the network administrator in time when a link failure occurs. The loop testing is used to detect the link failure through loopback of a non-Ethernet OAM protocol message.

Alternatively, the core network device may include one or more communication nodes, or one or more communication nodes may be deployed in the core network device. Alternatively, in any one embodiment of the present disclosure, the communication node(s) included in the core network device or the communication node(s) deployed in the core network device may include at least one of the following: an AMF network element, a SMF network element, a UPF network element, a UDM network element, a PCF network element, a LMF network element, or an AUSF network element.

Alternatively, the one or more communication nodes in the access network device may include at least one of the following: one or more base stations, one or more Central units (CU), one or more Distribute Units (DU), one or more Central unit-Control Planes (CU-CP), one or more Central unit-User Plane (CU-UP), or one or more protocol layer entities in the access network. The base station may include a next Generation Node B (gNB), a base station in 6G, a base station in 7G, or the like.

Alternatively, the protocol layer entity in the access network or the protocol layer entity in the access network device may include at least one of the following: a Non-Access Stratum (NAS) entity, a Service Data Adaptation Protocol (SDAP) entity, a Radio Resource Control (RRC) entity, a Packet Data Convergence Protocol (PDCP) entity, a Radio Link Control (RLC) entity, a Backhaul Adaptation Protocol (BAP) entity, a Media Access Control (MAC) entity, or a Physical layer (PHY) entity.

For example, the management device and/or the target AI/ML entity in the management device may communicate with an AMF network element and/or a target AI/ML entity in the AMF network element in the core network device. For another example, the management device and/or the target AI/ML entity in the management device may communicate with one base station and/or a target AI/ML entity of the base station in the access network device, or may communicate with each of multiple base stations and/or a target AI/ML entity of each of the multiple base stations in the access network device. For yet another example, the management device and/or the target AI/ML entity in the management device may communicate with a DU and/or a target AI/ML entity in the DU in the access network device; and/or, may communicate with a CU-UP and/or a target AI/ML entity in the CU-UP in the access network device; and/or, may communicate with a NAS entity and/or a target AI/ML entity in the NAS entity in one or more base stations; and/or, may communicate with a MAC entity and/or a target AI/ML entity in the MAC entity in the one or more base stations.

Alternatively, in any one embodiment of the present disclosure, the communication between A and B may be direct communication between A and B through an interface protocol, or may be indirect communication between A and B through other devices or other entities, which will not be limited in the embodiments of the present disclosure. Herein, A may represent any communication node or any protocol layer entity, and B may also represent any communication node or any protocol layer entity.

Alternatively, in any one embodiment of the present disclosure, the at least one target AI/ML entity may be an AI/ML entity of the same type, or an AI/ML entity of a different type.

Alternatively, in any one embodiment of the present disclosure, the at least one target AI/ML entity may include at least one of the following: at least one intra-node AI/ML entity (referred to as the AI entity in the figures), at least one cross-node AI/ML entity (referred to as the cross-node AI coordination entity in the figures), at least one central entity (referred to as the cross-node AI coordination entity central entity in the figures), at least one sub-entity (referred to as the cross-node AI coordination entity sub-entity in the figures), or at least one specific entity.

Alternatively, in any one embodiment of the present disclosure, the AI/ML related task corresponding to the management device may include at least one of the following: a task generated by the management device, a task requested by a target AI/ML entity deployed in a device other than the management device, or a task interacted with a target AI/ML entity deployed in a device other than the management device.

For example, each target AI/ML entity in the management device may be configured to at least one of the following: transmit data for AI/ML and/or a AI/ML model to a target AI/ML entity deployed in a device other than the management device; receive the data for AI/ML and/or the AI/ML model transmitted by a target AI/ML entity deployed in the device other than the management device; generate the data for AI/ML and/or the AI/ML model; or train, reason or monitor the AI/ML model according to the data for AI/ML.

In the embodiments of the present disclosure, the management device includes at least one target AI/ML entity, and each target AI/ML entity is configured to perform the AI/ML related task corresponding to the management device. In such way, through the management device including the at least one target AI/ML entity, the target AI/ML entity can perform the AI/ML related task corresponding to the management device, thereby realizing the solution that integrates the AI technology or ML technology with the communication system, and further improving the efficiency of information processing through the AI technology or ML technology.

In some embodiments, the at least one target AI/ML entity includes at least one intra-node AI/ML entity and/or at least one cross-node AI/ML entity. Each cross-node AI/ML entities or each intra-node AI/ML entity is configured to process at least one of the following:
a task requested by a non-target AI/ML entity in the management device;
a task generated by the cross-node AI/ML entity or the intra-node AI/ML entity;
a task requested by other cross-node AI/ML entity deployed in the management device;
a task requested by other intra-node AI/ML entity deployed in the management device; or
a task requested by a target AI/ML entity deployed in a device other than the management device.

Alternatively, the tasks to be processed by different intra-node AI/ML entities may be the same, different or partially the same. Alternatively, the tasks to be processed by different cross-node AI/ML entities may be the same, different or partially the same. Alternatively, the tasks to be processed by any one intra-node AI/ML entity and any one cross-node AI/ML entity may be the same, different, or partially the same.

Alternatively, the task to be processed by each cross-node AI/ML entity or each intra-node AI/ML entity may be preconfigured, or may be configured by another AI/ML entity or a device other than the cross-node AI/ML entity or the intra-node AI/ML entity itself.

Alternatively, in any one embodiment of the present disclosure, the intra-node AI/ML entity may be an intra-node AI/ML function entity. Alternatively, in any one embodiment of the present disclosure, the cross-node AI/ML entity may be a cross-node AI/ML coordination entity.

Alternatively, the management device may include a target AI/ML entity and a non-target AI/ML entity other than the target AI/ML entity.

Alternatively, the target AI/ML entity deployed in the device other than the management device may include at least one of the following: an intra-node AI/ML entity deployed in the device other than the management device, a cross-node AI/ML entity deployed in the device other than the management device, a central entity deployed in the device other than the management device, a sub-entity deployed in the device other than the management device, or a specific entity deployed in the device other than the management device. Alternatively, the device other than the management device may include at least one of the following: a core network device, an access network device or a terminal device.

In some embodiments, any two cross-node AI/ML entities deployed in the management device directly communicate with each other through an interface protocol.

In some embodiments, the management device includes at least one central entity. Any two cross-node AI/ML entities deployed in the management device indirectly communicate with each other through one or more central entities.

In some embodiments, any one intra-node AI/ML entity and the cross-node AI/ML entity that are deployed in the management device directly communicate through an interface protocol.

In some embodiments, the management device includes at least one central entity. Any one intra-node AI/ML entity and the cross-node AI/ML entity that are deployed in the management device indirectly communicate through one or more central entities.

In some embodiments, any two intra-node AI/ML entities deployed in the management device directly communicate with each other through an interface protocol.

In some embodiments, the management device includes at least one central entity. The any two intra-node AI/ML entities deployed in the management device indirectly communicate with each other through one or more central entities.

Alternatively, in any embodiment of the present disclosure, the central entity may be a cross-node AI/ML coordination entity central entity.

Alternatively, any one intra-node AI/ML entity and one or more cross-node AI/ML entities may be included between the any one intra-node AI/ML entity and the cross-node AI/ML entity described above.

Alternatively, in any one embodiment of the present disclosure, any two target AI/ML entities directly communicate with each other through an interface protocol, which may include that there exists a communication connection between the any two target AI/ML entities. Alternatively, in any one embodiment of the present disclosure, the any two target AI/ML entities indirectly communicate with each other, which may include that there does not exist a direct communication connection between the any two target AI/ML entities.

In some embodiments, a cross-node AI/ML entity deployed in the management device and a target AI/ML entity deployed in a device other than the management device directly communicate through an interface protocol.

In some embodiments, a cross-node AI/ML entity deployed in the management device and a target AI/ML entity deployed in a device other than the management device indirectly communicate through a cross-node AI/ML entity deployed in the device other than the management device.

In some embodiments, an intra-node AI/ML entity deployed in the management device and a target AI/ML entity deployed in a device other than the management device directly communicate through an interface protocol.

In some embodiments, an intra-node AI/ML entity deployed in the management device and a target AI/ML entity deployed in a device other than the management device indirectly communicate through a cross-node AI/ML entity deployed in the device other than the management device.

In some embodiments, the at least one target AI/ML entity includes at least one central entity and at least one sub-entity. Each central entity is associated with one or more sub-entities.

Herein, any one of the at least one central entity is configured to at least one of:
process a task requested by a non-target AI/ML entity in the management device;
process a task requested by other central entity deployed in the management device;
process a task requested by a sub-entity deployed in the management device;
forward a task triggered or responded by a target AI/ML entity deployed in a device other than the management device to one or more sub-entities corresponding to the target AI/ML entity; or
forward one or more tasks triggered or responded by one or more sub-entities to a target AI/ML entity deployed in a device other than the management device corresponding to the one or more sub-entities.

Alternatively, in any one embodiment of the present disclosure, the sub-entity may also be referred to as at least one of the following: a cross-node AI/ML coordination entity sub-entity, a coordination sub-entity, an AI/ML sub-entity, an AI/ML coordination sub-entity, a cross-node AI/ML coordination sub-entity, a cross-node sub-entity, a cross-node AI/ML sub-entity, a cross-node coordination sub-entity, and the like.

In some embodiments, the any one central entity is configured to at least one of the following:
forward a task transmitted by an intra-node AI/ML entity deployed in the device other than the management device to one or more sub-entities in the management device associated with the intra-node AI/ML entity that transmits the task;
forward a task transmitted by a cross-node AI/ML entity deployed in the device other than the management device to one or more sub-entities in the management device associated with the cross-node AI/ML entity that transmits the task;
forward a task transmitted by an intra-node AI/ML entity deployed in the device other than the management device to one or more sub-entities in the management device associated with a type of the task; or
orward a task transmitted by a cross-node AI/ML entity deployed in the device other than the management device to one or more sub-entities in the management device associated with a type of the task.

Alternatively, in any one embodiment of the present disclosure, the tasks to be processed by different central entities may be the same or different. Alternatively, in any one embodiment of the present disclosure, the tasks to be processed by different sub-entities may be the same or different.

Alternatively, the task to be processed by each central entity or each sub-entity may be preconfigured or configured by an AI/ML entity or a device other than itself.

Alternatively, the correspondence relationship between the intra-node AI/ML entity that transmits the task and the sub-entity may be pre-stored in the management device. Moreover, the management device may determine, based on the correspondence relationship, one or more sub-entities associated with the intra-AI/ML entity that transmits the task. Alternatively, the management device may determine, based on an identification of the intra-node AI/ML entity that transmits the task, one or more sub-entities associated with the intra-node AI/ML entity that transmits the task. For example, based on the identification of the intra-node AI/ML entity that transmits the task, the management device may determine the one or more sub-entities associated with the intra-node AI/ML entity that transmits the task by employing a load balancing algorithm.

Alternatively, in any one embodiment of the present disclosure, the one or more sub-entities associated with the type of the task may include one or more sub-entities associated with the type of the transmitted task. Alternatively, one sub-entity may process the task(s) of one task type, and/or process tasks of multiple task types. Alternatively, in any one embodiment of the present disclosure, the difference in the task types may include at least one of the following: a difference in AI/ML models associated with the tasks, a difference in data management tasks, a difference in storage management tasks, a difference in computing power management tasks, a difference in model management tasks, or the like.

In some embodiments, the central entity deployed in the management device and the target AI/ML entity deployed in the device other than the management device directly communicate through an interface protocol, and/or, the central entity deployed in the management device and the target AI/ML entity deployed in the device other than the management device indirectly communicate through a cross-node AI/ML entity deployed in the device other than the management device.

In some embodiments, any two central entities deployed in the management device directly communicate with each other through an interface protocol.

In some embodiments, any two central entities deployed in the management device indirectly communicate with each other through a specific entity.

In some embodiments, a part of the central entities deployed in the management device directly communicate with each other through an interface protocol, and another part of the central entities deployed in the management device indirectly communicate with each other through a specific entity. Exemplarily, one central entity deployed in the management device may directly communicate with other central device deployed in the management device, and/or, indirectly communicate with other central device deployed in the management device through a specific entity. For example, the management device may include a central entity 1, a central entity 2 and a central entity 3. The central entity 1 and the central entity 2 may directly communicate with each other through the interface protocol, and the central entity 1 and the central entity 3 may indirectly communicate with each other through the specific entity. For another example, the management device may include a central entity 1, a central entity 2, a central entity 3 and a central entity 4. The central entity 1 and the central entity 2 may directly communicate with each other through the interface protocol, and the central entity 3 and the central entity 4 may indirectly communicate with each other through the specific entity.

Alternatively, in any one embodiment of the present disclosure, the specific entity may also be referred to as a task coordination central entity, a task coordination entity, a coordination entity, a coordination central entity, or the like.

Alternatively, in any one embodiment of the present disclosure, the any two central entities indirectly communicate with each other through the specific entity, which may include that the any two central entities indirectly communicate with each other through one or more specific entities.

In some embodiments, the communication connection between any one intra-node AI/ML entity deployed in the management device and one or more cross-node AI/ML entities deployed in the management device exists; or, the communication connection between any one intra-node AI/ML entity deployed in the management device and one or more cross-node AI/ML entities deployed in the management device does not exist. For example, the communication connection between any one intra-node AI/ML entity deployed in the management device and each cross-node AI/ML entity deployed in the management device exists; or, the communication connection between any one intra-node AI/ML entity deployed in the management device and each cross-node AI/ML entity deployed in the management device does not exist. For another example, the communication connection between any one intra-node AI/ML entity deployed in the management device and a part of the cross-node AI/ML entities deployed in the management device exists, but the communication connection between any one intra-node AI/ML entity deployed in the management device and another part of the cross-node AI/ML entities deployed in the management device does not exist.

In some embodiments, the communication connection between any one intra-node AI/ML entity deployed in the management device and one or more central entities deployed in the management device exists; or, the communication connection between any one intra-node AI/ML entity deployed in the management device and one or more central entities deployed in the management device does not exist. For example, the communication connection between any one intra-node AI/ML entity deployed in the management device and each central entity deployed in the management device exists; or, the communication connection between any one intra-node AI/ML entity deployed in the management device and each central entity deployed in the management device does not exist. For another example, the communication connection between any one intra-node AI/ML entity deployed in the management device and a part of central entities deployed in the management device exists, but the communication connection between any one intra-node AI/ML entity deployed in the management device and another part of the central entities deployed in the management device does not exist.

In some embodiments, the communication connection between any one intra-node AI/ML entity deployed in the management device and one or more sub-entities deployed in the management device exists; or, the communication connection between any one intra-node AI/ML entity deployed in the management device and one or more sub-entities deployed in the management device does not exist. For example, the communication connection between any one intra-node AI/ML entity deployed in the management device and each sub-entity deployed in the management device exists; or, the communication connection between any one intra-node AI/ML entity deployed in the management device and each sub-entity deployed in the management device does not exist. For another example, the communication connection between any one intra-node AI/ML entity deployed in the management device and a part of sub-entities deployed in the management device exists, but the communication connection between any one intra-node AI/ML entity deployed in the management device and another part of the sub-entities deployed in the management device does not exist.

In some embodiments, the communication connection between any one cross-node AI/ML entity deployed in the management device and one or more central entities deployed in the management device exists; or, the communication connection between any one cross-node AI/ML entity deployed in the management device and one or more central entities deployed in the management device does not exist. For example, the communication connection between any one cross-node AI/ML entity deployed in the management device and each central entity deployed in the management device exists; or, the communication connection between any one cross-node AI/ML entity deployed in the management device and each central entity deployed in the management device does not exist. For another example, the communication connection between any one cross-node AI/ML entity deployed in the management device and a part of central entities deployed in the management device exists, but the communication connection between any one cross-node AI/ML entity deployed in the management device and another part of the central entities deployed in the management device does not exist.

In some embodiments, the communication connection between any one cross-node AI/ML entity deployed in the management device and one or more sub-entities deployed in the management device exists; or, the communication connection between any one intra-node AI/ML entity deployed in the management device and one or more cross-node AI/ML entities deployed in the management device does not exist. For example, the communication connection between any one cross-node AI/ML entity deployed in the management device and each sub-entity deployed in the management device exists; or, the communication connection between any one cross-node AI/ML entity deployed in the management device and each sub-entity deployed in the management device does not exist. For another example, the communication connection between any one cross-node AI/ML entity deployed in the management device and a part of sub-entities deployed in the management device exists, but the communication connection between any one cross-node AI/ML entity deployed in the management device and another part of the sub-entities deployed in the management device does not exist.

Alternatively, in any one embodiment of the present disclosure, any two AI/ML entities that are communicatively connected may directly communicate with each other through an interface protocol. In one embodiment of the present disclosure, any two AI/ML entities that are not communicatively connected may not communicate with each other, or may indirectly communicate with each other through other AI/ML entities.

In one embodiment of the present disclosure, the any two AI/ML entities may include any two of the following: one or more intra-node AI/ML entities, one or more cross-node AI/ML entities, one or more central entities, one or more sub-entities, or one or more specific entities. The any two AI/ML entities may be of the same type, or may be of different types.

In some embodiments, the intra-node AI/ML entity, the cross-node AI/ML entity, the central entity, the sub-entity or the specific entity deployed in the management device may include at least one of the following: a data management unit, a storage management unit, a computing power management unit, a model management unit, or a task management unit.

The data management unit is configured to perform at least one of the following operations: data collection, data storage, data modification, data update, data deletion, data replication, or data forwarding.

The storage management unit is configured to perform at least one of the following operations: remaining storage size indication, storage reservation, storage allocation, storage sharing, storage recovery, or storage formatting.

The computing power management unit is configured to perform at least one of the following operations: remaining computing power indication, computing power reservation, computing power allocation, computing power sharing, or computing power recovery.

The model management unit is configured to perform at least one of the following operations: model training, model verification, model testing, model deployment, model replication, model forwarding, model inference, model monitoring, model update, model activation, model deactivation, model deletion, or model switching.

The task management unit is configured to perform at least one of the following operations: task generation, task acceptance, task rejection, task splitting, task allocation, task monitoring, task update, or task deletion.

Alternatively, in any one embodiment of the present disclosure, the model management unit may also be referred to as a model lifecycle management unit.

In some embodiments, the intra-node AI/ML entity deployed in the management device may be configured to at least one of the following:
transmit a task to the first designated AI/ML entity, allocate a task to the first designated AI/ML entity, or forward a task to the first designated AI/ML entity;
receive and process a task transmitted by the first designated AI/ML entity, a task allocated by the first designated AI/ML entity, or a task forwarded by the first designated AI/ML entity; or
forward a task transmitted by the first designated AI/ML entity, a task allocated by the first designated AI/ML entity, or a task forwarded by the first designated AI/ML entity.

Herein, the first designated AI/ML entity may include at least one of the following: other intra-node AI/ML entity deployed in the management device, a cross-node AI/ML entity deployed in the management device, a central entity deployed in the management device, a sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

In some embodiments, the cross-node AI/ML entity deployed in the management device may be configured to at least one of the following:
transmit a task to the second designated AI/ML entity, allocate a task to the second designated AI/ML entity, or forward a task to the second designated AI/ML entity;
receive and process a task transmitted by the second designated AI/ML entity, a task allocated by the second designated AI/ML entity, or a task forwarded by the second designated AI/ML entity; or
forward a task transmitted by the second designated AI/ML entity, a task allocated by the second designated AI/ML entity, or a task forwarded by the second designated AI/ML entity.

Herein, the second designated AI/ML entity may include at least one of the following: an intra-node AI/ML entity deployed in the management device, other cross-node AI/ML entity deployed in the management device, a central entity deployed in the management device, a sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

In some embodiments, the central entity deployed in the management device may be configured to at least one of the following:
transmit a task to the third designated AI/ML entity, allocate a task to the third designated AI/ML entity, or forward a task to the third designated AI/ML entity;
receive and process a task transmitted by the third designated AI/ML entity, a task allocated by the third designated AI/ML entity, or a task forwarded by the third designated AI/ML entity; or
forward a task transmitted by the third designated AI/ML entity, a task allocated by the third designated AI/ML entity, or a task forwarded by the third designated AI/ML entity.

Herein, the third designated AI/ML entity may include at least one of the following: an intra-node AI/ML entity deployed in the management device, a cross-node AI/ML entity deployed in the management device, other central entity deployed in the management device, a sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

In some embodiments, the sub-entity deployed in the management device may be configured to at least one of the following:
transmit a task to the fourth designated AI/ML entity, allocate a task to the fourth designated AI/ML entity, or forward a task to the fourth designated AI/ML entity;
receive and process a task transmitted by the fourth designated AI/ML entity, a task allocated by the fourth designated AI/ML entity, or a task forwarded by the fourth designated AI/ML entity; or
forward a task transmitted by the fourth designated AI/ML entity, a task allocated by the fourth designated AI/ML entity, or a task forwarded by the fourth designated AI/ML entity.

Herein, the fourth designated AI/ML entity may include at least one of the following: an intra-node AI/ML entity deployed in the management device, a cross-node AI/ML entity deployed in the management device, a central entity deployed in the management device, other sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

In some embodiments, the specific entity deployed in the management device may be configured to at least one of the following:
transmit a task to a central entity deployed in the management device, allocate a task to a central entity deployed in the management device, or forward a task to a central entity deployed in the management device;
receive and process a task transmitted by a central entity deployed in the management device, a task allocated by a central entity deployed in the management device, or a task forwarded by a central entity deployed in the management device; or
forward a task transmitted by a central entity deployed in the management device, a task allocated by a central entity deployed in the management device, or a task forwarded by a central entity deployed in the management device.

In any one embodiment of the present disclosure, the task may include at least one of the following: a data management task, a storage management task, a computing power management task, or a model management task.

The data management task may include at least one of the following: data collection, data storage, data modification, data update, data deletion, data replication, or data forwarding.

The storage management task includes at least one of the following: remaining storage size indication, storage reservation, storage allocation, storage sharing, storage recovery, or storage formatting.

The computing power management task includes at least one of the following: remaining computing power indication, computing power reservation, computing power allocation, computing power sharing, or computing power recovery.

The model management task includes at least one of the following: model training, model verification, model testing, model deployment, model replication, model forwarding, model inference, model monitoring, model update, model activation, model deactivation, model deletion, or model switching.

In some embodiments, a target AI/ML entity that is newly joined or newly activated in the management device may transmit an initialization message to at least one deployed AI/ML entity.

The initialization message includes at least one piece of the following information of the target AI/ML entity that is newly joined or newly activated: communication address information, identification information, supported function range information, or deployment location information.

The at least one deployed AI/ML entity may include: one or more target AI/ML entities that have been deployed in the management device, and/or one or more target AI/ML entities that have been deployed in a device other than the management device.

Alternatively, in any one embodiment of the present disclosure, the target AI/ML entity that newly added or newly activated may transmit an initialization message to at least one deployed AI/ML entity in a direct communication manner, or may transmit an initialization message to at least one deployed AI/ML entity in an indirect communication manner.

Alternatively, in any one embodiment of the present disclosure, the initialization message may also be referred to as an initialization protocol message.

Alternatively, the target AI/ML entity that is newly joined or newly activated in the management device may be preconfigured with the communication address information and/or the identification information of the at least one deployed AI/ML entity. As such, the target AI/ML entity that is newly joined or newly activated in the management device may transmit the initialization message to the at least one deployed AI/ML entity.

Alternatively, in any one embodiment of the present disclosure, the supported function range information may indicate at least one of the following: one or more tasks that can be performed by the target AI/ML entity that is newly joined or newly activated.

In one embodiment of the present disclosure, the deployment location information may include at least one of the following: physical location information, a location identification, an identification of node at which the target AI/ML entity that is newly joined or newly activated is located, or an identification of an AI/ML entity connected to the target AI/ML entity that is newly joined or newly activated.

In some embodiments, any one deployed AI/ML entity may transmit a first response message or a second response message to the target AI/ML entity that is newly joined or newly activated.

The first response message is used to indicate acceptance of the target AI/ML entity that is newly joined or newly activated. The second response message is used to indicate rejection of the target AI/ML entity that is newly joined or newly activated.

Alternatively, in any one embodiment of the present disclosure, the deployed AI/ML entity may transmit the first response message or the second response message to the target AI/ML entity that is newly joined or newly activated, thereby indicating to the target AI/ML entity that is newly joined or newly activated whether to accept the target AI/ML entity that is newly joined or newly activated.

Alternatively, in any one embodiment of the present disclosure, the first response message may include one or more bits. The acceptance of the target AI/ML entity that is newly joined or newly activated is indicated by a value of the one or more bits. The second response message may include one or more bits. The rejection of the target AI/ML entity that is newly joined or newly activated is indicated by a value of the one or more bits.

In some embodiments, the first response message may include at least one piece of following information of the any one deployed AI/ML entity: communication address information, identification information, supported function range information, or deployment location information. The second response message may include rejection reason information and/or rejection duration information.

Alternatively, in any one embodiment of the present disclosure, the first response message may include at least one piece of the following: communication address information, identification information, supported function range information, or deployment location information. It is represented that the first response message may be used to indicate the acceptance of the target AI/ML entity that is newly joined or newly activated. The second response message may include rejection reason information and/or rejection duration information. It is represented that the second response message may be used to indicate the rejection of the target AI/ML entity that is newly joined or newly activated.

Alternatively, the rejection reason information may include at least one of the following: a function requirement of the target AI/ML entity being not met, or a connection capability of the target AI/ML entity reaching an upper limit.

Alternatively, the rejection duration information may indicate a duration during which the initialization message is not allowed to be retransmitted. Alternatively, in a case that the target AI/ML entity that is newly joined or newly activated obtains the rejection duration information, the initialization message may be retransmitted to the deployed AI/ML entity that transmits the second response message at the end of the rejection duration information.

In some embodiments, any one target AI/ML entity deployed in the management device may transmit a first notification message to at least one fifth designated AI/ML entity. The first notification message is used to indicate the any one target AI/ML entity to perform a deactivation operation or a deletion operation of the any one target AI/ML entity.

In a case that the any one target AI/ML entity receives an acknowledgement message transmitted by each fifth designated AI/ML entity, the any one target AI/ML entity may perform the deactivation operation or the deletion operation of the any one target AI/ML entity.

Herein, the fifth designated AI/ML entity may include: other target AI/ML entity deployed in the management device that has a communication connection with the any one target AI/ML entity, and/or a target AI/ML entity deployed in a device other than the management device that has a communication connection with the any one target AI/ML entity.

In such case, the deactivation operation or the deletion operation of the any one target AI/ML entity is actively initiated by the any one target AI/ML entity deployed in the management device, thereby realizing the deactivation or deletion of the any one target AI/ML entity.

Alternatively, in a case that any one or more fifth designated AI/ML entities of the at least one fifth designated AI/ML entity transmit, to the any one target AI/ML entity, at least one of the following: a rejection message, a denial message, a non-acknowledgement message, or a rejection reason, the any one target AI/ML entity may not perform the deactivation operation or the deletion operation thereof.

In some embodiments, the any one target AI/ML entity deployed in the management device may receive a second notification message transmitted by the fifth designated AI/ML entity. The second notification message is used to indicate the deactivation or deletion of the any one target AI/ML entity.

The any one target AI/ML entity may perform, based on the second notification message, a deactivation operation or a deletion operation of the any one target AI/ML entity.

The fifth designated AI/ML entity may include: other target AI/ML entity deployed in the management device that has a communication connection with the any one target AI/ML entity, and/or a target AI/ML entity deployed in a device other than the management device that has a communication connection with the any one target AI/ML entity.

In such case, the deactivation or deletion of the any one target AI/ML entity may be passively implemented by the any one target AI/ML entity deployed in the management device.

Alternatively, when receiving the second notification message, the any one target AI/ML entity deployed in the management device may determine whether the any one target AI/ML entity is performing a task and/or whether there is a task to be performed on the any one target AI/ML entity. When both are no, the any one target AI/ML entity may perform, based on the second notification message, the deactivation operation or the deletion operation thereof.

In some embodiments, the management device may be enabled to transmit capability information to a communication node deployed in a device other than the management device. Or, the management device may be enabled to receive capability information transmitted by a communication node deployed in a device other than the management device.

Herein, the capability information may indicate at least one of the following:
whether to support to deploy an intra-node AI/ML entity;
whether to support to deploy a cross-node AI/ML entity;
a maximum number of intra-node AI/ML entities that are supported;
a maximum number of cross-node AI/ML entities that are supported;
a maximum number of sub-entities that are supported;
a target unit and/or a protocol layer entity of an intra-node AI/ML entity that is able to be deployed in the communication node;
a target unit and/or a protocol layer entity of an intra-node AI/ML entity that is unable to be deployed in the communication node;
a communication node and/or a management device in which at least one of an intra-node AI/ML entity or a cross-node AI/ML entity is able to be deployed simultaneously; or
a communication node and/or a management device in which at least one of an intra-node AI/ML entity or a cross-node AI/ML entity is unable to be deployed simultaneously.

Herein, the communication node deployed in the device other than the management device may include at least one of the following: a communication node in a core network device, a communication node in an access network device, a target unit in an access network device, a protocol layer entity in an access network device, a terminal device, or a protocol layer entity in a terminal device.

Alternatively, in any one embodiment of the present disclosure, unless otherwise specified, the communication node may be the node in the core network device or the node in the access network device, and the specific communication node may be determined with reference to the semantics of the context.

The structure of the core network device will be described below.

FIG. 3 is a schematic structural diagram of a core network device according to an embodiment of the present disclosure. As illustrated in FIG. 3, the core network device includes at least one target AI/ML entity. Each target AI/ML entity is configured to perform an AI/ML related task corresponding to the core network device.

Alternatively, the core network device or one or more communication nodes in the core network device may communicate with a management device. Alternatively, the core network device or the one or more communication nodes in the core network device may communicate with an access network device. Alternatively, the core network device or the one or more communication nodes in the core network device may communicate with a terminal device through the access network device.

For example, the communication node in the core network device and/or the target AI/ML entity in the core network device may communicate with a management device or a target AI/ML entity in the management device. Alternatively, the communication node in the core network device and/or the target AI/ML entity in the core network device may communicate with a communication node in the access network device and/or a target AI/ML entity in the access network device. Alternatively, the communication node in the core network device and/or the target AI/ML entity in the core network device may communicate with the terminal device and/or a target AI/ML entity in the terminal device through the communication with the communication node in the access network device and/or the target AI/ML entity in the access network device.

Alternatively, in any one embodiment of the present disclosure, the AI/ML related task corresponding to the core network device may include at least one of the following: a task generated by a communication node in the core network device, a task requested by a target AI/ML entity deployed in a device other than the core network device, or a task interacted with a target AI/ML entity deployed in a device other than the core network device.

For example, each target AI/ML entity in the core network device may be configured to at least one of the following: transmit data for AI/ML and/or a AI/ML model to a target AI/ML entity deployed in a device other than the core network device; receive the data for AI/ML and/or the AI/ML model transmitted by a target AI/ML entity deployed in the device other than the core network device; generate the data for AI/ML and/or the AI/ML model; or train, reason or monitor the AI/ML model according to the data for AI/ML.

In some embodiments, the target AI/ML entity deployed in the core network device may include an intra-node AI/ML entity, and the core network device may further include at least one communication node.

One or more intra-node AI/ML entities may be deployed in each communication node.

Each intra-node AI/ML entity may be configured to perform an AI/ML related task corresponding to the communication node.

Alternatively, in any embodiment of the present disclosure, for one communication node, a non-target AI/ML entity of the communication node may generate a task, and may further transmit the task to the target AI/ML entity of the communication node, so that the target AI/ML entity of the communication node can process the task.

Alternatively, the tasks to be processed by different intra-node AI/ML entities may be the same, different or partially the same. Alternatively, the tasks to be processed by different intra-node AI/ML entities in the same communication node may be the same, different or partially the same.

Alternatively, an intra-node AI/ML entity in a communication node A is configured to at least perform an AI/ML related task of the communication node A, and an intra-node AI/ML entity in a communication node B is configured to at least perform an AI/ML related task of the communication node B.

In some embodiments, the target AI/ML entity deployed in the core network device may include a cross-node AI/ML entity, and the core network device may further include at least one communication node.

Each cross-node AI/ML entity may have a communication connection with one or more communication nodes.

Each cross-node AI/ML entity may be configured to perform an AI/ML related task corresponding to the one or more communication nodes.

Alternatively, in any one embodiment of the present disclosure, for one communication node, the communication node may generate a task, and may further transmit the task to the cross-node AI/ML entity corresponding to the communication node, so that the cross-node AI/ML entity corresponding to the communication node can process the task.

Alternatively, in any one embodiment of the present disclosure, the tasks to be processed by different cross-node AI/ML entities may be the same, different or partially the same. In an embodiment, the communication nodes communicatively connected with different cross-node AI/ML entities may be the same, different or partially the same. For example, a cross-node AI/ML entity A is communicatively connected with a communication node A and a communication node B, respectively; and a cross-node AI/ML entity B is communicatively connected with the communication node A and the communication node B, respectively. For another example, the cross-node AI/ML entity A is communicatively connected with the communication node A and the communication node B, respectively; and the cross-node AI/ML entity B is communicatively connected with the communication node A and a communication node C, respectively. For yet another example, the cross-node AI/ML entity A is communicatively connected to the communication node A and the communication node B, respectively; and the cross-node AI/ML entity B is communicatively connected to the communication node C and a communication node D, respectively.

Alternatively, each cross-node AI/ML entity may be configured to perform an AI/ML related task corresponding to the communication node that has a communication connection with the each cross-node AI/ML entity.

In some embodiments, the core network device may further include at least one communication node. The at least one target AI/ML entity may include at least one intra-node AI/ML entity and at least one cross-node AI/ML entity.

One or more intra-node AI/ML entities may be included in any one communication node. Each intra-node AI/ML entity may be configured to perform the AI/ML related task corresponding to the communication node.

The communication connection between each cross-node AI/ML entity and one or more intra-node AI/ML entities exists. Each cross-node AI/ML entity may be configured to perform the AI/ML related task(s) corresponding to the one or more communication nodes.

Alternatively, each intra-node AI/ML entity may be configured to perform a AI/ML related task of the communication node corresponding to the intra-node AI/ML entity, and/or each intra-node AI/ML entity may be configured to perform the task transmitted by the cross-node AI/ML entity.

In some embodiments, the intra-node AI/ML entities deployed in any two communication nodes in the core network device may directly communicate with each other through an interface protocol.

In some embodiments, the intra-node AI/ML entities deployed in any two communication nodes in the core network device may indirectly communicate with each other through one or more cross-node AI/ML entities.

In some embodiments, the intra-node AI/ML entities deployed in a part of the communication nodes in the core network device may directly communicate with each other through an interface protocol, and the intra-node AI/ML entities deployed in another part of the communication nodes may indirectly communicate with each other through one or more cross-node AI/ML entities. For example, an intra-node AI/ML entity in a communication node A and an intra-node AI/ML entity in a communication node B may directly communicate with each other through the interface protocol. Additionally, the intra-node AI/ML entity in the communication node A and an intra-node AI/ML entity in a communication node C may indirectly communicate with each other through the one or more cross-node AI/ML entities.

Alternatively, for the core network device, in a case that multiple intra-node AI/ML entities are deployed in one communication node, any two intra-node AI/ML entities from the multiple intra-node AI/ML entities may directly communicate with each other through the interface protocol. Alternatively, in a case that the intra-node AI/ML entities are respectively deployed in different communication nodes, the intra-node AI/ML entities belonging to different communication nodes may directly communicate with each other through the interface protocol, or may indirectly communicate with each other through the one or more cross-node AI/ML entities.

In some embodiments, any two cross-node AI/ML entities in the core network device may directly communicate with each other through an interface protocol.

In some embodiments, the core network device may include at least one central entity, and any two cross-node AI/ML entities deployed in the core network device may indirectly communicate with each other through one or more central entities.

In some embodiments, the core network device may include at least one central entity. A part of the cross-node AI/ML entities in the core network device may directly communicate with each other through an interface protocol, and another part of the cross-node AI/ML entities may indirectly communicate with each other through one or more central entities. Exemplarily, a cross-node AI/ML entity A and a cross-node AI/ML entity B may directly communicate through the interface protocol, and the cross-node AI/ML entity A and a cross-node AI/ML entity C may indirectly communicate through the one or more central entities.

In some embodiments, a cross-node AI/ML entity deployed in the core network device and a target AI/ML entity deployed in a device other than the core network device may directly communicate through an interface protocol.

In some embodiments, a cross-node AI/ML entity deployed in the core network device and a target AI/ML entity deployed in a device other than the core network device may indirectly communicate through a cross-node AI/ML entity deployed in the device other than the core network device.

In some embodiments, an intra-node AI/ML entity deployed in the core network device and a target AI/ML entity deployed in a device other than the core network device may directly communicate through an interface protocol.

In some embodiments, an intra-node AI/ML entity deployed in the core network device and a target AI/ML entity deployed in a device other than the core network device may indirectly communicate through a cross-node AI/ML entity deployed in the core network device and/or a cross-node AI/ML entity deployed in the device other than the core network device.

Alternatively, in any one embodiment of the present disclosure, the device other than the core network device may include at least one of the following: a management device, an access network device, or a terminal device.

Alternatively, in any one embodiment of the present disclosure, the target AI entity deployed in the device other than the core network device may include at least one of the following: an intra-node AI entity, a cross-node AI entity, a central entity, a sub-entity, or a specific entity.

In some embodiments, each cross-node AI/ML entity or each intra-node AI/ML entity may be configured to process at least one of the following:
a task requested by at least one communication node comprised in the core network device;
a task generated by the cross-node AI/ML entity or the intra-node AI/ML entity;
a task requested by other cross-node AI/ML entity deployed in the core network device;
a task requested by other intra-node AI/ML entity deployed in the core network device; or
a task requested by a target AI/ML entity deployed in a device other than the core network device.

In some embodiments, the at least one target AI/ML entity may include at least one central entity and at least one sub-entity. Each central entity may be associated with one or more sub-entities.

Herein, any one central entity may be configured to at least one of the following:
process a task requested by at least one communication node included in the core network device;
process a task requested by other central entity deployed in the core network device;
process a task requested by a sub-entity deployed in the core network device;
forward a task triggered or responded by an intra-node AI/ML entity or a cross-node AI/ML entity deployed in the core network device to one or more sub-entities deployed in the core network device, or to a target AI/ML entity deployed in a device other than the core network device; or
forward a task triggered or responded by one or more sub-entities deployed in the core network device or a target AI/ML entity deployed in a device other than the core network device to an intra-node AI/ML entity or a cross-node AI/ML entity deployed in the core network device.

In some embodiments, the any one central entity may be configured to at least one of the following:
forward the task triggered or responded by the intra-node AI/ML entity deployed in the core network device to one or more sub-entities in the core network device associated with the intra-node AI/ML entity that triggers or responds to the task;
forward the task triggered or responded by the cross-node AI/ML entity deployed in the core network device to one or more sub-entities in the core network device associated with the cross-node AI/ML entity that triggers or responds the task;
forward the task triggered or responded by the intra-node AI/ML entity deployed in the core network device to one or more sub-entities in the core network device associated with a type of the task;
forward a task triggered or responded by a cross-node AI/ML entity deployed in the core network device to one or more sub-entities in the core network device associated with a type of the task;
forward a task transmitted by an intra-node AI/ML entity deployed in a device other than the core network device to one or more sub-entities in the core network device associated with the intra-node AI/ML entity that transmits the task;
forward a task transmitted by a cross-node AI/ML entity deployed in a device other than the core network device to one or more sub-entities in the core network device associated with the cross-node AI/ML entity that transmits the task;
forward a task transmitted by an intra-node AI/ML entity deployed in a device other than the core network device to one or more sub-entities in the core network device associated with a type of the task; or
forward a task transmitted by a cross-node AI/ML entity deployed in a device other than the core network device to one or more sub-entities in the core network device associated with a type of the task.

Alternatively, the correspondence relationship between the intra-AI/ML entity that triggers or responds to the task and the sub-entity may be pre-stored in the core network device. Moreover, the core network device may determine, based on the correspondence relationship, one or more sub-entities associated with the intra-node AI/ML entity that triggers or responds to the task. Alternatively, the core network device may determine, based on an identification of the intra-node AI/ML entity that triggers or responds the task, one or more sub-entities associated with the intra-node AI/ML entity that triggers or responds the task. For example, based on the identification of the intra-AI/ML entity that triggers or responds the task, the core network device may determine the one or more sub-entities associated with the intra-node AI/ML entity that triggers or responds the task by employing a load balancing algorithm.

Alternatively, in any one embodiment of the present disclosure, the one or more sub-entities associated with the type of the task may include one or more sub-entities associated with the type of the task that is triggered or responded. Alternatively, one sub-entity may process the task(s) of one task type, and/or process tasks of multiple task types. In an embodiment, the difference in the task types may include at least one of the following: a difference in AI/ML models associated with the tasks, a difference in data management tasks, a difference in storage management tasks, a difference in computing power management tasks, a difference in model management tasks, or the like.

In some embodiments, the central entity deployed in the core network device and the target AI/ML entity deployed in the device other than the core network device may directly communicate through an interface protocol, and/or, the central entity deployed in the core network device and the target AI/ML entity deployed in the device other than the core network device may indirectly communicate through a cross-node AI/ML entity deployed in the device other than the core network device.

In some embodiments, any two central entities deployed in the core network device may directly communicate with each other through an interface protocol.

In some embodiments, any two central entities deployed in the core network device may indirectly communicate with each other through a specific entity.

In some embodiments, a part of the central entities deployed in the core network device may directly communicate with each other through the interface protocol, and another part of the central entities deployed in the core network device may indirectly communicate with each other through the specific entity. Exemplarily, one central entity deployed in the core network device may directly communicate with other central device deployed in the core network device, and/or, may indirectly communicate with other central device deployed in the management device through the specific entity. For example, the core network device may include a central entity 1, a central entity 2 and a central entity 3. The central entity 1 and the central entity 2 may directly communicate with each other through the interface protocol, and the central entity 1 and the central entity 3 may indirectly communicate with each other through the specific entity. For another example, the core network device may include a central entity 1, a central entity 2, a central entity 3 and a central entity 4. The central entity 1 and the central entity 2 may directly communicate with each other through the interface protocol, and the central entity 3 and the central entity 4 may indirectly communicate with each other through the specific entity.

Alternatively, the communication connection between any one intra-node AI/ML entity deployed in the core network device and one or more cross-node AI/ML entities deployed in the core network device exists; or, the communication connection between any one intra-node AI/ML entity deployed in the core network device and one or more cross-node AI/ML entities deployed in the core network device does not exist. Alternatively, the communication connection between any one intra-node AI/ML entity deployed in the core network device and one or more central entities deployed in the core network device exists; or, the communication connection between any one intra-node AI/ML entity deployed in the core network device and one or more central entities deployed in the core network device does not exist. Alternatively, the communication connection between any one intra-node AI/ML entity deployed in the core network device and one or more sub-entities deployed in the core network device exists; or, the communication connection between any one intra-node AI/ML entity deployed in the core network device and one or more sub-entities deployed in the core network device does not exist.

Alternatively, the communication connection between any one cross-node AI/ML entity deployed in the core network device and one or more central entities deployed in the core network device exists; or, the communication connection between any one cross-node AI/ML entity deployed in the core network device and one or more central entities deployed in the core network device does not exist. Alternatively, the communication connection between any one cross-node AI/ML entity deployed in the core network device and one or more sub-entities deployed in the core network device exists; or, the communication connection between any one cross-node AI/ML entity deployed in the core network device and one or more sub-entities deployed in the core network device does not exist.

In some embodiments, the intra-node AI/ML entity, the cross-node AI/ML entity, the central entity, the sub-entity or the specific entity deployed in the core network device may include at least one of the following: a data management unit, a storage management unit, a computing power management unit, a model management unit, or a task management unit.

The data management unit may be configured to perform at least one of the following operations: data collection, data storage, data modification, data update, data deletion, data replication, or data forwarding.

The storage management unit may be configured to perform at least one of the following operations: remaining storage size indication, storage reservation, storage allocation, storage sharing, storage recovery, or storage formatting.

The computing power management unit may be configured to perform at least one of the following operations: remaining computing power indication, computing power reservation, computing power allocation, computing power sharing, or computing power recovery.

The model management unit may be configured to perform at least one of the following operations: model training, model verification, model testing, model deployment, model replication, model forwarding, model inference, model monitoring, model update, model activation, model deactivation, model deletion, or model switching.

The task management unit may be configured to perform at least one of the following operations: task generation, task acceptance, task rejection, task splitting, task allocation, task monitoring, task update, or task deletion.

In some embodiments, the intra-node AI/ML entity deployed in the core network device may be configured to at least one of the following:
transmit a task to the sixth designated AI/ML entity, allocate a task to the sixth designated AI/ML entity, or forward a task to the sixth designated AI/ML entity;
receive and process a task transmitted by the sixth designated AI/ML entity, a task allocated by the sixth designated AI/ML entity, or a task forwarded by the sixth designated AI/ML entity; or
forward a task transmitted by the sixth designated AI/ML entity, a task allocated by the sixth designated AI/ML entity, or a task forwarded by the sixth designated AI/ML entity.

Herein, the sixth designated AI/ML entity may include at least one of the following: other intra-node AI/ML entity deployed in the core network device, a cross-node AI/ML entity deployed in the core network device, a central entity deployed in the core network device, a sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

In some embodiments, the cross-node AI/ML entity deployed in the core network device may be configured to at least one of the following:
transmit a task to the seventh designated AI/ML entity, allocate a task to the seventh designated AI/ML entity, or forward a task to the seventh designated AI/ML entity;
receive and process a task transmitted by the seventh designated AI/ML entity, a task allocated by the seventh designated AI/ML entity, or a task forwarded by the seventh designated AI/ML entity; or
forward a task transmitted by the seventh designated AI/ML entity, a task allocated by the seventh designated AI/ML entity, or a task forwarded by the seventh designated AI/ML entity.

Herein, the seventh designated AI/ML entity may include at least one of the following: an intra-node AI/ML entity deployed in the core network device, other cross-node AI/ML entity deployed in the core network device, a central entity deployed in the core network device, a sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

In some embodiments, the central entity deployed in the core network device may be configured to at least one of the following:
transmit a task to the eighth designated AI/ML entity, allocate a task to the eighth designated AI/ML entity, or forward a task to the eighth designated AI/ML entity;
receive and process a task transmitted by the eighth designated AI/ML entity, a task allocated by the eighth designated AI/ML entity, or a task forwarded by the eighth designated AI/ML entity; or
forward a task transmitted by the eighth designated AI/ML entity, a task allocated by the eighth designated AI/ML entity, or a task forwarded by the eighth designated AI/ML entity.

Herein, the eighth designated AI/ML entity may include at least one of the following: an intra-node AI/ML entity deployed in the core network device, a cross-node AI/ML entity deployed in the core network device, other central entity deployed in the core network device, a sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

In some embodiments, the sub-entity deployed in the core network device may be configured to at least one of the following:
transmit a task to the ninth designated AI/ML entity, allocate a task to the ninth designated AI/ML entity, or forward a task to the ninth designated AI/ML entity;
receive and process a task transmitted by the ninth designated AI/ML entity, a task allocated by the ninth designated AI/ML entity, or a task forwarded by the ninth designated AI/ML entity; or
forward a task transmitted by the ninth designated AI/ML entity, a task allocated by the ninth designated AI/ML entity, or a task forwarded by the ninth designated AI/ML entity.

Herein, the ninth designated AI/ML entity may include at least one of the following: an intra-node AI/ML entity deployed in the core network device, a cross-node AI/ML entity deployed in the core network device, a central entity deployed in the core network device, other sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

In some embodiments, the specific entity deployed in the core network device may be configured to at least one of the following:
transmit a task to a central entity deployed in the core network device, allocate a task to a central entity deployed in the core network device, or forward a task to a central entity deployed in the core network device;
receive and process a task transmitted by a central entity deployed in the core network device, a task allocated by a central entity deployed in the core network device, or a task forwarded by a central entity deployed in the core network device; or
forward a task transmitted by a central entity deployed in the core network device, a task allocated by a central entity deployed in the core network device, or a task forwarded by a central entity deployed in the core network device.

In some embodiments, the task may include at least one of the following: a data management task, a storage management task, a computing power management task, or a model management task.

The data management task may include at least one of the following: data collection, data storage, data modification, data update, data deletion, data replication, or data forwarding.

The storage management task may include at least one of the following: remaining storage size indication, storage reservation, storage allocation, storage sharing, storage recovery, or storage formatting.

The computing power management task may include at least one of the following: remaining computing power indication, computing power reservation, computing power allocation, computing power sharing, or computing power recovery.

The model management task may include at least one of the following: model training, model verification, model testing, model deployment, model replication, model forwarding, model inference, model monitoring, model update, model activation, model deactivation, model deletion, or model switching.

In some embodiments, a target AI/ML entity that is newly joined or newly activated in the core network device may transmit an initialization message to at least one deployed AI/ML entity.

Herein, the initialization message may include at least one piece of the following information of the target AI/ML entity that is newly joined or newly activated: communication address information, identification information, supported function range information, or deployment location information.

The at least one deployed AI/ML entity may include: one or more target AI/ML entities that have been deployed in the core network device, and/or one or more target AI/ML entities that have been deployed in a device other than the core network device.

Alternatively, the target AI/ML entity that is newly joined or newly activated in the core network device may be preconfigured with the communication address information and/or the identification information of the at least one deployed AI/ML entity. As such, the target AI/ML entity that is newly joined or newly activated in the core network device may transmit the initialization message to the at least one deployed AI/ML entity.

In some embodiments, any one deployed AI/ML entity may transmit a first response message or a second response message to the target AI/ML entity that is newly joined or newly activated.

The first response message is used to indicate acceptance of the target AI/ML entity that is newly joined or newly activated. The second response message is used to indicate rejection of the target AI/ML entity that is newly joined or newly activated.

In some embodiments, the first response message may include at least one piece of following information of the any one deployed AI/ML entity: communication address information, identification information, supported function range information, or deployment location information.

The second response message may include rejection reason information and/or rejection duration information.

In some embodiments, any one target AI/ML entity deployed in the core network device may transmit a first notification message to at least one tenth designated AI/ML entity. The first notification message is used to indicate the any one target AI/ML entity to perform a deactivation operation or a deletion operation of the any one target AI/ML entity.

In a case that the any one target AI/ML entity receives an acknowledgement message transmitted by each tenth designated AI/ML entity, the any one target AI/ML entity may perform the deactivation operation or the deletion operation of the any one target AI/ML entity.

Herein, the tenth designated AI/ML entity includes: other target AI/ML entity deployed in the core network device that has a communication connection with the any one target AI/ML entity, and/or a target AI/ML entity deployed in a device other than the core network device that has a communication connection with the any one target AI/ML entity.

In such case, the deactivation operation or the deletion operation of the any one target AI/ML entity is actively initiated by the any one target AI/ML entity deployed in the core network device, thereby realizing the deactivation or deletion of the any one target AI/ML entity.

Alternatively, in a case that any one or more tenth designated AI/ML entities of the at least one tenth designated AI/ML entity transmit, to the any one target AI/ML entity, at least one of the following: a rejection message, a denial message, a non-acknowledgement message, or a rejection reason, the any one target AI/ML entity may not perform the deactivation operation or the deletion operation thereof.

In some embodiments, the any one target AI/ML entity deployed in the core network device may receive a second notification message transmitted by the tenth designated AI/ML entity. The second notification message is used to indicate the deactivation or deletion of the any one target AI/ML entity.

The any one target AI/ML entity may perform, based on the second notification message, a deactivation operation or a deletion operation of the any one target AI/ML entity.

The tenth designated AI/ML entity may include: other target AI/ML entity deployed in the core network device that has a communication connection with the any one target AI/ML entity, and/or a target AI/ML entity deployed in a device other than the core network device that has a communication connection with the any one target AI/ML entity.

In such case, the deactivation or deletion of the any one target AI/ML entity may be passively implemented by the any one target AI/ML entity deployed in the core network device.

Alternatively, when receiving the second notification message, the any one target AI/ML entity deployed in the core network device may determine whether the any one target AI/ML entity is performing a task and/or whether there is a task to be performed on the any one target AI/ML entity. When both are no, the any one target AI/ML entity may perform, based on the second notification message, the deactivation operation or the deletion operation thereof.

Alternatively, the core network device may transmit first indication information to the terminal device. The first indication information may be used to at least one of the following:
indicate the terminal device to newly deploy at least one intra-node AI/ML entity; indicate the terminal device to delete at least one intra-node AI/ML entity; indicate the terminal device to activate at least one intra-node AI/ML entity; indicate the terminal device to deactivate at least one intra-node AI/ML entity; or indicate the terminal device to modify at least one intra-node AI/ML entity.

Alternatively, the core network device may receive second indication information transmitted by the terminal device. The second indication information may be used to at least one of the following:
indicate at least one intra-node AI/ML entity that is expected to be added by the terminal device; indicate at least one intra-node AI/ML entity that is expected to be deleted by the terminal device; indicate at least one intra-node AI/ML entity that is expected to be activated by the terminal device; indicate at least one intra-node AI/ML entity that is expected to be deactivated by the terminal device; indicate at least one intra-node AI/ML entity that has been added by the terminal device; indicate at least one intra-node AI/ML entity that has been deleted by the terminal device; indicate at least one intra-node AI/ML entity that has been activated by the terminal device; indicate at least one intra-node AI/ML entity that has been deactivated by the terminal device; or indicate at least one intra-node AI/ML entity that has been modified by the terminal device.

In some embodiments, the communication node deployed in the core network device may be enabled to transmit capability information to other communication node deployed in the core network device. Or, the communication node deployed in the core network device may be enabled to transmit capability information to a communication node deployed in a device other than the core network device. Or, the communication node deployed in the core network device may be enabled to receive capability information transmitted by a communication node deployed in a device other than the core network device;

Herein, the capability information may indicate at least one of the following:
whether to support to deploy an intra-node AI/ML entity;
whether to support to deploy a cross-node AI/ML entity;
a maximum number of intra-node AI/ML entities that are supported;
a maximum number of cross-node AI/ML entities that are supported;
a maximum number of sub-entities that are supported;
a target unit and/or a protocol layer entity of an intra-node AI/ML entity that is able to be deployed in the communication node;
a target unit and/or a protocol layer entity of an intra-node AI/ML entity that is unable to be deployed in the communication node;
a communication node in which at least one of an intra-node AI/ML entity or a cross-node AI/ML entity is able to be deployed simultaneously; or
a communication node in which at least one of an intra-node AI/ML entity or a cross-node AI/ML entity is unable to be deployed simultaneously.

Herein, the communication node deployed in the device other than the core network device may include at least one of the following: a management device, a communication node in an access network device, a target unit in an access network device, a protocol layer entity in an access network device, a terminal device, or a protocol layer entity in a terminal device.

The communication node deployed in the core network device may include at least one of the following: an AMF network element, a SMF network element, a UPF network element, a UDM network element, a PCF network element, a LMF network element, or an AUSF network element.

The structure of the access network device will be described below.

FIG. 4 is a schematic structural diagram of an access network device according to an embodiment of the present disclosure. As illustrated in FIG. 4, the access network device includes at least one target AI/ML entity. Each target AI/ML entity is configured to perform an AI/ML related task corresponding to the access network device.

Alternatively, the access network device or one or more communication nodes in the access network device may communicate with a management device. Alternatively, the access network device or the one or more communication nodes in the access network device may communicate with a core network device. Alternatively, the access network device or the one or more communication nodes in the access network device may communicate with a terminal device.

Alternatively, the communication node in the access network device and/or the target AI/ML entity in the access network device may communicate with the management device or a target AI/ML entity in the management device. Alternatively, the communication node in the access network device and/or the target AI/ML entity in the access network device may communicate with a communication node in the core network device and/or a target AI/ML entity in the core network device. Alternatively, the communication node in the access network device and/or the target AI/ML entity in the access network device may communicate with the terminal device and/or a target AI/ML entity in the terminal device.

Alternatively, in any one embodiment of the present disclosure, the AI/ML related task corresponding to the access network device may include at least one of the following: a task generated by a communication node in the access network device, a task requested by a target AI/ML entity deployed in a device other than the access network device, or a task interacted with a target AI/ML entity deployed in a device other than the access network device.

For example, each target AI/ML entity in the access network device may be configured to at least one of the following: transmit data for AI/ML and/or a AI/ML model to a target AI/ML entity deployed in a device other than the access network device; receive the data for AI/ML and/or the AI/ML model transmitted by a target AI/ML entity deployed in the device other than the access network device; generate the data for AI/ML and/or the AI/ML model; or train, reason or monitor the AI/ML model according to the data for AI/ML.

In some embodiments, the target AI/ML entity may include an intra-node AI/ML entity, and the access network device may further include at least one communication node.

The intra-node AI/ML entity may include at least one of the following: an access network AI/ML entity, a target unit AI/ML entity, or a protocol layer AI/ML entity. The target unit may include at least one of the following: a CU, a DU, a CU-CP, or a CU-UP.

One or more access network AI/ML entities may be deployed in the access network device, and/or one or more target unit AI/ML entities may be deployed in the target unit in the communication node, and/or one or more protocol layer AI/ML entities may be deployed in the protocol layer entity in the communication node.

Herein, the access network AI/ML entity may be configured to perform an AI/ML related task corresponding to the access network device, the target unit AI/ML entity may be configured to perform an AI/ML related task corresponding to the target unit, and the protocol layer AI/ML entity may be configured to perform an AI/ML related task corresponding to the protocol layer.

Alternatively, taking the communication node in the access network device being a base station as an example, the base station may include a target unit and a non-target unit. The access network AI/ML entity may be deployed in the non-target unit. The target unit may include a protocol layer entity and a non-protocol layer entity. The target unit AI/ML entity may be deployed in the non-protocol layer entity, and the protocol layer AI/ML entity may be deployed in the protocol layer entity.

Alternatively, for any one base station (also referred to as a base station device), the base station may be deployed with at least one of the following: one or more access network AI/ML entities, one or more target unit AI/ML entities, or one or more protocol layer AI/ML entities.

Alternatively, the access network AI/ML entity may be configured to perform an AI/ML related task corresponding to the base station to which the access network AI/ML entity belongs. Alternatively, the target unit AI/ML entity may be configured to perform an AI/ML related task corresponding to the target unit to which the target unit AI/ML entity belongs. Alternatively, the protocol layer AI/ML entity may be configured to perform an AI/ML related task corresponding to the protocol layer entity to which the protocol layer AI/ML entity belongs.

Alternatively, the tasks to be processed by the access network AI/ML entities in different base stations may be the same, different, or partially the same. Alternatively, the tasks to be processed by the target unit AI/ML entities in different base stations may be the same, different or partially the same. Alternatively, the tasks to be processed by protocol layer AI/ML entities in different base stations may be the same, different, or partially the same.

Alternatively, the tasks to be processed by any two of one or more access network AI/ML entities, one or more target unit AI/ML entities and one or more protocol layer AI/ML entities may be the same, different or partially the same.

In some embodiments, the target AI/ML entity may include a cross-node AI/ML entity, and the access network device may further include at least one communication node.

Each cross-node AI/ML entity may have a communication connection with one or more communication nodes.

Each cross-node AI/ML entity may be configured to perform an AI/ML related task corresponding to the one or more communication nodes.

In some embodiments, the access network device may further include at least one communication node. The at least one target AI/ML entity may include at least one intra-node AI/ML entity and at least one cross-node AI/ML entity.

The intra-node AI/ML entity may include at least one of the following: an access network AI/ML entity, a target unit AI/ML entity, or a protocol layer AI/ML entity. The target unit may include at least one of the following: a CU, a DU, a CU-CP, or a CU-UP.

One or more access network AI/ML entities may be deployed in the access network device, and/or one or more target unit AI/ML entities may be deployed in the target unit in the access network device, and/or one or more protocol layer AI/ML entities may be deployed in the protocol layer entity in the access network device.

Herein, the access network AI/ML entity may be configured to perform an AI/ML related task corresponding to the access network device, the target unit AI/ML entity may be configured to perform an AI/ML related task corresponding to the target unit, and the protocol layer AI/ML entity may be configured to perform an AI/ML related task corresponding to the protocol layer.

The communication connection between each cross-node AI/ML entity and one or more intra-node AI/ML entities exists. Each cross-node AI/ML entity may be configured to perform the AI/ML related task(s) corresponding to the one or more communication nodes.

Alternatively, the access network AI/ML entity and/or the target unit AI/ML entity and/or the protocol layer AI/ML entity may also be configured to perform the task transmitted by the cross-node AI/ML entity.

In some embodiments, the intra-node AI/ML entities deployed in any two communication nodes in the access network device may directly communicate with each other through an interface protocol.

In some embodiments, the intra-node AI/ML entities deployed in any two communication nodes in the access network device may indirectly communicate with each other through one or more cross-node AI/ML entities.

In some embodiments, the intra-node AI/ML entities deployed in a part of the communication nodes in the access network device may directly communicate with each other, and the intra-node AI/ML entities deployed in another part of the communication nodes may indirectly communicate with each other through one or more cross-node AI/ML entities. For example, an intra-node AI/ML entity in a communication node A and an intra-node AI/ML entity in a communication node B may directly communicate with each other through the interface protocol. Additionally, the intra-node AI/ML entity in the communication node A and an intra-node AI/ML entity in a communication node C may indirectly communicate with each other through the one or more cross-node AI/ML entities.

Alternatively, for the access network device, in a case that multiple intra-node AI/ML entities are deployed in one communication node, any two intra-node AI/ML entities from the multiple intra-node AI/ML entities may directly communicate with each other through the interface protocol, or may indirectly communicate through other intra-node AI/ML entity. Alternatively, in a case that the intra-node AI/ML entities are respectively deployed in different communication nodes, the intra-node AI/ML entities belonging to different communication nodes may directly communicate with each other through the interface protocol, or may indirectly communicate with each other through the one or more cross-node AI/ML entities.

In some embodiments, any two target unit AI/ML entities deployed in the access network device may communicate with each other through one or more access network AI/ML entities. Exemplarily, the any two target unit AI/ML entities in a base station may communicate with each other through one or more access network AI/ML entities. Alternatively, in other embodiments, the any two target unit AI/ML entities in the base station may directly communicate with each other through the interface protocol.

In some embodiments, any two protocol layer AI/ML entities may communicate with each other through one or more access network AI/ML entities. Alternatively, in other embodiments, the any two protocol layer AI/ML entities in the base station may directly communicate with each other through then interface protocol.

In some embodiments, the any two protocol layer AI/ML entities may communicate with each other through one or more target unit AI/ML entities. Alternatively, in other embodiments, the any two protocol layer AI/ML entities in the base station may directly communicate with each other through the interface protocol.

Exemplarily, the any two protocol layer AI/ML entities in the base station may communicate with each other through one or more access network AI/ML entities, and/or may communicate with each other through one or more target unit AI/ML entities.

In some embodiments, any two cross-node AI/ML entities deployed in the access network device may directly communicate with each other through an interface protocol.

In some embodiments, the access network device may include at least one central entity. Any two cross-node AI/ML entities deployed in the access network device may indirectly communicate with each other through one or more central entities.

In some embodiments, the access network device may include at least one central entity. A part of the cross-node AI/ML entities deployed in the access network device may directly communicate with each other through the interface protocol, and another part of the cross-node AI/ML entities deployed in the access network device may indirectly communicate with each other through the one or more central entities. Exemplarily, a cross-node AI/ML entity A and a cross-node AI/ML entity B may directly communicate with each other through the interface protocol, and the cross-node AI/ML entity A and a cross-node AI/ML entity C may indirectly communicate with each other through the one or more central entities.

In some embodiments, a cross-node AI/ML entity in the access network device and a target AI/ML entity deployed in a device other than the access network device may directly communicate with each other through an interface protocol.

In some embodiments, a cross-node AI/ML entity deployed in the access network device and a target AI/ML entity deployed in a device other than the access network device may indirectly communicate with each other through a cross-node AI/ML entity deployed in the device other than the access network device.

In some embodiments, an intra-node AI/ML entity deployed in the access network device and a target AI/ML entity deployed in a device other than the access network device may directly communicate with each other through an interface protocol.

In some embodiments, an intra-node AI/ML entity deployed in the access network device and a target AI/ML entity deployed in a device other than the access network device may indirectly communicate with each other through a cross-node AI/ML entity deployed in the access network device and/or a cross-node AI/ML entity deployed in the device other than the access network device.

Alternatively, in any one embodiment of the present disclosure, the device other than the access network device may include at least one of the following: a management device, a core network device, or a terminal device.

Alternatively, in any one embodiment of the present disclosure, the target AI entity deployed in the device other than the access network device may include at least one of the following: an intra-node AI entity, a cross-node AI entity, a central entity, a sub-entity, or a specific entity.

In some embodiments, each cross-node AI/ML entity or each intra-node AI/ML entity may be configured to process at least one of the following:
a task requested by at least one communication node comprised in the access network device;
a task generated by the cross-node AI/ML entity or the intra-node AI/ML entity;
a task requested by other cross-node AI/ML entity deployed in the access network device;
a task requested by other intra-node AI/ML entity deployed in the access network device; or
a task requested by a target AI/ML entity deployed in a device other than the access network device.

In some embodiments, the at least one target AI/ML entity may include at least one central entity and at least one sub-entity. Each central entity may be associated with one or more sub-entities.

Herein, any one central entity may be configured to at least one of the following:
process a task requested by at least one communication node comprised in the access network device;
process a task requested by other central entities deployed in the access network device;
process a task requested by a sub-entity deployed in the access network device;
forward a task triggered or responded by an intra-node AI/ML entity or a cross-node AI/ML entity deployed in the access network device to one or more sub-entities deployed in the access network device or to a target AI/ML entity deployed in a device other than the access network device; or
forward a task triggered or responded by one or more sub-entities deployed in the access network device or a target AI/ML entity deployed in a device other than the access network device to an intra-node AI/ML entity or a cross-node AI/ML entity deployed in the access network device.

In some embodiments, the any one central entity may be configured to at least one of the following:
forward the task triggered or responded by the intra-node AI/ML entity deployed in the access network device to one or more sub-entities in the access network device associated with the intra-node AI/ML entity that triggers or responds to the task;
forward the task triggered or responded by the cross-node AI/ML entity deployed in the access network device to one or more sub-entities in the access network device associated with the cross-node AI/ML entity that triggers or responds the task;
forward the task triggered or responded by the intra-node AI/ML entity deployed in the access network device to one or more sub-entities in the access network device associated with a type of the task;
forward the task triggered or responded by the cross-node AI/ML entity deployed in the access network device to one or more sub-entities in the access network device associated with a type of the task;
forward a task transmitted by an intra-node AI/ML entity deployed in the device other than the access network device to one or more sub-entities in the access network device associated with the intra-node AI/ML entity that transmits the task;
forward a task transmitted by a cross-node AI/ML entity deployed in a device other than the access network device to one or more sub-entities in the access network device associated with the cross-node AI/ML entity that transmits the task;
forward a task transmitted by an intra-node AI/ML entity deployed in a device other than the access network device to one or more sub-entities in the access network device associated with a type of the task; or
forward a task transmitted by a cross-node AI/ML entity deployed in a device other than the access network device to one or more sub-entities in the access network device associated with a type of the task.

Alternatively, the correspondence relationship between the intra-node AI/ML entity that triggers or responds to the task and the sub-entity may be pre-stored in the access network device. Moreover, the access network device may determine, based on the correspondence relationship, one or more sub-entities associated with the intra-node AI/ML entity that triggers or responds to the task. Alternatively, the access network device may determine, based on an identification of the intra-node AI/ML entity that triggers or responds the task, one or more sub-entities associated with the intra-node AI/ML entity that triggers or responds the task. For example, based on the identification of the intra-node AI/ML entity that triggers or responds the task, the access network device may determine the one or more sub-entities associated with the intra-node AI/ML entity that triggers or responds the task by employing a load balancing algorithm.

In some embodiments, the central entity deployed in the access network device and the target AI/ML entity deployed in the device other than the access network device may directly communicate with each other through an interface protocol, and/or, the central entity deployed in the access network device and the target AI/ML entity deployed in the device other than the access network device may communicate with each other through a cross-node AI/ML entity deployed in the device other than the access network device.

In some embodiments, any two central entities deployed in the access network device may directly communicate with each other through an interface protocol.

In some embodiments, any two central entities deployed in the access network device may indirectly communicate with each other through a specific entity.

In some embodiments, a part of the central entities deployed in the access network device may directly communicate with each other through the interface protocol, and another part of the central entities deployed in the access network device may indirectly communicate with each other through the specific entity. Exemplarily, one central entity deployed in the access network device may directly communicate with other central device deployed in the access network device, and/or, may indirectly communicate with other central device deployed in the access network device through the specific entity. For example, the access network device may include a central entity 1, a central entity 2 and a central entity 3. The central entity 1 and the central entity 2 may directly communicate with each other through the interface protocol, and the central entity 1 and the central entity 3 may indirectly communicate with each other through the specific entity. For another example, the access network device may include a central entity 1, a central entity 2, a central entity 3 and a central entity 4. The central entity 1 and the central entity 2 may directly communicate with each other through the interface protocol, and the central entity 3 and the central entity 4 may indirectly communicate with each other through the specific entity.

Alternatively, the communication connection between any one intra-node AI/ML entity deployed in the access network device and one or more cross-node AI/ML entities deployed in the access network device exists; or, the communication connection between any one intra-node AI/ML entity deployed in the access network device and one or more cross-node AI/ML entities deployed in the access network device does not exist. Alternatively, the communication connection between any one intra-node AI/ML entity deployed in the access network device and one or more central entities deployed in the access network device exists; or, the communication connection between any one intra-node AI/ML entity deployed in the access network device and one or more central entities deployed in the access network device does not exist. Alternatively, the communication connection between any one intra-node AI/ML entity deployed in the access network device and one or more sub-entities deployed in the access network device exists; or, the a communication connection between any one intra-node AI/ML entity deployed in the access network device and one or more sub-entities deployed in the access network device does not exist.

Alternatively, the communication connection between any one cross-node AI/ML entity deployed in the access network device and one or more central entities deployed in the access network device exists; or, the communication connection between any one cross-node AI/ML entity deployed in the access network device and one or more central entities deployed in the access network device does not exist. Alternatively, the communication connection between any one cross-node AI/ML entity deployed in the access network device and one or more sub-entities deployed in the access network device exists; or, the communication connection between any one cross-node AI/ML entity deployed in the access network device and one or more sub-entities deployed in the access network device does not exist.

In some embodiments, the intra-node AI/ML entity, the cross-node AI/ML entity, the central entity, the sub-entity or the specific entity deployed in the access network device may include at least one of the following: a data management unit, a storage management unit, a computing power management unit, a model management unit, or a task management unit.

The data management unit is configured to perform at least one of the following operations: data collection, data storage, data modification, data update, data deletion, data replication, and or data forwarding.

The storage management unit is configured to perform at least one of the following operations: remaining storage size indication, storage reservation, storage allocation, storage sharing, storage recovery, or storage formatting.

The computing power management unit is configured to perform at least one of the following operations: remaining computing power indication, computing power reservation, computing power allocation, computing power sharing, or computing power recovery.

The model management unit is configured to perform at least one of the following operations: model training, model verification, model testing, model deployment, model replication, model forwarding, model inference, model monitoring, model update, model activation, model deactivation, model deletion, or model switching.

The task management unit is configured to perform at least one of the following operations: task generation, task acceptance, task rejection, task splitting, task allocation, task monitoring, task update, or task deletion.

In some embodiments, the intra-node AI/ML entity deployed in the access network device may be configured to at least one of the following:
transmit a task to the eleventh designated AI/ML entity, allocate a task to the eleventh designated AI/ML entity, or forward a task to the eleventh designated AI/ML entity;
receive and process a task transmitted by the eleventh designated AI/ML entity, a task allocated by the eleventh designated AI/ML entity, or a task forwarded by the eleventh designated AI/ML entity; or
forward a task transmitted by the eleventh designated AI/ML entity, a task allocated by the eleventh designated AI/ML entity, or a task forwarded by the eleventh designated AI/ML entity.

Herein, the eleventh designated AI/ML entity may include at least one of the following: other intra-node AI/ML entity deployed in the access network device, a cross-node AI/ML entity deployed in the access network device, a central entity deployed in the access network device, a sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

In some embodiments, the cross-node AI/ML entity deployed in the access network device may be configured to at least one of the following:
transmit a task to the twelfth designated AI/ML entity, allocate a task to the twelfth designated AI/ML entity, or forward a task to the twelfth designated AI/ML entity;
receive and process a task transmitted by the twelfth designated AI/ML entity, a task allocated by the twelfth designated AI/ML entity, or a task forwarded by the twelfth designated AI/ML entity; or
forward a task transmitted by the twelfth designated AI/ML entity, a task allocated by the twelfth designated AI/ML entity, or a task forwarded by the twelfth designated AI/ML entity.

Herein, the twelfth designated AI/ML entity may include at least one of the following: an intra-node AI/ML entity deployed in the access network device, other cross-node AI/ML entity deployed in the access network device, a central entity deployed in the access network device, a sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

In some embodiments, the central entity deployed in the access network device may be configured to at least one of the following:
transmit a task to the thirteenth designated AI/ML entity, allocate a task to the thirteenth designated AI/ML entity, or forward a task to the thirteenth designated AI/ML entity;
receive and process a task transmitted by the thirteenth designated AI/ML entity, a task allocated by the thirteenth designated AI/ML entity, or a task forwarded by the thirteenth designated AI/ML entity; or
forward a task transmitted by the thirteenth designated AI/ML entity, a task allocated by the thirteenth designated AI/ML entity, or a task forwarded by the thirteenth designated AI/ML entity.

Herein, the thirteenth designated AI/ML entity may include at least one of the following: an intra-node AI/ML entity deployed in the access network device, a cross-node AI/ML entity deployed in the access network device, other central entity deployed in the access network device, a sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

In some embodiments, the sub-entity deployed in the access network device may be configured to at least one of the following:
transmit a task to the fourteenth designated AI/ML entity, allocate a task to the fourteenth designated AI/ML entity, or forward a task to the fourteenth designated AI/ML entity;
receive and process a task transmitted by the fourteenth designated AI/ML entity, a task allocated by the fourteenth designated AI/ML entity, or a task forwarded by the fourteenth designated AI/ML entity; or
forward a task transmitted by the fourteenth designated AI/ML entity, a task allocated by the fourteenth designated AI/ML entity, or a task forwarded by the fourteenth designated AI/ML entity.

Herein, the fourteenth designated AI/ML entity may include at least one of the following: an intra-node AI/ML entity deployed in the access network device, a cross-node AI/ML entity deployed in the access network device, a central entity deployed in the access network device, other sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

In some embodiments, the specific entity deployed in the access network device may be configured to at least one of the following:
transmit a task to a central entity deployed in the access network device, allocate a task to a central entity deployed in the access network device, or forward a task to a central entity deployed in the access network device;
receive and process a task transmitted by a central entity deployed in the access network device, a task allocated by a central entity deployed in the access network device, or a task forwarded by a central entity deployed in the access network device; or
forward a task transmitted by a central entity deployed in the access network device, a task allocated by a central entity deployed in the access network device, or a task forwarded by a central entity deployed in the access network device.

In some embodiments, the task may include at least one of the following: a data management task, a storage management task, a computing power management task, or a model management task.

The data management task may include at least one of the following: data collection, data storage, data modification, data update, data deletion, data replication, or data forwarding.

The storage management task may include at least one of the following: remaining storage size indication, storage reservation, storage allocation, storage sharing, storage recovery, or storage formatting.

The computing power management task may include at least one of the following: remaining computing power indication, computing power reservation, computing power allocation, computing power sharing, or computing power recovery.

The model management task may include at least one of the following: model training, model verification, model testing, model deployment, model replication, model forwarding, model inference, model monitoring, model update, model activation, model deactivation, model deletion, or model switching.

In some embodiments, a target AI/ML entity that is newly joined or newly activated in the access network device may transmit an initialization message to at least one deployed AI/ML entity.

The initialization message includes at least one piece of the following information of the target AI/ML entity that is newly joined or newly activated: communication address information, identification information, supported function range information, or deployment location information.

The at least one deployed AI/ML entity may include: one or more target AI/ML entities that have been deployed in the access network device, and/or one or more target AI/ML entities that have been deployed in a device other than the access network device.

Alternatively, the target AI/ML entity that is newly joined or newly activated in the access network device may be preconfigured with the communication address information and/or the identification information of the at least one deployed AI/ML entity. As such, the target AI/ML entity that is newly joined or newly activated in the access network device may transmit the initialization message to the at least one deployed AI/ML entity.

In some embodiments, any one deployed AI/ML entity may transmit a first response message or a second response message to the target AI/ML entity that is newly joined or newly activated.

The first response message is used to indicate acceptance of the target AI/ML entity that is newly joined or newly activated. The second response message is used to indicate rejection of the target AI/ML entity that is newly joined or newly activated.

In some embodiments, the first response message may include at least one piece of following information of the any one deployed AI/ML entity: communication address information, identification information, supported function range information, or deployment location information.

The second response message may include rejection reason information and/or rejection duration information.

In some embodiments, any one target AI/ML entity deployed in the access network device may transmit a first notification message to at least one fifteenth designated AI/ML entity. The first notification message is used to indicate the any one target AI/ML entity to perform a deactivation operation or a deletion operation of the any one target AI/ML entity.

In a case that the any one target AI/ML entity may receive an acknowledgement message transmitted by each fifteenth designated AI/ML entity, the any one target AI/ML entity may perform the deactivation operation or the deletion operation of the any one target AI/ML entity.

Herein, the fifteenth designated AI/ML entity may include: other target AI/ML entity deployed in the access network device that has a communication connection with the any one target AI/ML entity, and/or a target AI/ML entity deployed in a device other than the access network device that has a communication connection with the any one target AI/ML entity.

In such case, the deactivation operation or the deletion operation of the any one target AI/ML entity is actively initiated by the any one target AI/ML entity deployed in the access network device, thereby realizing the deactivation or deletion of the any one target AI/ML entity.

Alternatively, in a case that any one or more fifteenth designated AI/ML entities of the at least one fifteenth designated AI/ML entities transmit, to the any one target AI/ML entity, at least one of the following: a rejection message, a denial message, a non-acknowledgement message, or a rejection reason, the any one target AI/ML entity may not perform the deactivation operation or the deletion operation thereof.

In some embodiments, the any one target AI/ML entity deployed in the access network device may receive a second notification message transmitted by the fifteenth designated AI/ML entity. The second notification message is used to indicate the deactivation or deletion of the any one target AI/ML entity.

The any one target AI/ML entity may perform, based on the second notification message, a deactivation operation or a deletion operation of the any one target AI/ML entity.

The fifteenth designated AI/ML entity may include: other target AI/ML entity deployed in the access network device that has a communication connection with the any one target AI/ML entity, and/or a target AI/ML entity deployed in a device other than the access network device that has a communication connection with the any one target AI/ML entity.

In such case, the deactivation or deletion of the any one target AI/ML entity may be passively implemented by the any one target AI/ML entity deployed in the access network device.

Alternatively, when receiving the second notification message, the any one target AI/ML entity deployed in the access network device may determine whether the any one target AI/ML entity is performing a task and/or whether there is a task to be performed on the any one target AI/ML entity. When both are no, the any one target AI/ML entity may perform, based on the second notification message, the deactivation operation or the deletion operation thereof.

Alternatively, the access network device may transmit first indication information to the terminal device. The first indication information may be used to at least one of the following:
indicate the terminal device to newly deploy at least one intra-node AI/ML entity; indicate the terminal device to delete at least one intra-node AI/ML entity; indicate the terminal device to activate at least one intra-node AI/ML entity; indicate the terminal device to deactivate at least one intra-node AI/ML entity; or indicate the terminal device to modify at least one intra-node AI/ML entity.

Alternatively, the access network device may receive second indication information transmitted by the terminal device. The second indication information may be used to at least one of the following:
indicate at least one intra-node AI/ML entity that is expected to be added by the terminal device; indicate at least one intra-node AI/ML entity that is expected to be deleted by the terminal device; indicate at least one intra-node AI/ML entity that is expected to be activated by the terminal device; indicate at least one intra-node AI/ML entity that is expected to be deactivated by the terminal device; indicate at least one intra-node AI/ML entity that has been added by the terminal device; indicate at least one intra-node AI/ML entity that has been deleted by the terminal device; indicate at least one intra-node AI/ML entity that has been activated by the terminal device; indicate at least one intra-node AI/ML entity that has been deactivated by the terminal device; or indicate at least one intra-node AI/ML entity that has been modified by the terminal device.

In some embodiments, the communication node deployed in the access network device may be enabled to transmit capability information to other communication node deployed in the access network device. Or, the communication node deployed in the access network device may be enabled to transmit capability information to a communication node deployed in a device other than the access network device. Or, the communication node deployed in the access network device may be enabled to receive capability information transmitted by a communication node deployed in a device other than the access network device.

Herein, the capability information may indicate at least one of the following: whether to support to deploy an intra-node AI/ML entity; whether to support to deploy a cross-node AI/ML entity; a maximum number of intra-node AI/ML entities that are supported; a maximum number of cross-node AI/ML entities that are supported; a maximum number of sub-entities that are supported; a target unit and/or a protocol layer entity of an intra-node AI/ML entity that is able to be deployed in the communication node; a target unit and/or a protocol layer entity of an intra-node AI/ML entity that is unable to be deployed in the communication node; a communication node in which an intra-node AI/ML entity and/or a cross-node AI/ML entity is/are able to be deployed simultaneously; or a communication node in which an intra-node AI/ML entity and/or a cross-node AI/ML entity is/are unable to be deployed simultaneously.

Herein, the communication node deployed in the device other than the access network device may include at least one of the following: a management device, a communication node in a core network device, a terminal device, or a protocol layer entity in a terminal device.

The communication node deployed in the access network device may include at least one of the following: a base station, a CU, a DU, a CU-CP, a CU-UP, or a protocol layer entity in the access network. The protocol layer entity in the access network may include at least one of the following: a NAS entity, a SDAP entity, a RRC entity, a PDCP entity, a RLC entity, a BAP entity, a MAC entity, or a PHY entity.

The structure of the terminal device will be described below.

FIG. 5 is a schematic structural diagram of a terminal device according to an embodiment of the present disclosure. As illustrated in FIG. 5, the terminal device includes at least one target AI/ML entity. Each target AI/ML entity is configured to perform an AI/ML related task corresponding to the terminal device.

Alternatively, the terminal device may communicate with an access network device. Alternatively, the terminal device may communicate with a core network device through the access network device. Alternatively, the terminal device and/or the target AI/ML entity in the terminal device may communicate with the access network device and/or a target AI/ML entity in the access network device. Alternatively, the terminal device and/or the target AI/ML entity in the terminal device may communicate with a core network device and/or a target AI/ML entity in the core network device through the access network device and/or the target AI/ML entity in the access network device.

Alternatively, in any one embodiment of the present disclosure, the AI/ML related task corresponding to the terminal device may include at least one of the following: a task generated by the terminal device, a task requested by a target AI/ML entity deployed in a device other than the terminal device, or a task interacted with a target AI/ML entity deployed in a device other than the terminal device. Alternatively, the terminal device may include a target AI/ML entity and a non-target AI/ML entity. The target AI/ML entity and the non-target AI/ML entity may communicate with each other. The task generated by the terminal device may be the task generated by the target AI/ML entity and/or the task generated by the non-target AI/ML entity.

For example, each target AI/ML entity in the terminal device may be configured to at least one of the following: transmit data for AI/ML and/or a AI/ML model to a target AI/ML entity deployed in a device other than the terminal device; receive the data for AI/ML and/or the AI/ML model transmitted by a target AI/ML entity deployed in the device other than the terminal device; generate the data for AI/ML and/or the AI/ML model; train, reason or monitor the AI/ML model according to the data for AI/ML.

In some embodiments, the target AI/ML entity may include an intra-node AI/ML entity, and the intra-node AI/ML entity may include at least one of the following: a terminal device AI/ML entity or a protocol layer AI/ML entity.

One or more terminal device AI/ML entities may be deployed in the terminal device, and/or, one or more protocol layer AI/ML entities may be deployed in the protocol layer entity included in the terminal device.

Herein, the terminal device AI/ML entity may be configured to perform an AI/ML related task corresponding to the terminal device, and the protocol layer AI/ML entity may be configured to perform an AI/ML related task corresponding to the protocol layer.

Alternatively, the terminal device may include a protocol layer entity and a non-protocol layer entity. The terminal device AI/ML entity may be deployed in the non-protocol layer entity, and the protocol layer AI/ML entity may be deployed in the protocol layer entity.

Alternatively, one terminal device may be deployed with at least one of the following: one or more terminal device AI/ML entities or one or more protocol layer AI/ML entities.

Alternatively, the terminal device AI/ML entity may be configured to perform the AI/ML related task corresponding to the terminal device. Alternatively, the protocol layer AI/ML entity is configured to perform the AI/ML related task corresponding to the protocol layer entity to which the protocol layer AI/ML entity belongs.

Alternatively, the tasks to be processed by different terminal device AI/ML entities in the terminal device may be the same, different, or partially the same. Alternatively, the tasks to be processed by different protocol layer AI/ML entities in the terminal device may be the same, different or partially the same. Alternatively, the tasks to be processed by any one terminal device AI/ML entity and any one protocol layer AI/ML entity in the terminal device may be the same, different or partially the same.

Alternatively, in any one embodiment of the present disclosure, the protocol layer entity in the terminal device may include at least one of the following: a NAS entity, a SDAP entity, a RRC entity, a PDCP entity, a RLC entity, a BAP entity, a MAC entity, or a PHY entity.

Alternatively, the terminal device AI/ML entity and/or the protocol layer AI/ML entity may be further configured to perform a task transmitted by a target AI/ML entity of a device other than the terminal device.

In some embodiments, any two protocol layer AI/ML entities deployed in the terminal device directly communicate with each other through an interface protocol, or may indirectly communicate with each other through one or more terminal device AI/ML entities.

In some embodiments, the terminal device AI/ML entity deployed in the terminal device and an access network AI/ML entity deployed in the access network device may directly communicate with each other through an air interface protocol. Or, the terminal device AI/ML entity deployed in the terminal device and a target unit AI/ML entity deployed in the access network device may directly communicate with each other through the air interface protocol.

In some embodiments, the protocol layer AI/ML entity deployed in the terminal device and a protocol layer AI/ML entity deployed in the access network device may directly communicate with each other through the air interface protocol. Or, the protocol layer AI/ML entity deployed in the terminal device and a protocol layer AI/ML entity deployed in the access network device may indirectly communicate with each other through at least one of the following: the terminal device AI/ML entity deployed in the terminal device, the access network AI/ML entity deployed in the access network device, or the target unit AI/ML entity deployed in the access network device.

In some embodiments, the terminal device AI/ML entity deployed in the terminal device and/or the protocol layer AI/ML entity deployed in the terminal device may indirectly communicate with an intra-node AI/ML entity and/or a cross-node AI/ML entity deployed in the core network device through the access network device.

In some embodiments, the intra-node AI/ML entity deployed in the terminal device may include at least one of the following: a data management unit, a storage management unit, a computing power management unit, a model management unit, or a task management unit.

The data management unit may be configured to perform at least one of the following operations: data collection, data storage, data modification, data update, data deletion, data replication, or data forwarding.

The storage management unit may be configured to perform at least one of the following operations: remaining storage size indication, storage reservation, storage allocation, storage sharing, storage recovery, or storage formatting.

The computing power management unit may be configured to perform at least one of the following operations: remaining computing power indication, computing power reservation, computing power allocation, computing power sharing, or computing power recovery.

The model management unit may be configured to perform at least one of the following operations: model training, model verification, model testing, model deployment, model replication, model forwarding, model inference, model monitoring, model update, model activation, model deactivation, model deletion, or model switching.

The task management unit may be configured to perform at least one of the following operations: task generation, task acceptance, task rejection, task splitting, task allocation, task monitoring, task update, or task deletion.

In some embodiments, the intra-node AI/ML entity deployed in the terminal device may be configured to at least one of the following:
transmit a task to the sixteenth designated AI/ML entity, allocate a task to the sixteenth designated AI/ML entity, or forward a task to the sixteenth designated AI/ML entity;
receive and process a task transmitted by the sixteenth designated AI/ML entity, a task allocated by the sixteenth designated AI/ML entity, or a task forwarded by the sixteenth designated AI/ML entity; or
forward a task transmitted by the sixteenth designated AI/ML entity, a task allocated by the sixteenth designated AI/ML entity, or the task forwarded by a sixteenth designated AI/ML entity.

Herein, the sixteenth designated AI/ML entity may include at least one of the following: an intra-node AI/ML entity deployed in the access network device, a cross-node AI/ML entity deployed in the access network device, a central entity deployed in the access network device, a sub-entity deployed in the access network device, an intra-node AI/ML entity deployed in a core network device, a cross-node AI/ML entity deployed in a core network device, an intra-node AI/ML entity deployed in the management device, or a cross-node AI/ML entity deployed in the management device.

In some embodiments, the task may include at least one of the following: a data management task, a storage management task, a computing power management task, or a model management task.

The data management task may include at least one of the following: data collection, data storage, data modification, data update, data deletion, data replication, or data forwarding.

The storage management task may include at least one of the following: remaining storage size indication, storage reservation, storage allocation, storage sharing, storage recovery, or storage formatting.

The computing power management task may include at least one of the following: remaining computing power indication, computing power reservation, computing power allocation, computing power sharing, or computing power recovery.

The model management task may include at least one of the following: model training, model verification, model testing, model deployment, model replication, model forwarding, model inference, model monitoring, model update, model activation, model deactivation, model deletion, or model switching.

In some embodiments, the terminal device may be configured to receive first indication information transmitted by the access network device or the core network device. The first indication information may be used to at least one of the following: indicate the terminal device to newly deploy at least one intra-node AI/ML entity; indicate the terminal device to delete at least one intra-node AI/ML entity; indicate the terminal device to activate at least one intra-node AI/ML entity; indicate the terminal device to deactivate at least one intra-node AI/ML entity; or indicate the terminal device to modify at least one intra-node AI/ML entity.

Alternatively, the first indication information may be further configured to indicate an identification of the intra-node AI/ML entity.

Alternatively, in some other embodiment, the terminal device may actively perform at least one of the following operations: newly deploying at least one intra-node AI/ML entity, deleting at least one intra-node AI/ML entity, activating at least one intra-node AI/ML entity, deactivating at least one intra-node AI/ML entity, or modifying at least one intra-node AI/ML entity. Alternatively, before actively performing one of the aforementioned operations, the terminal device may further transmit the first indication information to the access network device or the core network device.

In some embodiments, the terminal device may be further configured to transmit the second indication information to the access network device or the core network device. The second indication information may be configured to at least one of the following:
indicate at least one intra-node AI/ML entity that is expected to be added by the terminal device; indicate at least one intra-node AI/ML entity that is expected to be deleted by the terminal device; indicate at least one intra-node AI/ML entity that is expected to be activated by the terminal device; indicate at least one intra-node AI/ML entity that is expected to be deactivated by the terminal device; indicate at least one intra-node AI/ML entity that has been added by the terminal device; indicate at least one intra-node AI/ML entity that has been deleted by the terminal device; indicate at least one intra-node AI/ML entity that has been activated by the terminal device; indicate at least one intra-node AI/ML entity that has been deactivated by the terminal device; or indicate at least one intra-node AI/ML entity that has been modified by the terminal device.

In some embodiments, the target AI/ML entity deployed in the terminal device may be enabled to transmit capability information to other target AI/ML entity deployed in the terminal device. Or, the terminal device may be enabled to transmit capability information to a communication node deployed in a device other than the terminal device. Or, the terminal device may be enabled to receive capability information transmitted by a communication node deployed in a device other than the terminal device.

Herein, the capability information may indicate at least one of the following: whether to support to deploy an intra-node AI/ML entity; whether to support to deploy a cross-node AI/ML entity; a maximum number of intra-node AI/ML entities that are supported; a maximum number of cross-node AI/ML entities that are supported; a maximum number of sub-entities that are supported; a protocol layer entity of an intra-node AI/ML entity that is able to be deployed in the terminal device; a protocol layer entity of an intra-node AI/ML entity that is unable to be deployed in the terminal device; a target unit and/or a protocol layer entity of an intra-node AI/ML entity that is able to be deployed in the communication node; a target unit and/or a protocol layer entity of an intra-node AI/ML entity that is unable to be deployed in the communication node; a communication node in which an intra-node AI/ML entity and/or a cross-node AI/ML entity is/are able to be deployed simultaneously; or a communication node in which an intra-node AI/ML entity and/or a cross-node AI/ML entity is/are unable to be deployed simultaneously.

Herein, the communication node deployed in the device other than the terminal device may include at least one of the following: a management device, a communication node in a core network device, a communication node in an access network device, a target unit in an access network device, or a protocol layer entity in an access network device.

The communication node deployed in the terminal device may include at least one of the following: a terminal device or a protocol layer entity in the terminal device. The protocol layer entity in the terminal device may include at least one of the following: a NAS entity, a SDAP entity, a RRC entity, a PDCP entity, a RLC entity, a BAP entity, a MAC entity, or a PHY entity.

In the present disclosure, by deploying at least one target AI/ML entity in any one communication node in the communication system on demand, the endogenous integration of the AI/ML technology with any communication function can be achieved; which provides theoretical support for the implementation of an automated communication network with the AI/ML technology. On the one hand, the distributed deployment of the target AI/ML entities (such as the intra-node AI/ML entities) is favorable for realizing the timely resolution of communication technology problems based on the principle of proximity, and also avoids the issue of over-centralized collection of sensitive data to a certain extent. On the other hand, the local centralized deployment of the target AI/ML entities (such as the cross-node AI/ML entities) can effectively addresses the technical problems involving multiple communication nodes, and further implement cross-node collaboration for the AI/ML tasks. Furthermore, by formulating the unified AI/ML architecture and protocol interface (such as AI/ML task interaction between different devices), it is favorable for the global sharing of AI/ML data, and the efficiency of utilization and transmission of data can be greatly improved. Finally, the ubiquitous AI/ML deployment can conveniently enable any node in the communication system to establish the sharing connections on resources and/or data with devices other than the communication system (such as various Internet cloud servers and cloud platforms). Thus, the service scope of the operators can be broadened, and the longstanding limitation of the operators being confined to the role of mere data conduits can be transcended.

The at least part of beneficial effects of the aforementioned embodiments are further explained below by way of examples.

Example 1: a beam management AI/ML model is required to be trained by the physical layer of the access network device or the physical layer of the terminal device. The input of the beam management AI/ML model may include at least one of the following: a signal measurement result of at least one beam measured by the terminal device, a beam identification of at least one beam measured by the terminal device, a beam transmission configuration configured by the network device, a type or shape of an antenna configured by the network device, or location information of the terminal device. The output of the beam management AI/ML model may include at least one of the following: a conjectural signal measurement result of the at least one beam, or a conjectural beam identification of the at least one beam.

If the target AI/ML entities are deployed in the physical layer of the access network device and/or the physical layer of the terminal device, the beam management AI/ML model can be trained in the physical layer of the access network device and/or the physical layer of the terminal device. As such, the input data related to the model training can be collected and processed in a timely manner, and the sensitive data such as the terminal location information can be avoided from being collected or sensed by other irrelevant communication nodes, which can reflect the advantages of the distributed deployment of the target AI/ML entities.

Example 2: an access network load management AI/ML model is required to be trained by the core network device. The input of the access network load management AI/ML model may include: historical load information and/or time distribution information of a load of each access network connected to the core network. The output of the access network load management AI/ML model may include: a predicted historical load information and/or predicted time distribution information of the load of each access network connected to the core network in a forthcoming period of time.

If the target AI/ML entity is deployed in the core network device and the cross-node AI/ML entity is deployed in the access network device, the cross-node AI/ML entity deployed in the access network device may respectively collect the historical load information and the time distribution information of the load of each access network managed by the cross-node AI/ML entity, and further summarize the collected information to the core network device through an interface between the target AI/ML entity deployed in the core network device and the cross-node AI/ML entity deployed in the access network device. The core network device utilizes the summarized data to perform model training, thereby solving the cross-node communication problem by using the cross-node AI/ML entity.

Example 3: a mobility management AI/ML model is required to be trained by the access network device. The input of the mobility management AI/ML model may include at least one of the following: a historical movement trajectory of the terminal device, a current location of the terminal device, a load condition of other access network device, or a signal measurement result of a neighboring cell and/or a serving cell measured by the terminal device. The output of the mobility management AI/ML model may include switching target cells.

If the target AI/ML entity is deployed in the access network device, different access network devices can readily share the trained model or share the data required for the input of the model, thereby implementing the rapid sharing of the AI/ML data in the communication system.

Example 4: a home intelligent alarm system (for example, timely alarm when a human falls accidentally, etc.) is expected to be trained by an Internet company. The input of the home intelligent alarm system may include at least one of the following: a human historical behavior, domestic appliance layout information, or human gesture information. The output of the home intelligent alarm system may include: turning on or turning off of a domestic appliance device and/or an alarm in the event of an accident.

A lot of training data may not be easily collected by the Internet companies alone. If ubiquitous AI/ML entities are defined in the communication system, the AI/ML entities deployed in different communication nodes within the communication system can easily collect and share all kinds of data collected by the communication nodes. Since there are flexible connections and a unified architecture among the AI/ML entities in different communication nodes within the communication system, the Internet companies can easily obtain the AI/ML data collected by many communication nodes from the AI/ML entities deployed in the communication nodes through standard interfaces, and then train a domestic intelligent alarm system. In addition, the operators can gain additional revenue by sharing the collected AI/ML data, thereby expanding their business growth points.

Certainly, many functions can be optimized by various devices through the utilization of the AI/ML entities. The following are some typical examples.

The functions that can be optimized by the terminal device may include at least one of the following: Layer 1/Layer 3 measurement optimization, paging optimization, cell reselection optimization, beam management optimization, Channel State Information (CSI) feedback optimization, mobility optimization, or positioning optimization, etc.

The functions that can be optimized by the access network device may include at least one of the following: resource scheduling optimization, load balancing optimization, coverage optimization, mobility optimization, data retransmission strategy optimization, or network energy saving optimization, etc.

The functions that can be optimized by the core network device may include at least one of the following: paging optimization, mobility optimization, or load optimization, etc.

The functions that can be optimized by the management device may include at least one of the following: energy saving optimization, or resource management optimization, etc.

It should be noted that the above is merely a schematic example of the beneficial effects generated by the target AI/ML entity in the communication device provided by the present disclosure. Moreover, other beneficial effects can also be generated by the target AI/ML entity in the communication device provided by the present disclosure, which can be embodied in various aspects of the communication system, and will not be repeatedly described in the present disclosure.

It should be noted that any solution generated based on the communication device of the present disclosure should be within the scope of protection of the present disclosure.

A communication system according to an embodiment of the present disclosure will be described below from another aspect.

The communication system typically includes a terminal device, an access network device and a core network device. Alternatively, the communication system may further include an OAM device (i.e., corresponding to the aforementioned management device). The OAM device is typically used for the management and maintenance of the communication network. In order to use AI/ML tools to solve problems in the communication system throughout the process (including "solving problems beforehand", "solving problems during the process" or "solving problems afterwards"), a hybrid AI/ML entity deployment architecture is proposed in the present disclosure. The hybrid architecture refers to a special architecture that integrates the centralized and distributed architectures.

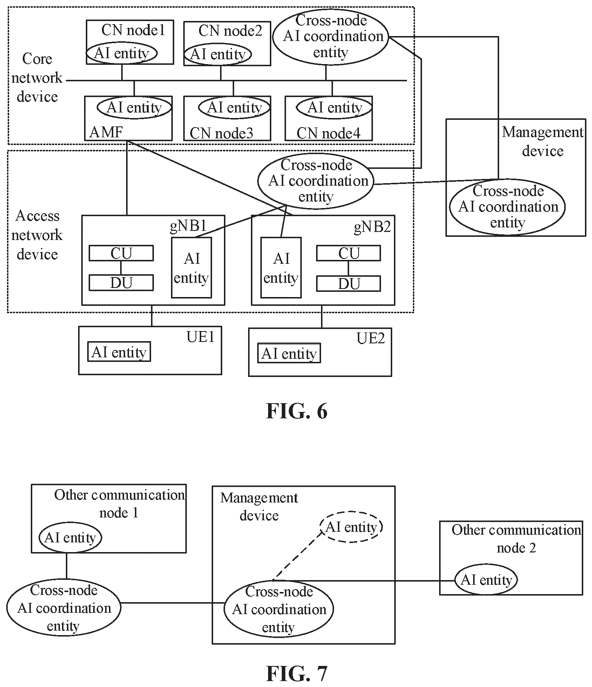

FIG. 6 is a schematic diagram of an architecture of a communication system according to an embodiment of the present disclosure. As illustrated in FIG. 6, the communication system includes a management device, a core network device, an access network device, and terminal devices.

A cross-node AI coordination entity (i.e., corresponding to the cross-node AI/ML entity above) may be included or deployed in the management device.

The core network device may include at least one communication node. As illustrated in FIG. 6, the at least one communication node in the core network device may include core network nodes from CN node1 to CN node4 as well as an AMF network element. An AI entity (corresponding to the intra-node AI/ML entity in the above embodiments) may be deployed in each of the devices among the core network nodes from the CN node1 to the CN node4 and the AMF network element. The cross-node AI coordination entity may be further included or deployed in the core network device.

The access network device may include at least one communication node. As illustrated in FIG. 6, the at least one communication node in the access network device may include a gNB1 and a gNB2. Each of the gNB1 and the gNB2 may include a CU and a DU, and may further include an AI entity (corresponding to the access network AI/ML entity in the above embodiments). The cross-node AI coordination entity may be further included or deployed in the access network device.

The communication system includes two terminal devices, which may be a terminal device 1 (UE1) and a terminal device 2 (UE2), respectively. An AI entity may be deployed in each of the terminal device 1 and the terminal device 2.

It should be noted that FIG. 6 only illustrates an exemplary implementation of an architecture of the communication system. In other embodiments, the communication system may also have other architectures. For example, in some embodiments, an AI entity may be included or deployed in the management device. Or, an AI entity may be included or deployed in the management device, and a cross-node AI coordination entity may not be included or deployed in the management device. For another example, the AI entity may not be deployed in at least one of the core network nodes from the CN node1 to the CN node4 or the AMF network element. For another example, the cross-node AI coordination entity may not be included or deployed in the core network device. For another example, an access network AI/ML entity may be not deployed in at least one of the gNB1 or the gNB2. For another example, a protocol layer AI/ML entity and/or a target unit AI/ML may be deployed in at least one of the gNB1 and the gNB2. For another example, the cross-node AI coordination entity may not be included or deployed in the access network device. For another example, another number of terminal devices may be included in the communication system. An AI entity may be included or deployed in at least part of the terminal devices in the communication system.

From an overall perspective, the overall architecture of the communication system including the AI/ML function has at least one of the following features.

Feature 1: at least one intra-node AI/ML function entity may be deployed (or included) in any one communication node. The communication node includes at least one of the following:
a management device, such as an OAM device;
a core network device, such as at least one of an AMF, a SMF, a UPF, a UDM, a PCF, or a LMF;
an access network device, such as at least one of a gNB, a CU, a DU, a CU-CP, a CU-UP, or a protocol layer entity in the access network (including at least one of a SDAP, a RRC, a PDCP, a RLC, a BAP, a MAC, or a PHY); or
a terminal device, such as a whole UE device and/or a protocol layer entity in the terminal device (including at least one of a NAS, a SDAP, a RRC, a PDCP, a RLC, a BAP, a MAC, or a PHY).

In any one embodiment of the present disclosure, it is allowed that the intra-node AI/ML function entity (i.e., corresponding to the intra-node AI/ML entity above) is deployed in a part of the communication nodes, and no intra-node AI/ML function entity is deployed in another part of communication nodes, which will not be limited by the present disclosure.

Feature 2: for the communication node in which the intra-node AI/ML function entity is deployed, the intra-node AI/ML function entity deployed in the communication node may also be associated with one or more cross-node AI/ML coordination entities. Here, the one or more cross-node AI/ML coordination entities may be deployed in the device, or may be deployed outside of the device (for example, deployed in the management device in FIG. 6); alternatively, the cross-node AI/ML coordination entity may further be deployed in the device (for example, deployed in the core network device in FIG. 6), or may be deployed outside of the communication node.

In any one embodiment of the present disclosure, it is allowed that the intra-node AI/ML function entity is deployed in a part of the communication nodes, but the intra-node AI/ML function entity does not associate and communicate with any cross-node AI/ML coordination entity, which will not be limited in the present disclosure.

Feature 3: task interaction between intra-node AI/ML function entities deployed in any two communication nodes may be implemented by the following manners.

Manner 1: the intra-node AI/ML function entities deployed in the any two communication nodes may directly communicate with each other.

Manner 2: the intra-node AI/ML function entities deployed in the any two communication nodes may indirectly communicate with each other through the cross-node AI/ML coordination entity.

Manner 3: the intra-node AI/ML function entities deployed in a part of the communication nodes may directly communicate with each other, and the intra-node AI/ML function entities deployed in another part of the communication nodes may indirectly communicate with each other through the cross-node AI/ML coordination entity.

In the first implementation manner, all of the tasks interacted between the intra-node AI/ML function entities deployed in the any two communication nodes are implemented by the manner 1. In such case, the intra-node AI/ML function entity deployed in each communication node may simultaneously combine the functions of the cross-node AI/ML coordination entity. That is, the function of the cross-node AI/ML coordination entity is a part of the functions included in the intra-node AI/ML function entity deployed in each communication node.

In the second implementation manner, all of the tasks interacted between the intra-node AI/ML function entities deployed in the any two communication nodes are implemented by the manner 2. In such case, the task interaction between the intra-node AI/ML function entities deployed in the any two communication nodes cannot be directly performed, but can be indirectly performed through the cross-node AI/ML coordination entity.

In the third implementation manner, a part of the tasks interacted between the intra-node AI/ML function entities deployed in the any two communication nodes is implemented by the manner 1, and the remaining part of the tasks interacted between the intra-node AI/ML function entities deployed in the any two communication nodes is implemented by the manner 2. The manner for the task interaction depends on the specific task type.

It should be noted that the communication system according to the present disclosure supports at least one of the aforementioned three implementation manners. Exemplarily, assuming that there are six communication nodes A, B, C, D, E, and F in the communication system, it is allowed that all of the tasks interacted between the intra-node AI/ML function entities deployed in the nodes A and B are implemented by the manner 1, all of the tasks interacted between the intra-node AI/ML function entities deployed in the nodes C and D are implemented by the manner 2, and all of the tasks interacted between the intra-node AI/ML function entities deployed in the nodes E and F are implemented by the manner 3. Of course, it is also allowed that all of the tasks interacted between the intra-node AI/ML function entities deployed in the nodes A and B are implemented by the manner 1, all of the tasks interacted between the intra-node AI/ML function entities deployed in the nodes A and C are implemented by the manner 2, and all of the tasks interacted between the intra-node AI/ML function entities deployed in the nodes A and D are implemented by the manner 3, which will not be limited in the present disclosure.

The communication connection structure of the intra-node AI/ML function entities and/or the associated cross-node AI/ML coordination entities deployed in each of the communication nodes is described below. For different communication nodes, the functions and communication connection structures of the deployed intra-node AI/ML function entities and/or the associated cross-node AI/ML coordination entities mentioned above may be different.

The management device is described below.

FIG. 7 is a schematic diagram of communication between a management device and other communication nodes according to an embodiment of the present disclosure. As illustrated in FIG. 7, the management device may include a cross-node AI/ML coordination entity. Alternatively, the management device may further include an AI entity that may be communicatively connected with the cross-node AI/ML coordination entity. The cross-node AI/ML coordination entity in the management device may indirectly communicate with an AI entity in the other communication node 1 through the cross-node AI/ML coordination entity, and the cross-node AI/ML coordination entity in the management device may directly communicate with the AI entity in the other communication node 2.

In some embodiments, the management device may deploy at least one cross-node AI/ML coordination entity. Each cross-node AI/ML coordination entity is configured to process a task interacted with an intra-node AI/ML function entity deployed in the other communication node, and/or process a task interacted with the cross-node AI/ML coordination entity associated with the other communication node.

Alternatively, the management device may further deploy at least one intra-node AI/ML function entity. The intra-node AI/ML function entity may be configured to process a task generated in the management device.

The cross-node AI/ML coordination entity deployed in the management device may directly communicate with an intra-node AI/ML function entity deployed in the other communication node, or may indirectly communicate with the intra-node AI/ML function entity deployed in the other communication node through another cross-node AI/ML coordination entity. The intra-node AI/ML function entity deployed in the management device may be an optional entity. The connection between the intra-node AI/ML function entity deployed in the management device and the cross-node AI/ML coordination entity deployed in the management device may exist, or the connection between the intra-node AI/ML function entity deployed in the management device and the cross-node AI/ML coordination entity deployed in the management device may not exist.

Alternatively, if at least two cross-node AI/ML coordination entities are deployed in the management device, the communication manner between any two cross-node AI/ML coordination entities may include the following two manners.

Manner 1: the any two cross-node AI/ML coordination entities may directly communicate with each other through an interface protocol.

Manner 2: the any two cross-node AI/ML coordination entities may indirectly communicate with each other through a cross-node AI/ML coordination entity central entity. That is, there is no direct communication interface between the any two cross-node AI/ML coordination entities, but the indirect communication is implemented by forwarding the task through the cross-node AI/ML coordination entity central entity.

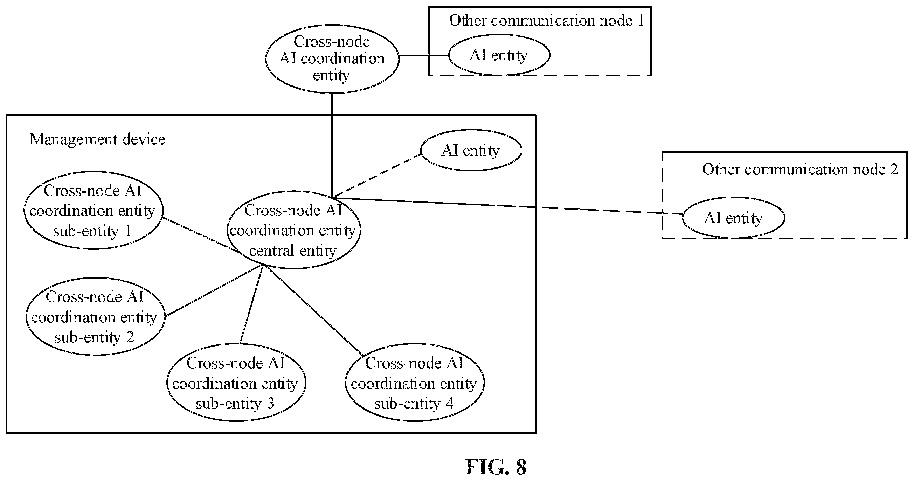

FIG. 8 is another schematic diagram of communication between a management device and other communication nodes according to an embodiment of the present disclosure. As illustrated in FIG. 8, the management device deploys at least one cross-node AI/ML coordination entity central entity and at least one cross-node AI/ML coordination entity sub-entity (e.g., the cross-node AI/ML coordination entity sub-entities from 1 to 4 illustrated in FIG. 8). Each cross-node AI/ML coordination entity central entity may be associated with the at least one cross-node AI/ML coordination entity sub-entity. Herein, the cross-node AI/ML coordination entity central entity may be configured to forward a task transmitted by an intra-node AI/ML function entity deployed in other communication node or other cross-node AI/ML coordination entity to the cross-node AI/ML coordination entity sub-entity corresponding to the cross-node AI/ML coordination entity central entity for processing, or forward a task triggered or responded by the cross-node AI/ML coordination entity sub-entity to the intra-node AI/ML function entity deployed in the other communication node or other cross-node AI/ML coordination entity corresponding to the cross-node AI/ML coordination entity central entity for processing.

Alternatively, the management device may further deploy at least one intra-node AI/ML function entity. The at least one intra-node AI/ML function entity may be configured to process a task generated in the management device.

The cross-node AI/ML coordination entity central entity deployed in the management device may directly communicate with the intra-node AI/ML function entity (i.e., the AI entity) deployed in other communication node 2, or may indirectly communicate with the intra-node AI/ML function entity (i.e., the AI entity) deployed in other communication node 1 through another cross-node AI/ML coordination entity. The connection between the cross-node AI/ML coordination entity central entity deployed in the management device and the at least one cross-node AI/ML coordination entity sub-entity deployed in the management device exists. Herein, the cross-node AI/ML coordination entity central entity may be mainly responsible for routing and allocating the incoming tasks, and the cross-node AI/ML coordination entity sub-entity may be configured to process the specific tasks.

Alternatively, there may be two dividing principles for the cross-node AI/ML coordination entity sub-entities.

In a first principle, the dividing of the cross-node AI/ML coordination entity sub-entities may be performed according to a granularity of communication nodes.

All of the tasks involved in the intra-node AI/ML function entities deployed in any one communication node may be processed through the same cross-node AI/ML coordination entity sub-entity. Additionally, the cross-node AI/ML coordination entity sub-entities associated with the intra-node AI/ML function entities deployed in different communication nodes may be the same or different. In such case, there is a one-to-one mapping relationship between the intra-node AI/ML function entity deployed in the communication node and the cross-node AI/ML coordination entity sub-entity, that is, one communication node is associated with one cross-node AI/ML coordination entity sub-entity. Or, there is a many-to-one mapping relationship between the intra-node AI/ML function entities deployed in multiple communication nodes and the cross-node AI/ML coordination entity sub-entity, that is, multiple communication nodes are associated with one cross-node AI/ML coordination entity sub-entity.

In a second principle, the dividing of the cross-node AI/ML coordination entity sub-entities may be performed according to a granularity of task type.

An intra-node AI/ML function entity deployed in the communication node may involve one or more types of tasks. Each type of the tasks may be associated with the cross-node AI/ML coordination entity sub-entity. The cross-node AI/ML coordination entity sub-entities associated with the tasks may be the same or different. In such case, there is a one-to-one mapping relationship between the intra-node AI/ML function entity deployed in the communication node and the cross-node AI/ML coordination entity sub-entity, that is, an intra-node AI/ML function entity deployed in one communication node only includes one type of task, or an intra-node AI/ML function entity deployed in one communication node includes at least two types of tasks, but the at least two types of tasks are associated with the same cross-node AI/ML coordination entity sub-entity. Or, there is a one-to-many mapping relationship between the intra-node AI/ML function entity deployed in the communication node and the cross-node AI/ML coordination entity sub-entities, that is, an intra-node AI/ML function entity deployed in one communication node includes at least two types of tasks, and the at least two types of tasks are associated with different cross-node AI/ML coordination entity sub-entities.

It should be noted that, from the perspective of the communication node, the relationship between the intra-node AI/ML function entity and the cross-node AI/ML coordination entity sub-entity deployed in the same communication node may be the first type or the second type of relationship described above, But if more than one intra-node AI/ML function entity is deployed in the same communication node (e.g., more than one intra-node AI/ML function entity is deployed in a UE, a CU, a DU, or a gNB), the relationship between any one of the intra-node AI/ML function entities and the cross-node AI/ML coordination entity sub-entity deployed in the same communication node may be the first type or the second type of relationship described above. From the perspective of the cross-node AI/ML coordination entity sub-entity, the relationship between the same cross-node AI/ML coordination entity sub-entity and the intra-node AI/ML function entities deployed in different communication nodes may be the first type and/or the second type of relationship described above. Herein, the "and" relationship refers to that the relationship between the intra-node AI/ML function entity deployed in the communication node 1 and the cross-node AI/ML coordination entity sub-entity is the first type of relationship above, and the relationship between the intra-node AI/ML function entity deployed in the communication node 2 and the same cross-node AI/ML coordination entity sub-entity is the second type of relationship above.

Alternatively, the management device may further deploy at least one intra-node AI/ML function entity. There is the connection between the at least one intra-node AI/ML function entity and the cross-node AI/ML coordination entity central entity or the cross-node AI/ML coordination entity sub-entity deployed in the management device; or, there is no connection between the at least one intra-node AI/ML function entity and the cross-node AI/ML coordination entity central entity or the cross-node AI/ML coordination entity sub-entity deployed in the management device.

Alternatively, if at least two cross-node AI/ML coordination entity central entities are deployed in the management device, the communication manner between any two cross-node AI/ML coordination entity central entities may include the following two manners.

Manner 1: the any two cross-node AI/ML coordination entity central entities may directly communicate with each other through an interface protocol.

Manner 2: the any two cross-node AI/ML coordination entity central entities may indirectly communicate with each other through a task coordination central entity. That is, there is no direct communication interface between the any two cross-node AI/ML coordination entity central entities, but the indirect communication may be implemented by forwarding the task through the task coordination central entity.

Herein, the other communication node 1 or other communication node 2 described in FIGS. 7 and 8 may be other communication node except the management device.

The core network device (e.g., at least one of an AMF, a SMF, a UPF, a UDM, a PCF, or a LMF) is described below. It should be noted that the following core network may refer to the core network device unless otherwise specified.

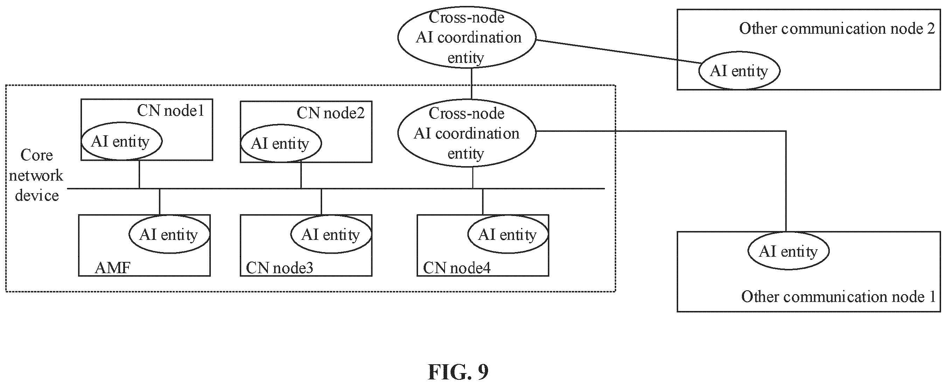

FIG. 9 is a schematic diagram of communication between a core network device and other communication nodes according to an embodiment of the present disclosure. As illustrated in FIG. 9, the core network deploys at least one cross-node AI/ML coordination entity. Each cross-node AI/ML coordination entity is configured to process at least one type of the following tasks:
a task requested by other cross-node AI/ML coordination entity deployed in the core network;
a task interacted between intra-node AI/ML function entities deployed in any two communication nodes in the core network;
a task interacted between an intra-node AI/ML function entity deployed in any one communication node in the core network and an intra-node AI/ML function entity deployed in other communication node except the core network communication node; or
a task interacted between an intra-node AI/ML function entity deployed in any one communication node in the core network and a cross-node AI/ML coordination entity associated with other communication node except the core network communication node.

Any one communication node (e.g., any one device among the AMF and core network nodes from CN node1 to CN node4) may deploy at least one intra-node AI/ML function entity according to the function requirement.

The cross-node AI/ML coordination entity deployed in the core network may directly communicate with the intra-node AI/ML function entity (i.e., the AI entity) deployed in the other communication node 1. Or, the cross-node AI/ML coordination entity deployed in the core network may indirectly communicate with the intra-node AI/ML function entity (i.e., the AI entity) deployed in the other communication node 2 through another cross-node AI/ML coordination entity. The communication manner between the intra-node AI/ML function entities deployed in any two communication nodes in the core network may include any one of the following manners.

The intra-node AI/ML function entities deployed in the any two communication nodes in the core network may directly communicate with each other (i.e., communicate without through the cross-node AI/ML coordination entity). For example, the communication node of AMF may directly transmit the task request to other core network communication node(s).

Alternatively, the intra-node AI/ML function entities deployed in the any two communication nodes in the core network may indirectly communicate with each other through the cross-node AI/ML coordination entity deployed in the core network. For example, the cross-node AI/ML coordination entity may forward, according to the task target, the task request transmitted by the AMF to the intra-node AI/ML function entity deployed in the other core network communication node for processing.

Alternatively, if at least two cross-node AI/ML coordination entities are deployed in the core network, the communication manner between any two cross-node AI/ML coordination entities may include the following two manners.

Manner 1: the any two cross-node AI/ML coordination entities may directly communicate with each other through an interface protocol.

Manner 2: the any two cross-node AI/ML coordination entities may indirectly communicate with each other through a cross-node AI/ML coordination entity central entity. That is, there is no direct communication interface between the any two cross-node AI/ML coordination entities, but the indirect communication may be implemented by forwarding the task by through the cross-node AI/ML coordination entity central entity.

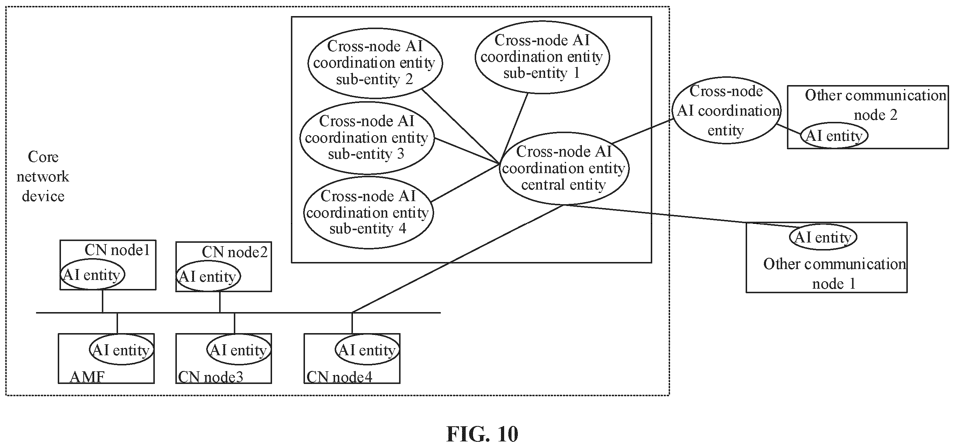

FIG. 10 is another schematic diagram of communication between a core network device and other communication nodes according to an embodiment of the present disclosure. As illustrated in FIG. 10, the core network device deploys at least one cross-node AI/ML coordination entity central entity and at least one cross-node AI/ML coordination entity sub-entity (i.e., cross-node AI/ML coordination entity sub-entities 1 to 4 shown in FIG. 10). Each cross-node AI/ML coordination entity central entity may be associated with the at least one cross-node AI/ML coordination entity sub-entity. The cross-node AI/ML coordination entity central entity may be configured to process at least one type of the following tasks:
a task requested by other cross-node AI/ML coordination entity central entity deployed in the core network;
forwarding (or routing) a task request triggered (or responded) by an intra-node AI/ML function entity deployed in any communication node in the core network to a cross-node AI/ML coordination entity sub-entity deployed in the core network or an intra-node AI/ML function entity deployed in other communication node except the core network communication node or a cross-node AI/ML coordination entity associated with other communication node except the core network communication node for processing; or
forwarding (or routing) a task request triggered (or responded) by a cross-node AI/ML coordination entity sub-entity deployed in the core network or an intra-node AI/ML function entity deployed in other communication node except the core network communication node or a cross-node AI/ML coordination entity associated with other communication node except the core network communication node to an intra-node AI/ML function entity deployed in one or more communication nodes in the core network for processing.

Any one communication node (e.g., any one device among the AMF and core network nodes from CN node 1 to CN node 4) may deploy at least one intra-node AI/ML function entity according to the function requirement.

The cross-node AI/ML coordination entity central entity deployed in the core network device may directly communicate with the intra-node AI/ML function entity (i.e., the AI entity) deployed in other communication node 1. Or, the cross-node AI/ML coordination entity central entity deployed in the core network device may indirectly communicate with the intra-node AI/ML function entity (i.e., the AI entity) deployed in other communication node 2 through another cross-node AI/ML coordination entity. There is the connection between the cross-node AI/ML coordination entity central entity deployed in the core network device and the at least one cross-node AI/ML coordination entity sub-entity deployed in the core network device. Herein, the cross-node AI/ML coordination entity central entity may be mainly responsible for routing and allocating the incoming tasks, and the cross-node AI/ML coordination entity sub-entity is used for processing specific tasks. The principle of dividing the cross-node AI/ML coordination entity sub-entities deployed in the core network is similar to that described in the second case, when the communication node is the management device, which will not be repeated here.

Alternatively, if at least two cross-node AI/ML coordination entity central entities are deployed in the core network, the communication manner between any two cross-node AI/ML coordination entity central entities may include the following two manners.

Manner 1: the any two cross-node AI/ML coordination entity central entities may directly communicate with each other through an interface protocol.

Manner 2: the any two cross-node AI/ML coordination entity central entities may indirectly communicate with each other through a task coordination central entity. That is, there is no direct communication interface between the any two cross-node AI/ML coordination entity central entities, but the indirect communication may be implemented by forwarding the task through the task coordination central entity.

Alternatively, for the communication node to be the core network device, in any one of the aforementioned two cases, there is the direct connection between any one core network communication node (e.g., an AMF, a SMF, a UPF, a UDM, a PCF, or a LMF) and the cross-node AI/ML coordination entity that does not belong to the core network or an intra-node AI/ML function entity deployed in the communication node that does not belong to the core network.

Example 1: an intra-node AI/ML function entity deployed in the core network communication node of the AMF and an intra-node AI/ML function entity deployed in a gNB may be directly connected for communication.

Example 2: the intra-node AI/ML function entity deployed in the core network communication node of the AMF and an intra-node AI/ML function entity deployed in the gNB may be indirectly connected for communication through a cross-node AI/ML coordination entity deployed in an access network.

The other communication node 1 or other communication node 2 described in FIGS. 9 and 10 may be other communication node except the core network device.

A communication node in an access network device (e.g., at least one of a gNB, a CU, a DU, a CU-CP, a CU-UP, or a protocol layer entity in the access network) is described below. It should be noted that the following access network may refer to the access network device unless otherwise specified.

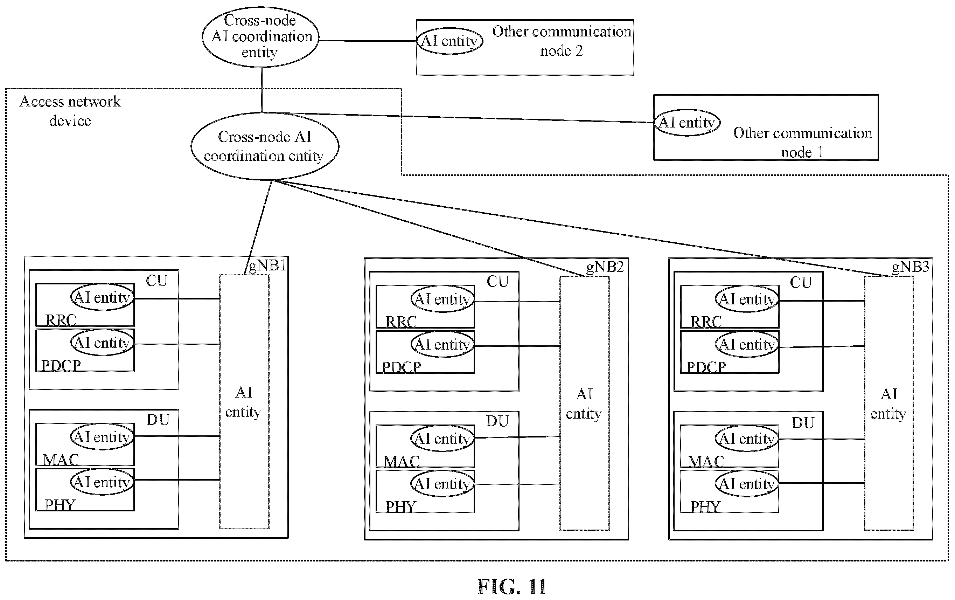

FIG. 11 is a schematic diagram of communication between an access network device and other communication nodes according to an embodiment of the present disclosure. As illustrated in FIG. 11, the access network deploys at least one cross-node AI/ML coordination entity. Each cross-node AI/ML coordination entity may be configured to process at least one type of the following tasks:
a task requested by other cross-node AI/ML coordination entity deployed in the access network;
a task interacted between intra-node AI/ML function entities deployed in any two communication nodes in the access network;
a task interacted between an intra-node AI/ML function entity deployed in any one communication node in the access network and an intra-node AI/ML function entity deployed in other communication node except the access network communication node; or
a task interacted between an intra-node AI/ML function entity deployed in any one communication node in the access network and a cross-node AI/ML coordination entity associated with other communication node except the access network communication node.

Any one communication node (such as a gNB) may deploy at least one intra-node AI/ML function entity (corresponding to the first-level intra-node AI/ML function entity) according to the function requirement. Alternatively, the target unit (such as, a CU, a DU, a CU-CP, or a CU-UP) in the communication node in the access network device may deploy at least one intra-node AI/ML function entity (corresponding to the second-level intra-node AI/ML function entity) according to the function requirement. Alternatively, a protocol layer entity (such as, a NAS, a SDAP, a RRC, a PDCP, a RLC, a BAP, a MAC, or a PHY) in the access network may deploy at least one intra-node AI/ML function entity (corresponding to the third-level intra-node AI/ML function entity) according to the function requirement. Exemplarily, in FIG. 11, an AI entity may be deployed in the entity other than the target units of the gNB1, the gNB2 and the gNB3. Alternatively, the AI entity deployed in the entity other than the target units of the gNB1, the gNB2 and the gNB3 may communicate with the cross-node AI/ML coordination entity. Exemplarily, in FIG. 11, the AI entity may be deployed in a RRC layer, a PDCP layer, a MAC layer, or a PHY layer in each of the gNB1, the gNB2 and the gNB3.

The cross-node AI/ML coordination entity deployed in the access network may directly communicate with the intra-node AI/ML function entity (i.e., the AI entity) deployed in the other communication node 1. Or, the cross-node AI/ML coordination entity deployed in the access network may indirectly communicate with the intra-node AI/ML function entity (i.e., the AI entity) deployed in the other communication node 2 through another cross-node AI/ML coordination entity. The communication manner between the intra-node AI/ML function entities deployed in any two communication nodes in the access network may include any one of the following manners.

The intra-node AI/ML function entities deployed in the any two communication nodes in the access network may directly communicate with each other (i.e., communicate without through the cross-node AI/ML coordination entity). For example, the intra-node AI/ML function entity deployed in the communication node of the gNB1 CU may directly transmit the task request to the intra-node AI/ML function entity deployed in the communication node of the gNB1 DU.

The intra-node AI/ML function entities deployed in the any two communication nodes in the access network may indirectly communicate with each other through the cross-node AI/ML coordination entity deployed in the access network. For example, the cross-node AI/ML coordination entity may forward, according to the task target, the task request transmitted by the gNB1 CU to the intra-node AI/ML function entity deployed in the communication node of the gNB2 CU for processing.

The intra-node AI/ML function entities deployed in the any two communication nodes in the access network may indirectly communicate with each other through the intra-node AI/ML function entity deployed in the access network (e.g., in the gNB). In an Example 1, the intra-node AI/ML function entity deployed in the gNB1 may forward, according to the task target, the task request transmitted by the intra-node AI/ML function entity deployed in the gNB1 CU to the intra-node AI/ML function entity deployed in the communication node of the gNB1 DU for processing. In an Example 2, the intra-node AI/ML function entity deployed in the gNB1 may forward, according to the task target, the task request transmitted by the intra-node AI/ML function entity deployed in the communication node of the gNB1 CU RRC protocol layer to the intra-node AI/ML function entity deployed in the communication node of the gNB1 CU PDCP protocol layer for processing. In an Example 3, the intra-node AI/ML function entity AI/ML function entity deployed in the gNB1 CU may forward, according to the task target, the task request transmitted by the intra-node AI/ML function entity deployed in the gNB1 CU RRC protocol layer to the intra-node AI/ML function entity deployed in the communication node of the gNB1 CU PDCP protocol layer for processing.

Alternatively, if at least two cross-node AI/ML coordination entities are deployed in the access network, the communication manner between any two cross-node AI/ML coordination entities may include the following two manners.

Manner 1: the any two cross-node AI/ML coordination entities may directly communicate with each other through an interface protocol.

Manner 2: the any two cross-node AI/ML coordination entities may indirectly communicate with each other through a cross-node AI/ML coordination entity central entity. That is, there is no direct communication interface between the any two cross-node AI/ML coordination entities, but the indirect communication may be implemented by forwarding task through a cross-node AI/ML coordination entity central entity.

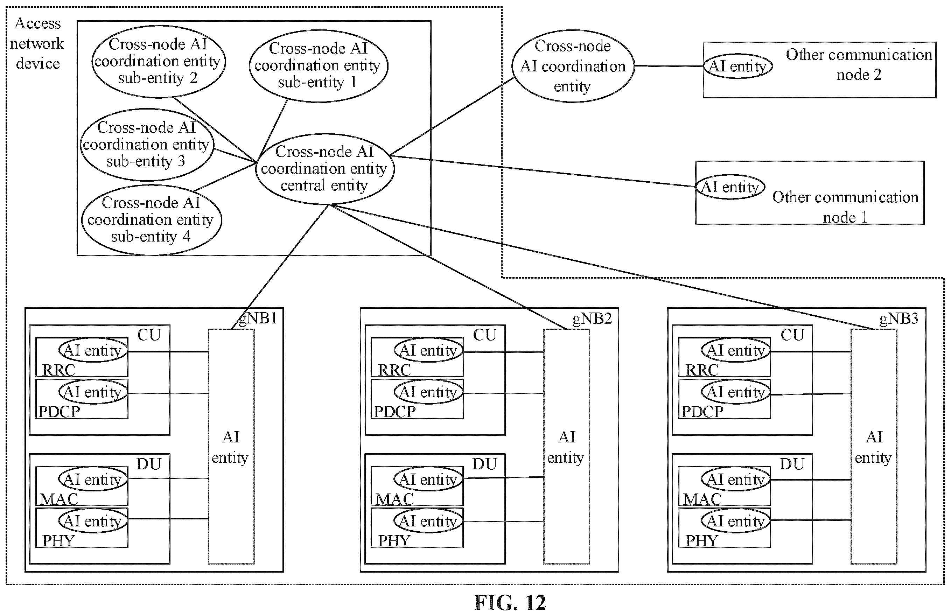

FIG. 12 is another schematic diagram of communication between an access network device and other communication nodes according to an embodiment of the present disclosure. As illustrated in FIG. 12, the access network device deploys at least one cross-node AI/ML coordination entity central entity and at least one cross-node AI/ML coordination entity sub-entity. Each cross-node AI/ML coordination entity central entity may be associated with the at least one cross-node AI/ML coordination entity sub-entity. Herein, the cross-node AI/ML coordination entity central entity may be configured to process at least one type of the following tasks:
a task requested by other cross-node AI/ML coordination entity central entity deployed in the access network;
forwarding (or routing) a task request triggered (or responded) by an intra-node AI/ML function entity deployed in any one communication node in the access network to a cross-node AI/ML coordination entity sub-entity deployed in the access network or an intra-node AI/ML function entity deployed in other communication node except the access network communication node or a cross-node AI/ML coordination entity associated with other communication node except the access network communication node for processing; or
forwarding (or routing) a task request triggered (or responded) by a cross-node AI/ML coordination entity sub-entity deployed in the access network or an intra-node AI/ML function entity deployed in other communication node except the access network communication node or a cross-node AI/ML coordination entity associated with other communication node except the access network communication node to an intra-node AI/ML function entity deployed in one or more communication nodes in the access network for processing.

A communication node (such as a gNB) in any one access network device may deploy at least one intra-node AI/ML function entity (corresponding to the first-level intra-node AI/ML function entity) according to the function requirement. Alternatively, the communication node (such as, a CU, a DU, a CU-CP, or a CU-UP) in the access network device may deploy at least one intra-node AI/ML function entity (corresponding to the second-level intra-node AI/ML function entity) according to the function requirement. Alternatively, an access network protocol layer entity (such as, a NAS, a SDAP, a RRC, a PDCP, a RLC, a BAP, a MAC, or a PHY) may deploy at least one intra-node AI/ML function entity (corresponding to the third-level intra-node AI/ML function entity) according to function requirement. Exemplarily, in FIG. 12, an AI entity may be deployed in the entity other than the target units of the gNB1, the gNB2 and the gNB3. Alternatively, the AI entity deployed in the entity other than the target units of the gNB1, the gNB2 and the gNB3 may communicate with the cross-node AI/ML coordination entity. Exemplarily, in FIG. 12, the AI entity may be deployed in a RRC layer, a PDCP layer, a MAC layer, or a PHY layer in each of the gNB1, the gNB2 and the gNB3.

The cross-node AI/ML coordination entity central entity deployed in the access network may directly communicate with the intra-node AI/ML function entity (i.e., the AI entity) deployed in the other communication node 1. Or, the cross-node AI/ML coordination entity central entity deployed in the access network may indirectly communicate with the intra-node AI/ML function entity (i.e., the AI entity) deployed in the other communication node 2 through another cross-node AI/ML coordination entity. The connection between the cross-node AI/ML coordination entity central entity deployed in the access network device and the at least one deployed cross-node AI/ML coordination entity sub-entity exists. Herein, the cross-node AI/ML coordination entity central entity may be mainly responsible for routing and allocating the incoming tasks, and the cross-node AI/ML coordination entity sub-entity may be configured to process the specific tasks. The principle of dividing the cross-node AI/ML coordination entity sub-entities deployed in the access network is similar to that described in the second case, when the communication node is the management device, which will not be repeatedly described here.

Alternatively, if at least two cross-node AI/ML coordination entity central entities are deployed in the access network, the communication manner between any two cross-node AI/ML coordination entity central entities may include the following two manners.

Manner 1: the any two cross-node AI/ML coordination entity central entities may directly communicate with each other through an interface protocol.

Manner 2: the any two cross-node AI/ML coordination entity central entities may indirectly communicate with each other through a task coordination central entity. That is, there is no direct communication interface between the any two cross-node AI/ML coordination entity central entities, but the indirect communication may be implemented by forwarding the task through the task coordination central entity.

Alternatively, there is the direct connection between any one access network communication node (e.g., a gNB, a CU, a DU, a CU-CP, a CU-UP, or a protocol layer entity in the access network) and a cross-node AI/ML coordination entity that does not belong to the access network or an intra-node AI/ML function entity deployed in the communication node that does not belong to the access network.

Example 1: an intra-node AI/ML function entity deployed in the access network communication node of the gNB and an intra-node AI/ML function entity deployed in an AMF may be directly connected for communication.

Example 2: the intra-node AI/ML function entity deployed in the access network communication node of the gNB and an intra-node AI/ML function entity deployed in the AMF may be indirectly connected for communication through a cross-node AI/ML coordination entity deployed in a core network.

Example 3: the intra-node AI/ML function entity deployed in the access network communication node of the gNB, the gNB CU or the gNB DU and an intra-node AI/ML function entity deployed in a UE may be directly connected for communication.

The other communication node 1 or other communication node 2 described in FIGS. 11 and 12 may be other communication node except the access network device.

The terminal device is described below.

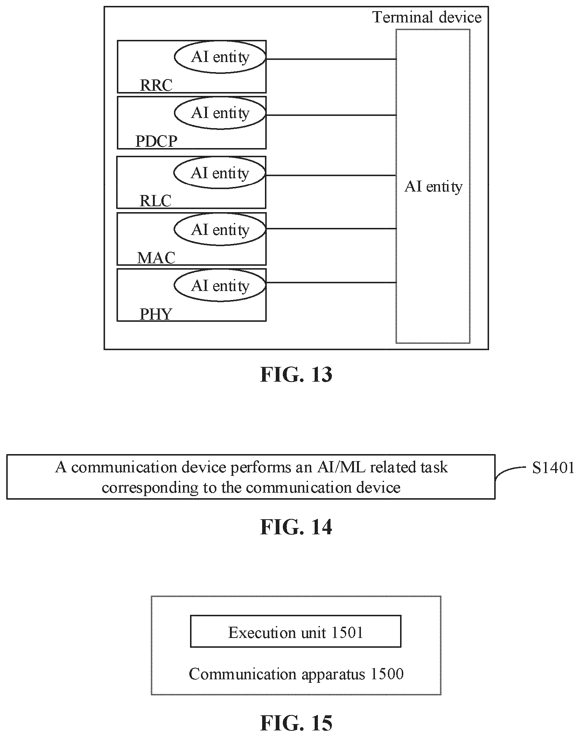

FIG. 13 is a schematic structural diagram of a terminal device according to an embodiment of the present disclosure. As illustrated in FIG. 13, any one terminal device may deploy at least one intra-node AI/ML function entity according to function requirement, that is, an AI entity is deployed in the entity other than a protocol layer entity, which corresponds to the first-level intra-node AI/ML function entity. Alternatively, a protocol layer entity (such as, a NAS, a SDAP, a RRC, a PDCP, a RLC, a BAP, a MAC, or a PHY) in the terminal device may deploy at least one intra-node AI/ML function entity according to function requirement. That is, an AI entity may be deployed in the protocol layer entity, which corresponds to the second-level intra-node AI/ML function entity. Exemplarily, FIG. 13 illustrates that the AI entity may be deployed in each of the RRC layer entity, the PDCP layer entity, the RLC layer entity, the MAC layer entity and the PHY layer entity.

The intra-node AI/ML function entities deployed in any two protocol layers in the terminal device (i.e., the second-level intra-node AI/ML function entities deployed in the terminal device) may directly communicate or indirectly communicate through the first-level intra-node AI/ML function entity deployed in the terminal device.

The first-level intra-node AI/ML function entity deployed in the terminal device may directly communicate with the first-level intra-node AI/ML function entity or the second-level intra-node AI/ML function entity deployed in the access network device through an air interface protocol.

The second-level intra-node AI/ML function entity deployed in the terminal device may directly communicate with the third-level intra-node AI/ML function entity deployed in the access network device through an air interface protocol.

The second-level intra-node AI/ML function entity deployed in the terminal device may indirectly communicate with the third-level intra-node AI/ML function entity deployed in the access network device through the first-level intra-node AI/ML function entity deployed in the terminal device and the first-level intra-node AI/ML function entity deployed in the access network device. Or, the second-level intra-node AI/ML function entity deployed in the terminal device may indirectly communicate with the third-level intra-node AI/ML function entity deployed in the access network device through the first-level intra-node AI/ML function entity deployed in the terminal device and the second-level intra-node AI/ML function entity deployed in the access network device.

The first-level intra-node AI/ML function entity deployed in the terminal device or the second-level intra-node AI/ML function entity deployed in the terminal device may indirectly communicate with the intra-node AI/ML function entity deployed in the core network device (such as an AMF device) by forwarding a message through the access network.

The functions of the intra-node AI/ML function entities and/or the associated cross-node AI/ML coordination entities deployed in each of the communication nodes are described below.

In some scenarios, for the communication node to be the management device (such as an OAM device), the core network device (such as at least one of an AMF, a SMF, a UPF, a UDM, a PCF, or a LMF), the access network device (such as at least one of a gNB, a CU, a DU, a CU-CP, a CU-UP or a protocol layer entity in access network), or the terminal device (such as a whole UE device and/or a protocol layer entity in the terminal device), the intra-node AI/ML function entity deployed in the aforementioned communication node may have at least one of the following functions: a general function, a data management function, a storage management function, a computing power management function, a model life cycle management function, or a task management function.

The general function may be applicable both internally and externally, that is, such function may be used by the intra-node AI/ML function entity deployed in the communication node, and may be further used in the process of external tasks of the intra-node AI/ML function entity deployed in the communication node.

The data management function may include at least one of the following operations: data collection (for example, for data including model input data, model output data, intermediate model data, etc.), data storage, data modification or update, data deletion, data replication, or data forwarding.

The storage management function includes at least one of the following operations: remaining storage size indication, storage reservation, storage allocation, storage sharing, storage recovery, or storage formatting.

The computing power management function includes at least one of the following operations: remaining computing power indication, computing power reservation, computing power allocation, computing power sharing, or computing power recovery.

The model life cycle management function includes at least one of the following operations: model training, model verification, model testing, model deployment, model replication, model forwarding, model inference, model monitoring, model update, model activation, deactivation operation, or model deletion.

The task management function may be used for managing and controlling any of internal tasks or external tasks. The task management function may include at least one of the following operations: task generation, task acceptance or rejection, task splitting, task allocation, task monitoring, task update, or task deletion.

In some implementations, a resource scheduling AI/ML model is expected to be trained by the gNB. A task management function entity may firstly generate a task, and then may splitting the task, which includes the task splitting for a data collection sub-task, a storage scheduling sub-task, a computing power scheduling sub-task and a model life cycle management sub-task. Herein, the data collection sub-task may be allocated to a data management function entity for processing. The storage scheduling sub-task may be allocated to a storage management function entity for processing. The computing power scheduling sub-task may be allocated to a computing power management function entity for processing. Moreover, the model life cycle management sub-task may be allocated to a model life cycle management function entity for processing. The task monitoring may be responsible for monitoring a completion state of each of the sub-tasks, until a respective one of the sub-tasks is completed. If necessary, the sub-tasks may be updated, and after the completion of the task, the corresponding task process will be deleted.

The intra-node AI/ML function entity and/or the cross-node AI/ML coordination entity associated with the intra-node AI/ML function entity in any one of the communication nodes mentioned above may be configured to at least one of the following:
actively transmit a task to a first AI/ML function entity, actively allocate a task to the first AI/ML function entity, or actively forward a task to the first AI/ML function entity, here, the first AI/ML function entity corresponds to the first designated AI/ML entity, the sixth designated AI/ML entity or the eleventh designated AI/ML entity in the aforementioned embodiments;
receive and process the task actively transmitted by the first AI/ML function entity, the task actively allocated by the first AI/ML function entity or the task actively forwarded by the first AI/ML function entity; or
forward the task actively transmitted by the first AI/ML function entity, the task actively allocated by the first AI/ML function entity or the task actively forwarded by the first AI/ML function entity.

The first AI/ML function entity above may be a cross-node AI/ML coordination entity, an intra-node AI/ML function entity deployed by other communication node, or a cross-node AI/ML coordination entity central entity.

Herein, the task type involved in the external functions above includes at least one of the following: a data management task, a storage management task, a computing power management task, or a model life cycle management task.

Each of the aforementioned tasks may be transmitted through an interface protocol or an air interface protocol. For specific function meanings, the references can be made to the function description corresponding to the general function section above, which will not be repeated here.

In other scenarios, for a cross-node AI/ML coordination entity, a cross-node AI/ML coordination entity central entity, a cross-node AI/ML coordination entity sub-entity, or a task coordination central entity deployed in a management device, a core network, or an access network, the main functions of each entity are described as following.

The cross-node AI/ML coordination entity may include at least one of the following functions:
actively transmitting a task to a second AI/ML function entity, actively allocating a task to the second AI/ML function entity, or actively forwarding a task to the second AI/ML function entity, here, the second AI/ML function entity corresponds to the second designated AI/ML entity, the seventh designated AI/ML entity or the twelfth designated AI/ML entity in the aforementioned embodiments;
receiving and processing the task actively transmitted by the second AI/ML function entity, the task actively allocated by the second AI/ML function entity or the task actively forwarded by the second AI/ML function entity; or
forwarding the task actively transmitted by the second AI/ML function entity, the task actively allocated by the second AI/ML function entity or the task actively forwarded by the second AI/ML function entity.

Alternatively, the second AI/ML function entity above may be other cross-node AI/ML coordination entity, an intra-node AI/ML function entity deployed in other communication node, or a cross-node AI/ML coordination entity central entity. Alternatively, each of the aforementioned tasks may be transmitted through an interface protocol or an air interface protocol. For specific function meanings, the references can be made to the function description corresponding to the general function section in the first scenario above, which will not be repeated here.

The cross-node AI/ML coordination entity central entity may include at least one of the following functions:
actively transmitting a task to a third AI/ML function entity, actively allocating a task to the third AI/ML function entity, or actively forwarding a task to the third AI/ML function entity, here, the third AI/ML function entity corresponds to the third designated AI/ML entity, the eighth designated AI/ML entity or the thirteenth designated AI/ML entity in the aforementioned embodiments;
receiving and processing the task actively transmitted by the third AI/ML function entity, the task actively allocated by the third AI/ML function entity or the task actively forwarded by the third AI/ML function entity; or
forwarding the task actively transmitted by the third AI/ML function entity, the task actively allocated by the third AI/ML function entity or the task actively forwarded by the third AI/ML function entity.

Alternatively, the third AI/ML function entity above may be a cross-node AI/ML coordination entity, an intra-node AI/ML function entity deployed in other communication node, other cross-node AI/ML coordination entity central entity, a cross-node AI/ML coordination entity sub-entity, or a task coordination central entity. Alternatively, each of the aforementioned tasks may be transmitted through an interface protocol or an air interface protocol. For specific function meanings, the references can be made to the function description corresponding to the general function section in the first scenario above, which will not be repeated here.

The cross-node AI/ML coordination entity sub-entity may include at least one of the following functions:
actively transmitting a task to a cross-node AI/ML coordination entity central entity, or allocating a task to the cross-node AI/ML coordination entity central entity; or
receiving and processing the task actively transmitted by the cross-node AI/ML coordination entity central entity, the task actively allocated by the cross-node AI/ML coordination entity central entity or a task actively forwarded by the cross-node AI/ML coordination entity central entity (which may also include a task rejection scenario).

Alternatively, each of the aforementioned tasks may be transmitted through an interface protocol or an air interface protocol. For specific function meanings, the references can be made to the function description corresponding to the general function section in the first scenario above, which will not be repeated here.

Alternatively, the task coordination central entity (corresponding to the specific entity described above) may include at least one of the following functions:
actively transmitting a task to a cross-node AI/ML coordination entity central entity, allocating a task to the cross-node AI/ML coordination entity central entity, or forwarding a task to the cross-node AI/ML coordination entity central entity;
receiving and processing the task actively transmitted by the cross-node AI/ML coordination entity central entity, the task actively allocated by the cross-node AI/ML coordination entity central entity, or the task actively forwarded by the cross-node AI/ML coordination entity central entity; or
forwarding the task actively transmitted by the cross-node AI/ML coordination entity central entity, the task actively allocated by the cross-node AI/ML coordination entity central entity, or the task actively forwarded by the cross-node AI/ML coordination entity central entity.

Alternatively, each of the aforementioned tasks may be transmitted through an interface protocol or an air interface protocol. For specific function meanings, the references can be made to the function description corresponding to the general function section in the first scenario above, which will not be repeated here.

Alternatively, the intra-node AI/ML function entity and/or the cross-node AI/ML coordination entity associated with the intra-node AI/ML function entity deployed in each of the communication nodes may further perform operations of initialization, activation, deactivation, or deletion.

The initialization process is introduced as following. Before the formal deployment of an intra-node AI/ML function entity and/or a cross-node AI/ML coordination entity that is newly added, the intra-node AI/ML function entity and/or cross-node AI/ML coordination entity that is newly added may be required to be established, through an initialization protocol message (corresponding to the initialization message in the aforementioned embodiments), a connection with an intra-node AI/ML function entity and/or a cross-node AI/ML coordination entity that has been deployed formally (hereinafter referred to as the target intra-node node AI/ML function entity and/or the target cross-node AI/ML coordination entity). After establishing the connection, the intra-node AI/ML function entity and/or cross-node AI/ML coordination entity that is newly added may be considered to be deployed formally. The aforementioned initialization protocol message may be transmitted by the intra-node AI/ML function entity and/or cross-node AI/ML coordination entity that is newly added, to the intra-node AI/ML function entity and/or cross-node AI/ML coordination entity that has been deployed formally. Here, the message may include at least one piece of the following information:
communication address information or identification information of the intra-node AI/ML function entity and/or cross-node AI/ML coordination entity that is newly added;
a function range supported by the intra-node AI/ML function entity and/or cross-node AI/ML coordination entity that is newly added; or
a communication node to which the intra-node AI/ML function entity and/or cross-node AI/ML coordination entity that is newly added belongs.

Alternatively, after receiving the initialization protocol message transmitted by the intra-node AI/ML function entity and/or cross-node AI/ML coordination entity that is newly added, the target intra-node AI/ML function entity and/or cross-node AI/ML coordination entity may further transmit a first response message to the intra-node AI/ML function entity and/or the cross-node AI/ML coordination entity that is newly added. The first response message may be used to accept the initialization protocol message transmitted by the intra-node AI/ML function entity and/or cross-node AI/ML coordination entity that is newly added. Alternatively, the target intra-node AI/ML function entity and/or cross-node AI/ML coordination entity may further transmit a second response message to the intra-node AI/ML function entity and/or cross-node AI/ML coordination entity that is newly added. The second response message may be used to reject the initialization protocol message transmitted by the intra-node AI/ML function entity and/or the cross-node AI/ML coordination entity that is newly added.

The first response message may include at least one piece of the following information:
communication address information or identification information of the target intra-node AI/ML function entity and/or cross-node AI/ML coordination entity;
a function range supported by the target intra-node AI/ML function entity and/or cross-node AI/ML coordination entity; or
a communication node to which the target intra-node AI/ML function entity and/or cross-node AI/ML coordination entity belongs.

The second response message includes a rejection reason and/or rejection duration information. The rejection reason may indicate, for example, that the function requirement of the target intra-node AI/ML function entity and/or cross-node AI/ML coordination entity is not met; or, the connection capability of the target intra-node AI/ML function entity and/or cross-node AI/ML coordination entity reaches the upper limit. Additionally, the rejection duration information may indicate how long the initialization protocol message is not allowed to be retransmitted.

The activation or deactivation process is introduced as following. After deploying the intra-node AI/ML function entity and/or cross-node AI/ML coordination entity, if some intra-node AI/ML function entities and/or cross-node AI/ML coordination entities (subsequently referred to as the source intra-node AI/ML function entity and/or the source cross-node AI/ML coordination entity) require temporary maintenance or have no task for a long time, the source intra-node AI/ML function entity and/or cross-node AI/ML coordination entity may actively or passively perform the deactivation operation.

In the active manner, after actively performing the deactivation operation, the source intra-node AI/ML function entity and/or cross-node AI/ML coordination entity may further notify other connected intra-node AI/ML function entity or cross-node AI/ML coordination entity. Alternatively, before actively performing the deactivation operation, the source intra-node AI/ML function entity and/or cross-node AI/ML coordination entity may further notify the other connected intra-node AI/ML function entity or cross-node AI/ML coordination entity. Then, after the other connected intra-node AI/ML function entity and/or cross-node AI/ML coordination entity replies to an acknowledgement message, the source intra-node AI/ML function entity and/or cross-node AI/ML coordination entity may actively perform the deactivation operation.

In the passive manner, after receiving a deactivation message transmitted by a fourth AI/ML function entity, the source intra-node AI/ML function entity and/or cross-node AI/ML coordination entity may perform the deactivation operation.

The fourth AI/ML function entity may be other cross-node AI/ML coordination entity, an intra-node AI/ML function entity deployed in other communication node, a cross-node AI/ML coordination entity central entity, a cross-node AI/ML coordination entity sub-entity, or a task coordination central entity.

Alternatively, similar to the above deactivation operation, the source intra-node AI/ML function entity and/or cross-node AI/ML coordination entity may actively or passively perform the activation operation. For the specific process, the reference can be made to the behavior description of the deactivation operation, which will not be repeated here.

For the deletion operation, the source intra-node AI/ML function entity and/or cross-node AI/ML coordination entity may actively or passively perform the deletion operation. Once the deletion is successful, the next deployment may be still required to be performed through the aforementioned initialization process.

Alternatively, in the embodiments of the present disclosure, capability information may be interacted between any two communication nodes (e.g., the communication node 1 and the communication node 2). The capability information may include a capability for indicating at least one of the following:
whether to support to deploy at least one intra-node AI/ML function entity and/or cross-node AI/ML coordination entity;
a maximum number of intra-node AI/ML function entities and/or cross-node AI/ML coordination entities that are supported;
which intra-node AI/ML function entities and/or cross-node AI/ML coordination entities are unable to be deployed simultaneously; or
which intra-node AI/ML function entities and/or cross-node AI/ML coordination entities are able to be deployed simultaneously.

After the communication node 1 transmits the capability information to the communication node 2, the communication node 1 may receive instruction information transmitted by the communication node 2. The instruction information may be used for configuring or activating the at least one intra-node AI/ML function entity and/or cross-node AI/ML coordination entity.

The communication node 1 or the communication node 2 may be any one of the following communication nodes:
a management device, such as an OAM device;
a core network device, such as at least one of an AMF, a SMF, a UPF, a UDM, a PCF, or a LMF;
an access network device, such as at least one of a gNB, a CU, a DU, a CU-CP, a CU-UP, or a protocol layer entity in the access network (including at least one of a NAS, a SDAP, a RRC, a PDCP, a RLC, a BAP, a MAC, or a PHY); or
a terminal device, such as a whole UE device and/or a protocol layer entity in the terminal device (including at least one of a NAS, a SDAP, a RRC, a PDCP, a RLC, a BAP, a MAC, or a PHY).

The embodiments of the present disclosure propose a method for designing an architecture of a communication system. The following beneficial effects can be produced through the method. The AI/ML functions can be flexibly deployed at any communication node in the communication system, so that the extensibility of the AI/ML functions in the communication system is good, and there are more potential usage scenarios that can be served compared with the architecture with a centralized plug-in AI/ML function module. The usage of the AI/ML functions can solve communication problems in real time or near real time. Compared with the "solving problems afterwards" mode of the existing communication system, the modes of "solving problems beforehand" and "solving problems during the process" can be achieved, thereby improving the robustness of the communication system and timeliness of the problem solving. The unified AI/ML function architecture is favorable for the realization of the functions of the communication system such as global data sharing and task sharing, so as to improve the efficiency of the AI/ML functions in the communication system.

The embodiments of the present disclosure propose a method for designing an architecture of a communication system. Based on the method, a generalized application of the AI/ML functions in the communication system (i.e., the endogenous intelligent communication system) can be implemented. The AI/ML function entities and connection relationships between the AI/ML function entities can be flexibly deployed by any communication node in the communication system. The general functions and/or external functions of the AI/ML function entities can be defined flexibly, the operations of initialization, activation, deactivation or deletion of the AI/ML function entities can be defined flexibly, and the capability interaction behavior related to the AI/ML functions between the communication nodes can be also defined flexibly.

The following provides an exemplary description of the tasks that may be performed by the target AI/ML entity in each of the devices.

An AI/ML algorithm or an AI/ML model corresponding to one or more target AI/ML entities in the management device may be applied to an energy-saving scenario. For example, historical energy consumption information recorded by each access network device for a period of time may be input to the AI/ML algorithm or the AI/ML model corresponding to the management device, and an energy saving strategy for a forthcoming period of time may be output through the AI/ML algorithm or the AI/ML model corresponding to the management device.

An AI/ML algorithm or an AI/ML model corresponding to one or more target AI/ML entities in the core network device may be applied to a load balancing scenario. For example, current load information of each AMF entity and/or historical load information recorded by each AMF entity for a period of time may be input to the AI/ML algorithm or AI/ML model corresponding to the core network device. Furthermore, load information and/or load distribution strategy of each AMF entity for a forthcoming period of time may be output to the AI/ML algorithm or AI/ML model corresponding to the core network device.

An AI/ML algorithm or an AI/ML model corresponding to one or more target AI/ML entities in an access network device may be applied to a random access scenario.

Exemplarily, at least one of the following items may be input to the AI/ML algorithm or AI/ML model corresponding to the access network device: geographic location information of a terminal device; a measurement result of a serving cell; a measurement result of at least one neighboring cell; a busyness evaluation result of a random access channel; a channel interference evaluation result; or a historical random access report. Alternatively, the busyness evaluation result of the random access channel may be used to evaluate a load degree of the random access channel, thereby assisting the terminal device in determining whether to initiate a random access attempt. Generally, the terminal device may be more inclined to initiate the random access attempt in a case that the random access channel is with a light load.

Through the AI/ML algorithm or the AI/ML model corresponding to the access network device, at least one of the following items may be output: a desired random access configuration; an updated AI algorithm; a modification strategy for an AI algorithm input parameter; a modification strategy for an AI algorithm output parameter; or a selection strategy for random access configuration.

Alternatively, for different AI algorithms, completely different results may be obtained based on the same input parameter. In order to achieve a relatively better optimization target, the terminal device or the network device may need to update the algorithm thereof based on historical calculation. For example, the updated AI algorithm may include factors such as a usage order of each input parameter in the algorithm, a weight ratio of each parameter when used in the algorithm, and the like.

An AI/ML algorithm or an AI/ML model corresponding to one or more target AI/ML entities in the terminal device may be applied to a cell selection/reselection scenario.

Exemplarily, at least one of the following items may be input to the AI/ML algorithm or AI/ML model corresponding to the terminal device: destination information that is expected by a user; service type information that is expected to be obtained by the user; Slice type information that is expected to be obtained by the user; geographical location information of the terminal device; a measurement result of a serving cell; a measurement result of at least one neighboring cell; historical cell selection reselection data of the terminal device; a channel interference evaluation result; a Minimization of Drive Test (MDT) record report; or cell deployment related information.

Alternatively, the aforementioned cell deployment related information may be used to provide basic information of a cell in a certain area, which includes at least one piece of the following information: area identification information, geographic coordinate information of each cell in the area, frequency resource related information used by each cell in the area, Physical Cell Identifier (PCI) information used by each cell in the area, Cell Global Identifier (CGI) information used by each cell in the area, coverage range information of each cell in the area, historical load information of each cell in the area, service type supported by each cell in the area, or slice type information supported by each cell in the area.

Alternatively, the aforementioned cell deployment related information may be provided by the network device through a common signaling and/or a dedicated signaling. Or, the aforementioned cell deployment related information may be provided by a second terminal device through at least one of a unicast signaling, a multicast signaling, or a broadcast signaling.

The AI/ML algorithm or AI/ML model corresponding to the terminal device may output at least one of the following items: reselection path information of desired cell selection; an updated AI algorithm; a modification strategy for an AI algorithm input parameter; a modification strategy for an AI algorithm output parameter; or decision information of determining a target cell during the cell selection reselection process.

Alternatively, the application scenario identification information corresponding to the AI/ML algorithm or the AI/ML model may indicate the application scenario of the AI/ML algorithm or the AI/ML model.

It should be noted that in any one embodiment of the present disclosure, the description of the target AI/ML entity (e.g., the description of at least one of the intra-node AI/ML entity, the cross-node AI/ML entity, the central entity, the sub-entity, or the specific entity) may be applied to at least one of the management device, the core network device, the access network device, or the terminal device, unless otherwise specified.

FIG. 14 is a schematic flowchart of a communication method according to an embodiment of the present disclosure. As illustrated in FIG. 14, the communication method includes the following act.

At block S1401, a communication device performs an AI/ML related task corresponding to the communication device.

Alternatively, the AI/ML related task corresponding to the communication device includes at least one of the following:
an AI/ML related task generated by the communication device;
an AI/ML related task requested by a target AI/ML entity deployed in a device other than the communication device;
an AI/ML related task transmitted by a target AI/ML entity deployed in a device other than the communication device; or
training, reasoning or monitoring an AI/ML model in the communication device.

Alternatively, the communication device may be one of the following: a management device, a core network device, an access network device, or a terminal device.

Alternatively, the AI/ML related task includes at least one of the following: a data management task, a storage management task, a computing power management task, or a model management task.

Alternatively, the task includes at least one of the following:
a data management task, which includes at least one of the following: data collection, data storage, data modification, data update, data deletion, data replication, or data forwarding;
a storage management task, which includes at least one of the following: remaining storage size indication, storage reservation, storage allocation, storage sharing, storage recovery, or storage formatting;
a computing power management task, which includes at least one of the following: remaining computing power indication, computing power reservation, computing power allocation, computing power sharing, or computing power recovery;
a model management task, which includes at least one of the following: model training, model verification, model testing, model deployment, model replication, model forwarding, model inference, model monitoring, model update, model activation, model deactivation, model deletion, or model switching.

FIG. 15 is a schematic structural diagram of a communication apparatus according to an embodiment of the present disclosure. As illustrated in FIG. 15, the communication apparatus 1500 may include an execution unit 1501.

The execution unit 1501 is configured to perform an AI/ML related task corresponding to the communication apparatus.

Alternatively, the AI/ML related task corresponding to the communication apparatus includes at least one of the following:
an AI/ML related task generated by the communication apparatus;
an AI/ML related task requested by a target AI/ML entity deployed in a device other than the communication apparatus;
an AI/ML related task transmitted by a target AI/ML entity deployed in a device other than the communication apparatus; or
training, reasoning or monitoring an AI/ML model in the communication apparatus.

Alternatively, the communication apparatus may include a communication unit. The communication unit may be configured to receive a task requested by a target AI/ML entity deployed in a device other than the communication apparatus, and/or transmit a task to the target AI/ML entity deployed in the device other than the communication apparatus.

Alternatively, the communication apparatus may include a training unit. The training unit may be configured to train the AI/ML model in the communication apparatus.

Alternatively, the communication apparatus may include an inference unit. The inference unit may be configured to perform inference for the AI/ML model in the communication apparatus.

Alternatively, the communication apparatus may include a monitoring unit. The monitoring unit may be configured to monitor the AI/ML model in the communication apparatus.

Alternatively, the communication apparatus may be applied to one of the following: a management device, a core network device, an access network device, or a terminal device.

Alternatively, the task may include at least one of the following: a data management task, a storage management task, a computing power management task, or a model management task.

The data management task may include at least one of the following: data collection, data storage, data modification, data update, data deletion, data replication, or data forwarding.

The storage management task may include at least one of the following: remaining storage size indication, storage reservation, storage allocation, storage sharing, storage recovery, or storage formatting.

The computing power management task may include at least one of the following tasks: remaining computing power indication, computing power reservation, computing power allocation, computing power sharing, or computing power recovery.

The model management task may include at least one of the following: model training, model verification, model testing, model deployment, model replication, model forwarding, model inference, model monitoring, model update, model activation, model deactivation, model deletion, or model switching.

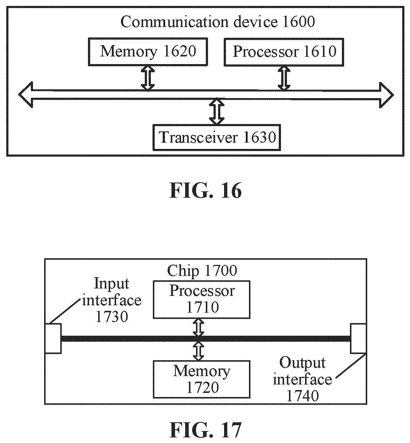

FIG. 16 is a schematic structural diagram of a communication device according to an embodiment of the present disclosure. The communication device 1600 may include one of the following: a management device, a core network device, an access network device, or a terminal device. The communication device 1600 illustrated in FIG. 16 includes a processor 1610 and a memory 1620. The memory 1620 is configured to store a computer program executable on the processor 1610. When executing the program, the processor 1620 is configured to implement the communication method in any of the embodiments described above.

Alternatively, the memory 1620 may be a separate device independent of the processor 1610 or may be integrated in the processor 1610.

In some embodiments, as illustrated in FIG. 16, the communication device 1600 may further include a transceiver 1630. The processor 1610 may control the transceiver 1630 to communicate with other devices. Specifically, the transceiver 1630 may transmit information or data to the other devices, or receive information or data transmitted by the other devices.

Herein, the transceiver 1630 may include a transmitter and a receiver. The transceiver 1630 may further include one or more antennas.

Embodiments of the present disclosure further provide a computer storage medium. One or more programs are stored in the computer storage medium, and the one or more programs may be executed by one or more processors to implement the communication method in any embodiment of the present disclosure.

In some embodiments, the computer readable storage medium may be applied to the management device, the core network device, the access network device, or the terminal device in the embodiments of the present disclosure. Moreover, the computer program causes the computer to perform the corresponding processes implemented by the management device, the core network device, the access network device, or the terminal device in the respective methods of the embodiments of the present disclosure, which will not be described herein for the sake of brevity.

FIG. 17 is a schematic structural diagram of a chip according to an embodiment of the present disclosure. The chip 1700 illustrated in FIG. 17 includes a processor 1710. Herein, the processor 1710 is configured to invoke and execute a computer program from a memory to implement the method of any embodiment of the present disclosure.

In some embodiments, as illustrated in FIG. 17, the chip 1700 may further include a memory 1720. The processor 1710 may invoke and execute a computer program from the memory 1720 to implement the methods in the embodiments of the present disclosure.

The memory 1720 may be a separate device independent of the processor 1710 or may be integrated in the processor 1710.

In some embodiments, the chip 1700 may further include an input interface 1730. The processor 1710 may control the input interface 1730 to communicate with other devices or chips. Specifically, the input interface 1730 may acquire information or data transmitted by the other devices or chips.

In some embodiments, the chip 1700 may further include an output interface 1740. The processor 1710 may control the output interface 1740 to communicate with other devices or chips. Specifically, the output interface 1740 may output information or data to the other devices or chips.

In some embodiments, the chip may be applied to at least one of the management device, the core network device, the access network device, or the terminal device in the embodiments of the present disclosure. The chip may implement the corresponding processes implemented by at least one of the management device, the core network device, the access network device, or the terminal device in the respective methods of the embodiments of the present disclosure, which will not be repeated here for the sake of brevity.

It should be understood that the chip mentioned in the embodiments of the present disclosure may also be referred to as a system level chip, a system chip, a chip system or a system-on-chip or the like.

Embodiments of the present disclosure further provide a computer program product including a computer storage medium. The computer storage medium stores a computer program including instructions executable by at least one processor. When being executed by the at least one processor, the instructions cause the at least one processor to implement the communication method in any embodiment of the present disclosure.

In some embodiments, the computer program product can be applied to the management device, the core network device, the access network device, or the terminal device in the embodiments of the present disclosure. The computer program instructions cause the computer to perform the corresponding processes implemented by the management device, the core network device, the access network device, or the terminal device in the respective methods of the embodiments of the present disclosure, which will not be repeated herein for the sake of brevity.

Alternatively, the computer program product in the embodiment of the present disclosure may also be referred to as a software product in other embodiments.

The embodiments of the present disclosure further provide a computer program that causes a computer to perform the communication method in any one of the embodiments of the present disclosure.

In some embodiments, the computer program may be applied to the management device, the core network device, the access network device, or the terminal device in the embodiments of the present disclosure. When being executed on the computer, the computer program causes the computer to perform the corresponding processes implemented by the management device, the core network device, the access network device, or the terminal device in the respective methods of the embodiments of the present disclosure, which will not be described herein for the sake of brevity.

Those skilled in the art should understand that the related descriptions of the above-described communication method, communication apparatus, communication device, computer storage medium, chip, computer program product, and computer program of the embodiments of the present disclosure may be understood with reference to the related descriptions of the management device, the core network device, the access network device, or the terminal device of the embodiments of the present disclosure.

The preferred embodiments of the present disclosure have been described in details above with reference to the accompanying drawings, but the present disclosure is not limited to the specific details in the aforementioned embodiments. Within the scope of the technical concept of the present disclosure, various simple modifications can be made to the technical solutions of the present disclosure, and such simple modifications all fall within the scope of protection of the present disclosure. For example, various specific technical features described in the aforementioned detailed embodiments can be combined in any suitable manner without contradiction. In addition, various possible combinations will not be described separately in the present disclosure in order to avoid unnecessary repetition. For example, various embodiments of the present disclosure may be combined arbitrarily, and as long as they do not violate the idea of the present disclosure, they should also be regarded as contents of the present disclosure. For another example, on the premise that there is no conflict, various embodiments described in the present disclosure and/or the technical features in various embodiments can be arbitrarily combined with the related art, and the technical solutions obtained after the combination should also fall within the scope of protection of the present disclosure.

It should also be understood that, in the embodiments of the present disclosure, the term "and/or" is only used for describing an association relationship between association objects, which indicates that there may be three relationships. Specifically, A and/or B may represent the following three cases: A exists alone, A and B exist simultaneously, and B exists alone. In addition, the character *"*/*"* in the present disclosure generally indicates that there is "or" relationship between the association objects.

Each of the target AI/ML entities, the processor, the communication apparatus, or the chip according to the embodiments of the present disclosure may be an integrated circuit chip with signal processing capabilities. In the implementation process, the operations of the aforementioned method embodiments may be completed by integrated logic circuits of hardware in the processor or instructions in the form of software. The processor, the communication apparatus, or the chip described above may include an integration of any one or more of the following: a general purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing units (NPU), a controller, a microcontroller, a microprocessor, a programmable logic device, a discrete gate or transistor logic device, or a discrete hardware component. Various methods, operations, and logical block diagrams disclosed in the embodiments of the present disclosure may be implemented or executed. The general purpose processor may be a microprocessor, or the processor may also be any conventional processor or the like. The operations of the method disclosed with reference to the embodiments of the present disclosure may be directly embodied as execution by a hardware decoding processor, or may be executed by combining hardware and software modules in a decoding processor. The software module may be located in a Random Access Memory (RAM), a flash memory, a Read-Only Memory (ROM), a Programmable ROM (PROM), an electrically erasable PROM (EEPROM), a register or other storage medium mature in the art. The storage medium is located in the memory, and the processor reads the information in the memory and further completes the operations of the methods in combination with the hardware.

It is understood that the memory or computer storage medium in the embodiments of the present disclosure may be a volatile memory or a non-volatile memory, or may include both the volatile memory and the non-volatile memory. The non-volatile memory may be a ROM, a PROM, an Erasable PROM (EPROM), an EEPROM, or a flash memory. The volatile memory may be a RAM, which serves as an external cache. By way of illustration, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) and Direct Rambus RAM (DR RAM). It should be noted that the memory of the systems and methods described herein is intended to include, but is not limited to, these and any other suitable type of memory. It should be understood that the aforementioned memory or computer storage medium is exemplary, but not limiting. For example, the memory in the embodiments of the present disclosure may also be an SRAM, a DRAM, an SDRAM, a DDR SDRAM, an ESDRAM, an SLDRAM, a DR RAM, etc. That is, the memory in the embodiments of the present disclosure is intended to include but not limited to these and any other suitable types of memories.

Those of ordinary skill in the art will appreciate that various exemplary units and algorithm steps described in combination with the embodiments disclosed herein may be implemented in an electronic hardware or a combination of a computer software and an electronic hardware. Whether such functions are performed in hardware or software depends on the specific applications and design constraints of the technical solutions. Professionals may use different methods for each of the specific applications to implement the described functions, but such implementation should not be deemed outside the scope of the present disclosure.

Those skilled in the art will clearly appreciate that, for convenience and conciseness of description, the specific operating processes of the systems, apparatuses and units described above may refer to the corresponding processes in the aforementioned method embodiments, which will not be described herein for the sake of brevity.

In several embodiments provided in the present disclosure, it should be understood that the disclosed systems, apparatuses and methods may be implemented in other manners. For example, the above embodiments of the apparatuses are only schematic, e.g., the division of the units is only a logical function division, and in practice, there may be another division mode. For example, multiple units or components may be combined or integrated into another system, or some features may be ignored or not performed. On the other hand, the coupling, direct coupling or communication connection between each other shown or discussed may be indirect coupling or communication connection through some interfaces, apparatuses or units, and may be electrical, mechanical or other form.

The unit illustrated as a separate component may or may not be physically separated. Moreover, the component displayed as a unit may or may not be a physical unit, i.e., may be located in one place, or may be distributed over multiple network units. Part or all of the units may be selected according to actual needs, to achieve the technical solutions of the embodiments.

In addition, various functional units in various embodiments of the present disclosure may be integrated in one processing unit, each unit may exist physically alone, or two or more units may be integrated in one unit.

When implemented in the form of software functional units, and sold or used as stand-alone products, the functions may be stored in a computer readable storage medium. With such understanding, the technical solutions of the present disclosure in essence or in part contributing to the related art may be embodied in the form of a software product. The computer software product is stored in a storage medium, and includes instructions for causing a computer device (which may be a personal computer, a server, a network device, etc.), to perform all or part of the steps of the methods described in various embodiments of the present disclosure. The aforementioned storage medium includes a U disk, a removable hard disk, a ROM, a RAM, a magnetic disk or an optical disk, and other medium capable of storing program codes.

The above is only the specific embodiments of the present disclosure, but the scope of protection of the present disclosure is not limited thereto. Any technical person familiar with the technical field can easily think of changes or substitutions within the technical scope disclosed in the present disclosure, which should be covered within the scope of protection of the present disclosure. Therefore, the scope of protection of the present disclosure shall be subject to the scope of protection of the claims.

## Claims

1. A management device comprising at least one target Artificial Intelligence (Al)/Machine Learning (ML) entity, wherein each target AI/ML entity is configured to perform an AI/ML related task corresponding to the management device.

2. The management device of claim 1, wherein the at least one target AI/ML entity comprises at least one intra-node AI/ML entity and/or at least one cross-node AI/ML entity, and each cross-node AI/ML entity or each intra-node AI/ML entity is configured to process at least one of:
a task requested by a non-target AI/ML entity in the management device;
a task generated by the cross-node AI/ML entity or the intra-node AI/ML entity;
a task requested by other cross-node AI/ML entity deployed in the management device;
a task requested by other intra-node AI/ML entity deployed in the management device; or
a task requested by a target AI/ML entity deployed in a device other than the management device.

3. The management device of claim 1 or 2, wherein any two cross-node AI/ML entities deployed in the management device directly communicate with each other through an interface protocol; or
the management device comprises at least one central entity, and any two cross-node AI/ML entities deployed in the management device indirectly communicate with each other through one or more central entities; or
any one intra-node AI/ML entity and a cross-node AI/ML entity that are deployed in the management device directly communicate through an interface protocol; or
the management device comprises at least one central entity, and any one intra-node AI/ML entity and a cross-node AI/ML entity that are deployed in the management device indirectly communicate through one or more central entities; or
any two intra-node AI/ML entities deployed in the management device directly communicate with each other through an interface protocol; or
the management device comprises at least one central entity, and any two intra-node AI/ML entities deployed in the management device indirectly communicate with each other through one or more central entities.

4. The management device of any one of claims 1 to 3, wherein a cross-node AI/ML entity deployed in the management device and a target AI/ML entity deployed in a device other than the management device directly communicate through an interface protocol; and/or
a cross-node AI/ML entity deployed in the management device and a target AI/ML entity deployed in a device other than the management device indirectly communicate through a cross-node AI/ML entity deployed in the device other than the management device; and/or
an intra-node AI/ML entity deployed in the management device and a target AI/ML entity deployed in a device other than the management device directly communicate through an interface protocol; and/or
an intra-node AI/ML entity deployed in the management device and a target AI/ML entity deployed in a device other than the management device indirectly communicate through a cross-node AI/ML entity deployed in the device other than the management device.

5. The management device of any one of claims 1 to 4, wherein the at least one target AI/ML entity comprises at least one central entity and at least one sub-entity, and each central entity is associated with one or more sub-entities;
wherein any one central entity is configured to at least one of:
process a task requested by a non-target AI/ML entity in the management device;
process a task requested by other central entity deployed in the management device;
process a task requested by a sub-entity deployed in the management device;
forward a task triggered or responded by a target AI/ML entity deployed in a device other than the management device to one or more sub-entities corresponding to the target AI/ML entity deployed in the device other than the management device; or
forward one or more tasks triggered or responded by one or more sub-entities to a target AI/ML entity deployed in a device other than the management device corresponding to the one or more sub-entities.

6. The management device of claim 5, wherein the any one central entity is further configured to at least one of:
forward a task transmitted by an intra-node AI/ML entity deployed in the device other than the management device to one or more sub-entities in the management device associated with the intra-node AI/ML entity that transmits the task;
forward a task transmitted by a cross-node AI/ML entity deployed in the device other than the management device to one or more sub-entities in the management device associated with the cross-node AI/ML entity that transmits the task;
forward a task transmitted by an intra-node AI/ML entity deployed in the device other than the management device to one or more sub-entities in the management device associated with a type of the task; or
forward a task transmitted by a cross-node AI/ML entity deployed in the device other than the management device to one or more sub-entities in the management device associated with a type of the task.

7. The management device of claim 5 or 6, wherein the central entity deployed in the management device and the target AI/ML entity deployed in the device other than the management device directly communicate through an interface protocol, and/or
the central entity deployed in the management device and the target AI/ML entity deployed in the device other than the management device indirectly communicate through a cross-node AI/ML entity deployed in the device other than the management device.

8. The management device of any one of claims 5 to 7, wherein any two central entities deployed in the management device directly communicate with each other through an interface protocol; or
any two central entities deployed in the management device indirectly communicate with each other through a specific entity; or
a part of the central entities deployed in the management device directly communicate with each other through an interface protocol, and another part of the central entities indirectly communicate with each other through a specific entity.

9. The management device of any one of claims 1 to 8, wherein a communication connection between any one intra-node AI/ML entity deployed in the management device and one or more cross-node AI/ML entities deployed in the management device exists, or a communication connection between any one intra-node AI/ML entity deployed in the management device and one or more cross-node AI/ML entities deployed in the management device does not exist; and/or
a communication connection between any one intra-node AI/ML entity deployed in the management device and one or more central entities deployed in the management device exists, or a communication connection between any one intra-node AI/ML entity deployed in the management device and one or more central entities deployed in the management device does not exist; and/or
a communication connection between any one intra-node AI/ML entity deployed in the management device and one or more sub-entities deployed in the management device exists, or a communication connection between any one intra-node AI/ML entity deployed in the management device and one or more sub-entities deployed in the management device does not exist; and/or
a communication connection between any one cross-node AI/ML entity deployed in the management device and one or more central entities deployed in the management device exists, or a communication connection between any one cross-node AI/ML entity deployed in the management device and one or more central entities deployed in the management device does not exist; and/or
a communication connection between any one cross-node AI/ML entity deployed in the management device and one or more sub-entities deployed in the management device exists, or a communication connection between any one cross-node AI/ML entity deployed in the management device and one or more sub-entities deployed in the management device does not exist.

10. The management device of any one of claims 1 to 9, wherein an intra-node AI/ML entity, a cross-node AI/ML entity, a central entity, a sub-entity, or a specific entity deployed in the management device comprises at least one of:
a data management unit, configured to perform at least one of: data collection, data storage, data modification, data update, data deletion, data replication, or data forwarding;
a storage management unit, configured to perform at least one of: remaining storage size indication, storage reservation, storage allocation, storage sharing, storage recovery, or storage formatting;
a computing power management unit, configured to perform at least one of: remaining computing power indication, computing power reservation, computing power allocation, computing power sharing, or computing power recovery;
a model management unit, configured to perform at least one of: model training, model verification, model testing, model deployment, model replication, model forwarding, model inference, model monitoring, model update, model activation, model deactivation, model deletion, or model switching; or
a task management unit, configured to perform at least one of: task generation, task acceptance, task rejection, task splitting, task allocation, task monitoring, task update, or task deletion.

11. The management device of any one of claims 1 to 10, wherein an intra-node AI/ML entity deployed in the management device is configured to at least one of:
transmit a task to a first designated AI/ML entity, allocate a task to a first designated AI/ML entity, or forward a task to a first designated AI/ML entity;
receive and process a task transmitted by a first designated AI/ML entity, a task allocated by a first designated AI/ML entity, or a task forwarded by a first designated AI/ML entity; or
forward a task transmitted by a first designated AI/ML entity, a task allocated by a first designated AI/ML entity, or a task forwarded by a first designated AI/ML entity;
wherein the first designated AI/ML entity comprises at least one of: other intra-node AI/ML entity deployed in the management device, a cross-node AI/ML entity deployed in the management device, a central entity deployed in the management device, a sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

12. The management device of any one of claims 1 to 11, wherein a cross-node AI/ML entity deployed in the management device is configured to at least one of:
transmit a task to a second designated AI/ML entity, allocate a task to a second designated AI/ML entity, or forward a task to a second designated AI/ML entity;
receive and process a task transmitted by a second designated AI/ML entity, a task allocated by a second designated AI/ML entity, or a task forwarded by a second designated AI/ML entity; or
forward a task transmitted by a second designated AI/ML entity, a task allocated by a second designated AI/ML entity, or a task forwarded by a second designated AI/ML entity;
wherein the second designated AI/ML entity comprises at least one of: an intra-node AI/ML entity deployed in the management device, other cross-node AI/ML entity deployed in the management device, a central entity deployed in the management device, a sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

13. The management device of any one of claims 1 to 12, wherein a central entity deployed in the management device is configured to at least one of:
transmit a task to a third designated AI/ML entity, allocate a task to a third designated AI/ML entity, or forward a task to a third designated AI/ML entity;
receive and process a task transmitted by a third designated AI/ML entity, a task allocated by a third designated AI/ML entity, or a task forwarded by a third designated AI/ML entity; or
forward a task transmitted by a third designated AI/ML entity, a task allocated by a third designated AI/ML entity, or a task forwarded by a third designated AI/ML entity;
wherein the third designated AI/ML entity comprises at least one of: an intra-node AI/ML entity deployed in the management device, a cross-node AI/ML entity deployed in the management device, other central entity deployed in the management device, a sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

14. The management device of any one of claims 1 to 13, wherein a sub-entity deployed in the management device is configured to at least one of:
transmit a task to a fourth designated AI/ML entity, allocate a task to a fourth designated AI/ML entity, or forward a task to a fourth designated AI/ML entity;
receive and process a task transmitted by a fourth designated AI/ML entity, a task allocated by a fourth designated AI/ML entity, or a task forwarded by a fourth designated AI/ML entity; or
forward a task transmitted by a fourth designated AI/ML entity, a task allocated by a fourth designated AI/ML entity, or a task forwarded by a fourth designated AI/ML entity;
wherein the fourth designated AI/ML entity comprises at least one of: an intra-node AI/ML entity deployed in the management device, a cross-node AI/ML entity deployed in the management device, a central entity deployed in the management device, other sub-entity deployed in the management device, an intra-node AI/ML entity deployed in a device other than the management device, a cross-node AI/ML entity deployed in a device other than the management device, a central entity deployed in a device other than the management device, or a sub-entity deployed in a device other than the management device.

15. The management device of claims 1 to 14, wherein a specific entity deployed in the management device is configured to at least one of:
transmit a task to a central entity deployed in the management device, allocate a task to a central entity deployed in the management device, or forward a task to a central entity deployed in the management device;
receive and process a task transmitted by a central entity deployed in the management device, a task allocated by a central entity deployed in the management device, or a task forwarded by a central entity deployed in the management device; or
forward a task transmitted by a central entity deployed in the management device, a task allocated by a central entity deployed in the management device, or a task forwarded by a central entity deployed in the management device.

16. The management device of any one of claims 1 to 15, wherein the task comprises at least one of:
a data management task comprising at least one of: data collection, data storage, data modification, data update, data deletion, data replication, or data forwarding;
a storage management task comprising at least one of: remaining storage size indication, storage reservation, storage allocation, storage sharing, storage recovery, or storage formatting;
a computing power management task comprising at least one of: remaining computing power indication, computing power reservation, computing power allocation, computing power sharing, or computing power recovery; or
a model management task comprising at least one of: model training, model verification, model testing, model deployment, model replication, model forwarding, model inference, model monitoring, model update, model activation, model deactivation, model deletion, or model switching.

17. The management device of any one of claims 1 to 16, wherein a target AI/ML entity that is newly joined or newly activated in the management device transmits an initialization message to at least one deployed AI/ML entity;
wherein the initialization message comprises at least one piece of following information of the target AI/ML entity that is newly joined or newly activated: communication address information, identification information, supported function range information, or deployment location information; and
the at least one deployed AI/ML entity comprises one or more target AI/ML entities that have been deployed in the management device, and/or one or more target AI/ML entities that have been deployed in a device other than the management device.

18. The management device of claim 17, wherein any one deployed AI/ML entity transmits a first response message or a second response message to the target AI/ML entity that is newly joined or newly activated; and
the first response message is used to indicate acceptance of the target AI/ML entity that is newly joined or newly activated, and the second response message is used to indicate rejection of the target AI/ML entity that is newly joined or newly activated.

19. The management device of claim 18, wherein the first response message comprises at least one piece of following information of the any one deployed AI/ML entity: communication address information, identification information, supported function range information, or deployment location information; and
the second response message comprises rejection reason information and/or rejection duration information.

20. The management device of any one of claims 1 to 19, wherein any one target AI/ML entity deployed in the management device transmits a first notification message to at least one fifth designated AI/ML entity, and the first notification message is used to indicate the any one target AI/ML entity to perform a deactivation operation or a deletion operation of the any one target AI/ML entity;
wherein in a case that the any one target AI/ML entity receives an acknowledgement message transmitted by each fifth designated AI/ML entity, the any one target AI/ML entity performs the deactivation operation or the deletion operation of the any one target AI/ML entity;
wherein the fifth designated AI/ML entity comprises: other target AI/ML entity deployed in the management device that has a communication connection with the any one target AI/ML entity, and/or a target AI/ML entity deployed in a device other than the management device that has a communication connection with the any one target AI/ML entity.

21. The management device of any one of claims 1 to 20, wherein any one target AI/ML entity deployed in the management device receives a second notification message transmitted by a fifth designated AI/ML entity, and the second notification message is used to indicate deactivation or deletion of the any one target AI/ML entity;
wherein the any one target AI/ML entity performs, based on the second notification message, a deactivation operation or a deletion operation of the any one target AI/ML entity;
wherein the fifth designated AI/ML entity comprises: other target AI/ML entity deployed in the management device that has a communication connection with the any one target AI/ML entity, and/or a target AI/ML entity deployed in a device other than the management device that has a communication connection with the any one target AI/ML entity.

22. The management device of any one of claims 1 to 21, wherein the management device is enabled to transmit capability information to a communication node deployed in a device other than the management device, or the management device is enabled to receive capability information transmitted by a communication node deployed in a device other than the management device;
wherein the capability information indicates at least one of:
whether to support to deploy an intra-node AI/ML entity;
whether to support to deploy a cross-node AI/ML entity;
a maximum number of intra-node AI/ML entities that are supported;
a maximum number of cross-node AI/ML entities that are supported;
a maximum number of sub-entities that are supported;
a target unit and/or a protocol layer entity of an intra-node AI/ML entity that is able to be deployed in the communication node;
a target unit and/or a protocol layer entity of an intra-node AI/ML entity that is unable to be deployed in the communication node;
a communication node and/or a management device in which at least one of an intra-node AI/ML entity or a cross-node AI/ML entity is able to be deployed simultaneously; or
a communication node and/or a management device in which at least one of an intra-node AI/ML entity or a cross-node AI/ML entity is unable to be deployed simultaneously;
wherein the communication node deployed in the device other than the management device comprises at least one of: a communication node in a core network device, a communication node in an access network device, a target unit in an access network device, a protocol layer entity in an access network device, a terminal device, or a protocol layer entity in a terminal device.

23. A core network device comprising at least one target Artificial Intelligence (Al)/Machine Learning (ML) entity, wherein each target AI/ML entity is configured to perform an AI/ML related task corresponding to the core network device.

24. The core network device of claim 23, wherein the target AI/ML entity comprises an intra-node AI/ML entity, and the core network device further comprises at least one communication node;
wherein one or more intra-node AI/ML entities are deployed in each communication node, and
each intra-node AI/ML entity is configured to perform an AI/ML related task corresponding to the communication node.

25. The core network device of claim 23 or 24, wherein the target AI/ML entity comprises a cross-node AI/ML entity, and the core network device further comprises at least one communication node;
wherein each cross-node AI/ML entity has a communication connection with one or more communication nodes; and
each cross-node AI/ML entity is configured to perform an AI/ML related task corresponding to the one or more communication nodes.

26. The core network device of any one of claims 23 to 25, further comprising at least one communication node, wherein the at least one target AI/ML entity comprises at least one intra-node AI/ML entity and at least one cross-node AI/ML entity;
wherein one or more intra-node AI/ML entities are comprised in any one communication node, and each intra-node AI/ML entity is configured to perform an AI/ML related task corresponding to the communication node; and
a communication connection between each cross-node AI/ML entity and one or more intra-node AI/ML entities exists, and each cross-node AI/ML entity is configured to perform one or more AI/ML related tasks corresponding to one or more communication nodes.

27. The core network device of claim 24 or 26, wherein intra-node AI/ML entities deployed in any two communication nodes in the core network device directly communicate with each other through an interface protocol; or
intra-node AI/ML entities deployed in any two communication nodes in the core network device indirectly communicate with each other through one or more cross-node AI/ML entities; or
intra-node AI/ML entities deployed in a part of the communication nodes in the core network device directly communicate with each other through an interface protocol, and intra-node AI/ML entities deployed in another part of the communication nodes in the core network device indirectly communicate with each other through one or more cross-node AI/ML entities.

28. The core network device of claim 25 or 26, wherein any two cross-node AI/ML entities in the core network device directly communicate with each other through an interface protocol; or
the core network device comprises at least one central entity, and any two cross-node AI/ML entities deployed in the core network device indirectly communicate with each other through one or more central entities; or
the core network device comprises at least one central entity, a part of the cross-node AI/ML entities in the core network device directly communicate with each other through an interface protocol, and another part of the cross-node AI/ML entities indirectly communicate with each other through one or more central entities.

29. The core network device of any one of claims 24 to 28, wherein a cross-node AI/ML entity deployed in the core network device and a target AI/ML entity deployed in a device other than the core network device directly communicate through an interface protocol; and/or
a cross-node AI/ML entity deployed in the core network device and a target AI/ML entity deployed in a device other than the core network device indirectly communicate through a cross-node AI/ML entity deployed in the device other than the core network device; and/or
an intra-node AI/ML entity deployed in the core network device and a target AI/ML entity deployed in a device other than the core network device directly communicate through an interface protocol; and/or
an intra-node AI/ML entity deployed in the core network device and a target AI/ML entity deployed in a device other than the core network device indirectly communicate through a cross-node AI/ML entity deployed in the core network device and/or a cross-node AI/ML entity deployed in the device other than the core network device.

30. The core network device of any one of claims 24 to 29, wherein each cross-node AI/ML entity or each intra-node AI/ML entity is configured to process at least one of:
a task requested by at least one communication node comprised in the core network device;
a task generated by the cross-node AI/ML entity or the intra-node AI/ML entity;
a task requested by other cross-node AI/ML entity deployed in the core network device;
a task requested by other intra-node AI/ML entity deployed in the core network device; or
a task requested by a target AI/ML entity deployed in a device other than the core network device.

31. The core network device of any one of claims 23 to 30, wherein the at least one target AI/ML entity comprises at least one central entity and at least one sub-entity, and each central entity is associated with one or more sub-entities,
wherein any one central entity is configured to at least one of:
process a task requested by at least one communication node comprised in the core network device;
process a task requested by other central entity deployed in the core network device;
process a task requested by a sub-entity deployed in the core network device;
forward a task triggered or responded by an intra-node AI/ML entity or a cross-node AI/ML entity deployed in the core network device to one or more sub-entities deployed in the core network device, or to a target AI/ML entity deployed in a device other than the core network device; or
forward a task triggered or responded by one or more sub-entities deployed in the core network device or a target AI/ML entity deployed in a device other than the core network device to an intra-node AI/ML entity or a cross-node AI/ML entity deployed in the core network device.

32. The core network device of claim 31, wherein the any one central entity is configured to at least one of:
forward the task triggered or responded by the intra-node AI/ML entity deployed in the core network device to one or more sub-entities in the core network device associated with the intra-node AI/ML entity that triggers or responds to the task;
forward the task triggered or responded by the cross-node AI/ML entity deployed in the core network device to one or more sub-entities in the core network device associated with the cross-node AI/ML entity that triggers or responds the task;
forward the task triggered or responded by the intra-node AI/ML entity deployed in the core network device to one or more sub-entities in the core network device associated with a type of the task;
forward the task triggered or responded by the cross-node AI/ML entity deployed in the core network device to one or more sub-entities in the core network device associated with a type of the task;
forward a task transmitted by an intra-node AI/ML entity deployed in the device other than the core network device to one or more sub-entities in the core network device associated with the intra-node AI/ML entity that transmits the task;
forward a task transmitted by a cross-node AI/ML entity deployed in the device other than the core network device to one or more sub-entities in the core network device associated with the cross-node AI/ML entity that transmits the task;
forward a task transmitted by an intra-node AI/ML entity deployed in the device other than the core network device to one or more sub-entities in the core network device associated with a type of the task; or
forward a task transmitted by a cross-node AI/ML entity deployed in the device other than the core network device to one or more sub-entities in the core network device associated with a type of the task.

33. The core network device of claim 31 or 32, wherein the central entity deployed in the core network device and the target AI/ML entity deployed in the device other than the core network device directly communicate through an interface protocol, and/or the central entity deployed in the core network device and the target AI/ML entity deployed in the device other than the core network device indirectly communicate through a cross-node AI/ML entity deployed in the device other than the core network device.

34. The core network device of any one of claims 31 to 33, wherein any two central entities deployed in the core network device directly communicate with each other through an interface protocol; or
any two central entities deployed in the core network device indirectly communicate with each other through a specific entity; or
a part of the central entities deployed in the core network device directly communicate with each other through an interface protocol, and another part of the central entities deployed in the core network device indirectly communicate with each other through a specific entity.

35. The core network device of any one of claims 23 to 34, wherein an intra-node AI/ML entity, a cross-node AI/ML entity, a central entity, a sub-entity, or a specific entity deployed in the core network device comprises at least one of:
a data management unit, configured to perform at least one of: data collection, data storage, data modification, data update, data deletion, data replication, or data forwarding;
a storage management unit, configured to perform at least one of: remaining storage size indication, storage reservation, storage allocation, storage sharing, storage recovery, or storage formatting;
a computing power management unit, configured to perform at least one of: remaining computing power indication, computing power reservation, computing power allocation, computing power sharing, or computing power recovery;
a model management unit, configured to perform at least one of: model training, model verification, model testing, model deployment, model replication, model forwarding, model inference, model monitoring, model update, model activation, model deactivation, model deletion, or model switching; or
a task management unit, configured to perform at least one of: task generation, task acceptance, task rejection, task splitting, task allocation, task monitoring, task update, or task deletion.

36. The core network device of any one of claims 23 to 35, wherein an intra-node AI/ML entity deployed in the core network device is configured to at least one of:
transmit a task to a sixth designated AI/ML entity, allocate a task to a sixth designated AI/ML entity, or forward a task to a sixth designated AI/ML entity;
receive and process a task transmitted by a sixth designated AI/ML entity, a task allocated by a sixth designated AI/ML entity, or a task forwarded by a sixth designated AI/ML entity; or
forward a task transmitted by a sixth designated AI/ML entity, a task allocated by a sixth designated AI/ML entity, or a task forwarded by a sixth designated AI/ML entity;
wherein the sixth designated AI/ML entity comprises at least one of: other intra-node AI/ML entity deployed in the core network device, a cross-node AI/ML entity deployed in the core network device, a central entity deployed in the core network device, a sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

37. The core network device of any one of claims 23 to 36, wherein a cross-node AI/ML entity deployed in the core network device is configured to at least one of:
transmit a task to a seventh designated AI/ML entity, allocate a task to a seventh designated AI/ML entity, or forward a task to a seventh designated AI/ML entity;
receive and process a task transmitted by a seventh designated AI/ML entity, a task allocated by a seventh designated AI/ML entity, or a task forwarded by a seventh designated AI/ML entity; or
forward a task transmitted by a seventh designated AI/ML entity, a task allocated by a seventh designated AI/ML entity, or a task forwarded by a seventh designated AI/ML entity;
wherein the seventh designated AI/ML entity comprises at least one of: an intra-node AI/ML entity deployed in the core network device, other cross-node AI/ML entity deployed in the core network device, a central entity deployed in the core network device, a sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

38. The core network device of any of claims 23 to 37, wherein a central entity deployed in the core network device is configured to at least one of:
transmit a task to an eighth designated AI/ML entity, allocate a task to an eighth designated AI/ML entity, or forward a task to an eighth designated AI/ML entity;
receive and process a task transmitted by an eighth designated AI/ML entity, a task allocated by an eighth designated AI/ML entity, or a task forwarded by an eighth designated AI/ML entity; or
forward a task transmitted by an eighth designated AI/ML entity, a task allocated by an eighth designated AI/ML entity, or a task forwarded by an eighth designated AI/ML entity;
wherein the eighth designated AI/ML entity comprises at least one of: an intra-node AI/ML entity deployed in the core network device, a cross-node AI/ML entity deployed in the core network device, other central entity deployed in the core network device, a sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

39. The core network device of any one of claims 23 to 38, wherein a sub-entity deployed in the core network device is configured to at least one of:
transmit a task to a ninth designated AI/ML entity, allocate a task to a ninth designated AI/ML entity, or forward a task to a ninth designated AI/ML entity;
receive and process a task transmitted by a ninth designated AI/ML entity, a task allocated by a ninth designated AI/ML entity, or a task forwarded by a ninth designated AI/ML entity; or
forward a task transmitted by a ninth designated AI/ML entity, a task allocated by a ninth designated AI/ML entity, or a task forwarded by a ninth designated AI/ML entity;
wherein the ninth designated AI/ML entity comprises at least one of: an intra-node AI/ML entity deployed in the core network device, a cross-node AI/ML entity deployed in the core network device, a central entity deployed in the core network device, other sub-entity deployed in the core network device, an intra-node AI/ML entity deployed in a device other than the core network device, a cross-node AI/ML entity deployed in a device other than the core network device, a central entity deployed in a device other than the core network device, or a sub-entity deployed in a device other than the core network device.

40. The core network device of claims 23 to 39, wherein a specific entity deployed in the core network device is configured to at least one of:
transmit a task to a central entity deployed in the core network device, allocate a task to a central entity deployed in the core network device, or forward a task to a central entity deployed in the core network device;
receive and process a task transmitted by a central entity deployed in the core network device, a task allocated by a central entity deployed in the core network device, or a task forwarded by a central entity deployed in the core network device; or
forward a task transmitted by a central entity deployed in the core network device, a task allocated by a central entity deployed in the core network device, or a task forwarded by a central entity deployed in the core network device.

41. The core network device of any one of claims 23 to 40, wherein the task comprises at least one of:
a data management task comprising at least one of: data collection, data storage, data modification, data update, data deletion, data replication, or data forwarding;
a storage management task comprising at least one of: remaining storage size indication, storage reservation, storage allocation, storage sharing, storage recovery, or storage formatting;
a computing power management task comprising at least one of: remaining computing power indication, computing power reservation, computing power allocation, computing power sharing, or computing power recovery; or
a model management task comprising at least one of: model training, model verification, model testing, model deployment, model replication, model forwarding, model inference, model monitoring, model update, model activation, model deactivation, model deletion, or model switching.

42. The core network device of any one of claims 23 to 41, wherein a target AI/ML entity that is newly joined or newly activated in the core network device transmits an initialization message to at least one deployed AI/ML entity;
wherein the initialization message comprises at least one piece of following information of the target AI/ML entity that is newly joined or newly activated: communication address information, identification information, supported function range information, or deployment location information; and
the at least one deployed AI/ML entity comprises one or more target AI/ML entities that have been deployed in the core network device, and/or one or more target AI/ML entities that have been deployed in a device other than the core network device.

43. The core network device of claim 42, wherein any one deployed AI/ML entity transmits a first response message or a second response message to the target AI/ML entity that is newly joined or newly activated,
wherein the first response message is used to indicate acceptance of the target AI/ML entity that is newly joined or newly activated, and the second response message is used to indicate rejection of the target AI/ML entity that is newly joined or newly activated.

44. The core network device of claim 43, wherein the first response message comprises at least one piece of following information of the any one deployed AI/ML entity: communication address information, identification information, supported function range information, or deployment location information; and
the second response message comprises rejection reason information and/or rejection duration information.

45. The core network device of any one of claims 23 to 44, wherein any one target AI/ML entity deployed in the core network device transmits a first notification message to at least one tenth designated AI/ML entity, and the first notification message is used to indicate the any one target AI/ML entity to perform a deactivation operation or a deletion operation of the any one target AI/ML entity;
wherein in a case that the any one target AI/ML entity receives an acknowledgement message transmitted by each tenth designated AI/ML entity, the any one target AI/ML entity performs the deactivation operation or the deletion operation of the any one target AI/ML entity;
wherein the tenth designated AI/ML entity comprises: other target AI/ML entity deployed in the core network device that has a communication connection with the any one target AI/ML entity, and/or a target AI/ML entity deployed in a device other than the core network device that has a communication connection with the any one target AI/ML entity.

46. The core network device of any one of claims 23 to 45, wherein any one target AI/ML entity deployed in the core network device receives a second notification message transmitted by a tenth designated AI/ML entity, and the second notification message is used to indicate deactivation or deletion of the any one target AI/ML entity;
wherein the any one target AI/ML entity performs, based on the second notification message, a deactivation operation or a deletion operation of the any one target AI/ML entity;
wherein the tenth designated AI/ML entity comprises: other target AI/ML entity deployed in the core network device that has a communication connection with the any one target AI/ML entity, and/or a target AI/ML entity deployed in a device other than the core network device that has a communication connection with the any one target AI/ML entity.

47. The core network device of any one of claims 23 to 46, wherein a communication node deployed in the core network device is enabled to transmit capability information to other communication node deployed in the core network device, or a communication node deployed in the core network device is enabled to transmit capability information to a communication node deployed in a device other than the core network device, or a communication node deployed in the core network device is enabled to receive capability information transmitted by a communication node deployed in a device other than the core network device;
wherein the capability information indicates at least one of:
whether to support to deploy an intra-node AI/ML entity;
whether to support to deploy a cross-node AI/ML entity;
a maximum number of intra-node AI/ML entities that are supported;
a maximum number of cross-node AI/ML entities that are supported;
a maximum number of sub-entities that are supported;
a target unit and/or a protocol layer entity of an intra-node AI/ML entity that is able to be deployed in the communication node;
a target unit and/or a protocol layer entity of an intra-node AI/ML entity that is unable to be deployed in the communication node;
a communication node in which at least one of an intra-node AI/ML entity or a cross-node AI/ML entity is able to be deployed simultaneously; or
a communication node in which at least one of an intra-node AI/ML entity or a cross-node AI/ML entity is unable to be deployed simultaneously;
wherein the communication node deployed in the device other than the core network device comprises at least one of: a management device, a communication node in an access network device, a target unit in an access network device, a protocol layer entity in an access network device, a terminal device, or a protocol layer entity in a terminal device;
wherein the communication node deployed in the core network device comprises at least one of: an Access and Mobility Management Function (AMF) network element, a Session Management Function (SMF) network element, a User Plane Function (UPF) network element, a unified data management (UDM) network element, a Policy Control Function (PCF) network element, a Location Management Function (LMF) network element, or an Authentication Server Function (AUSF) network element.

48. An access network device comprising at least one target Artificial Intelligence (Al)/Machine Learning (ML) entity, wherein each target AI/ML entity is configured to perform an AI/ML related task corresponding to the access network device.

49. The access network device of claim 48, wherein the target AI/ML entity comprises an intra-node AI/ML entity, and the access network device further comprises at least one communication node;
wherein the intra-node AI/ML entity comprises at least one of: an access network AI/ML entity, a target unit AI/ML entity, or a protocol layer AI/ML entity; and the target unit comprises at least one of: a Central unit (CU), a Distribute Unit (DU), a Central unit-Control Plane (CU-CP), or a Central unit-User Plane (CU-UP); and
one or more access network AI/ML entities are deployed in the access network device, and/or one or more target unit AI/ML entities are deployed in the target unit in the communication node, and/or one or more protocol layer AI/ML entities are deployed in a protocol layer entity in the communication node;
wherein the access network AI/ML entity is configured to perform an AI/ML related task corresponding to the access network device, the target unit AI/ML entity is configured to perform an AI/ML related task corresponding to the target unit, and the protocol layer AI/ML entity is configured to perform an AI/ML related task corresponding to the protocol layer.

50. The access network device of claim 48 or 49, wherein the target AI/ML entity comprises a cross-node AI/ML entity, and the access network device further comprises at least one communication node;
wherein each cross-node AI/ML entity has a communication connection with one or more communication nodes; and
each cross-node AI/ML entity is configured to perform an AI/ML related task corresponding to the one or more communication nodes.

51. The access network device of any one of claims 48 to 50, further comprising at least one communication node, wherein the at least one target AI/ML entity comprises at least one intra-node AI/ML entity and at least one cross-node AI/ML entity;
wherein the intra-node AI/ML entity comprises at least one of: an access network AI/ML entity, a target unit AI/ML entity, or a protocol layer AI/ML entity; and the target unit comprises at least one of: a Central unit (CU), a Distribute Unit (DU), a Central unit-Control Plane (CU-CP), or a Central unit-User Plane (CU-UP);
wherein one or more access network AI/ML entities are deployed in the access network device, and/or one or more target unit AI/ML entities are deployed in the target unit in the access network device, and/or one or more protocol layer AI/ML entities are deployed in a protocol layer entity in the access network device;
wherein the access network AI/ML entity is configured to perform an AI/ML related task corresponding to the access network device, the target unit AI/ML entity is configured to perform an AI/ML related task corresponding to the target unit, and the protocol layer AI/ML entity is configured to perform an AI/ML related task corresponding to the protocol layer;
wherein a communication connection between each cross-node AI/ML entity and one or more intra-node AI/ML entities exists, and each cross-node AI/ML entity is configured to perform one or more AI/ML related tasks corresponding to one or more communication nodes.

52. The access network device of claim 49 or 51, wherein intra-node AI/ML entities deployed in any two communication nodes in the access network device directly communicate with each other through an interface protocol; or
intra-node AI/ML entities deployed in any two communication nodes in the access network device indirectly communicate with each other through one or more cross-node AI/ML entities; or
intra-node AI/ML entities deployed in a part of the communication nodes in the access network device directly communicate with each other, and intra-node AI/ML entities deployed in another part of the communication nodes in the access network device indirectly communicate with each other through one or more cross-node AI/ML entities.

53. The access network device of claim 49, 51 or 52, wherein any two target unit AI/ML entities deployed in the access network device communicate with each other through one or more access network AI/ML entities; and/or
any two protocol layer AI/ML entities communicate with each other through one or more access network AI/ML entities; and/or
any two protocol layer AI/ML entities communicate with each other through one or more target unit AI/ML entities.

54. The access network device of claim 50 or 51, wherein any two cross-node AI/ML entities deployed in the access network device directly communicate with each other through an interface protocol; or
the access network device comprises at least one central entity, and any two cross-node AI/ML entities deployed in the access network device indirectly communicate with each other through one or more central entities; or
the access network device comprises at least one central entity, a part of the cross-node AI/ML entities deployed in the access network device directly communicate with each other through an interface protocol, and another part of the cross-node AI/ML entities deployed in the access network device indirectly communicate with each other through one or more central entities.

55. The access network device of any one of claims 49 to 54, wherein a cross-node AI/ML entity in the access network device and a target AI/ML entity deployed in a device other than the access network device directly communicate through an interface protocol; and/or
a cross-node AI/ML entity deployed in the access network device and a target AI/ML entity deployed in a device other than the access network device indirectly communicate through a cross-node AI/ML entity deployed in the device other than the access network device; and/or
an intra-node AI/ML entity deployed in the access network device and a target AI/ML entity deployed in a device other than the access network device directly communicate through an interface protocol; and/or
an intra-node AI/ML entity deployed in the access network device and a target AI/ML entity deployed in a device other than the access network device indirectly communicate through a cross-node AI/ML entity deployed in the access network device and/or a cross-node AI/ML entity deployed in the device other than the access network device.

56. The access network device of any one of claims 49 to 55, wherein each cross-node AI/ML entity or each intra-node AI/ML entity is configured to process at least one of:
a task requested by at least one communication node comprised in the access network device;
a task generated by the cross-node AI/ML entity or the intra-node AI/ML entity;
a task requested by other cross-node AI/ML entity deployed in the access network device;
a task requested by other intra-node AI/ML entity deployed in the access network device; or
a task requested by a target AI/ML entity deployed in a device other than the access network device.

57. The access network device of any one of claims 48 to 56, wherein the at least one target AI/ML entity comprises at least one central entity and at least one sub-entity, and each central entity is associated with one or more sub-entities;
wherein any one central entity is configured to at least one of:
process a task requested by at least one communication node comprised in the access network device;
process a task requested by other central entity deployed in the access network device;
process a task requested by a sub-entity deployed in the access network device;
forward a task triggered or responded by an intra-node AI/ML entity or a cross-node AI/ML entity deployed in the access network device to one or more sub-entities deployed in the access network device, or to a target AI/ML entity deployed in a device other than the access network device; or
forward a task triggered or responded by one or more sub-entities deployed in the access network device or a target AI/ML entity deployed in a device other than the access network device to an intra-node AI/ML entity or a cross-node AI/ML entity deployed in the access network device.

58. The access network device of claim 57, wherein the any one central entity is configured to at least one of:
forward the task triggered or responded by the intra-node AI/ML entity deployed in the access network device to one or more sub-entities in the access network device associated with the intra-node AI/ML entity that triggers or responds to the task;
forward the task triggered or responded by the cross-node AI/ML entity deployed in the access network device to one or more sub-entities in the access network device associated with the cross-node AI/ML entity that triggers or responds the task;
forward the task triggered or responded by the intra-node AI/ML entity deployed in the access network device to one or more sub-entities in the access network device associated with a type of the task;
forward the task triggered or responded by the cross-node AI/ML entity deployed in the access network device to one or more sub-entities in the access network device associated with a type of the task;
forward a task transmitted by an intra-node AI/ML entity deployed in the device other than the access network device to one or more sub-entities in the access network device associated with the intra-node AI/ML entity that transmits the task;
forward a task transmitted by a cross-node AI/ML entity deployed in the device other than the access network device to one or more sub-entities in the access network device associated with the cross-node AI/ML entity that transmits the task;
forward a task transmitted by an intra-node AI/ML entity deployed in the device other than the access network device to one or more sub-entities in the access network device associated with a type of the task; or
forward a task transmitted by a cross-node AI/ML entity deployed in the device other than the access network device to one or more sub-entities in the access network device associated with a type of the task.

59. The access network device of claim 57 or 58, wherein the central entity deployed in the access network device and the target AI/ML entity deployed in the device other than the access network device directly communicate through an interface protocol, and/or
the central entity deployed in the access network device and the target AI/ML entity deployed in the device other than the access network device communicate through a cross-node AI/ML entity deployed in the device other than the access network device.

60. The access network device of any one of claims 57 to 59, wherein any two central entities deployed in the access network device directly communicate with each other through an interface protocol; or
any two central entities deployed in the access network device indirectly communicate with each other through a specific entity; or
a part of the central entities deployed in the access network device directly communicate with each other through an interface protocol, and another part of the central entities deployed in the access network device indirectly communicate with each other through a specific entity.

61. The access network device of any one of claims 48 to 60, wherein an intra-node AI/ML entity, a cross-node AI/ML entity, a central entity, a sub-entity, or a specific entity deployed in the access network device comprises at least one of:
a data management unit, configured to perform at least one of: data collection, data storage, data modification, data update, data deletion, data replication, or data forwarding;
a storage management unit, configured to perform at least one of: remaining storage size indication, storage reservation, storage allocation, storage sharing, storage recovery, or storage formatting;
a computing power management unit, configured to perform at least one of: remaining computing power indication, computing power reservation, computing power allocation, computing power sharing, or computing power recovery;
a model management unit, configured to perform at least one of: model training, model verification, model testing, model deployment, model replication, model forwarding, model inference, model monitoring, model update, model activation, model deactivation, model deletion, or model switching; or
a task management unit, configured to perform at least one of: task generation, task acceptance, task rejection, task splitting, task allocation, task monitoring, task update, or task deletion.

62. The access network device of any one of claims 48 to 61, wherein an intra-node AI/ML entity deployed in the access network device is configured to at least one of:
transmit a task to an eleventh designated AI/ML entity, allocate a task to an eleventh designated AI/ML entity, or forward a task to an eleventh designated AI/ML entity;
receive and process a task transmitted by an eleventh designated AI/ML entity, a task allocated by an eleventh designated AI/ML entity, or a task forwarded by an eleventh designated AI/ML entity; or
forward a task transmitted by an eleventh designated AI/ML entity, a task allocated by an eleventh designated AI/ML entity, or a task forwarded by an eleventh designated AI/ML entity;
wherein the eleventh designated AI/ML entity comprises at least one of: other intra-node AI/ML entity deployed in the access network device, a cross-node AI/ML entity deployed in the access network device, a central entity deployed in the access network device, a sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

63. The access network device of any one of claims 48 to 62, wherein a cross-node AI/ML entity deployed in the access network device is configured to at least one of:
transmit a task to a twelfth designated AI/ML entity, allocate a task to a twelfth designated AI/ML entity, or forward a task to a twelfth designated AI/ML entity;
receive and process a task transmitted by a twelfth designated AI/ML entity, a task allocated by a twelfth designated AI/ML entity, or a task forwarded by a twelfth designated AI/ML entity; or
forward a task transmitted by a twelfth designated AI/ML entity, a task allocated by a twelfth designated AI/ML entity, or a task forwarded by a twelfth designated AI/ML entity;
wherein the twelfth designated AI/ML entity comprises at least one of: an intra-node AI/ML entity deployed in the access network device, other cross-node AI/ML entity deployed in the access network device, a central entity deployed in the access network device, a sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

64. The access network device of any one of claims 48 to 63, wherein a central entity deployed in the access network device is configured to at least one of:
transmit a task to a thirteenth designated AI/ML entity, allocate a task to a thirteenth designated AI/ML entity, or forward a task to a thirteenth designated AI/ML entity;
receive and process a task transmitted by a thirteenth designated AI/ML entity, a task allocated by a thirteenth designated AI/ML entity, or a task forwarded by a thirteenth designated AI/ML entity; or
forward a task transmitted by a thirteenth designated AI/ML entity, a task allocated by a thirteenth designated AI/ML entity, or a task forwarded by a thirteenth designated AI/ML entity;
wherein the thirteenth designated AI/ML entity comprises at least one of: an intra-node AI/ML entity deployed in the access network device, a cross-node AI/ML entity deployed in the access network device, other central entity deployed in the access network device, a sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

65. The access network device of any one of claims 48 to 64, wherein a sub-entity deployed in the access network device is configured to at least one of:
transmit a task to a fourteenth designated AI/ML entity, allocate a task to a fourteenth designated AI/ML entity, or forward a task to a fourteenth designated AI/ML entity;
receive and process a task transmitted by a fourteenth designated AI/ML entity, a task allocated by a fourteenth designated AI/ML entity, or a task forwarded by a fourteenth designated AI/ML entity; or
forward a task transmitted by a fourteenth designated AI/ML entity, a task allocated by a fourteenth designated AI/ML entity, or a task forwarded by a fourteenth designated AI/ML entity;
wherein the fourteenth designated AI/ML entity comprises at least one of: an intra-node AI/ML entity deployed in the access network device, a cross-node AI/ML entity deployed in the access network device, a central entity deployed in the access network device, other sub-entity deployed in the access network device, an intra-node AI/ML entity deployed in a device other than the access network device, a cross-node AI/ML entity deployed in a device other than the access network device, a central entity deployed in a device other than the access network device, or a sub-entity deployed in a device other than the access network device.

66. The access network device of claims 48 to 65, wherein a specific entity deployed in the access network device is configured to at least one of:
transmit a task to a central entity deployed in the access network device, allocate a task to a central entity deployed in the access network device, or forward a task to a central entity deployed in the access network device;
receive and process a task transmitted by a central entity deployed in the access network device, a task allocated by a central entity deployed in the access network device, or a task forwarded by a central entity deployed in the access network device; or
forward a task transmitted by a central entity deployed in the access network device, a task allocated by a central entity deployed in the access network device, or a task forwarded by a central entity deployed in the access network device.

67. The access network device of any one of claims 48 to 66, wherein the task comprises at least one of:
a data management task comprising at least one of: data collection, data storage, data modification, data update, data deletion, data replication, or data forwarding;
a storage management task comprising at least one of: remaining storage size indication, storage reservation, storage allocation, storage sharing, storage recovery, or storage formatting;
a computing power management task comprising at least one of: remaining computing power indication, computing power reservation, computing power allocation, computing power sharing, or computing power recovery; or
a model management task comprising at least one of: model training, model verification, model testing, model deployment, model replication, model forwarding, model inference, model monitoring, model update, model activation, model deactivation, model deletion, or model switching.

68. The access network device of any one of claims 48 to 67, wherein a target AI/ML entity that is newly joined or newly activated in the access network device transmits an initialization message to at least one deployed AI/ML entity;
wherein the initialization message comprises at least one piece of following information of the target AI/ML entity that is newly joined or newly activated: communication address information, identification information, supported function range information, or deployment location information; and
the at least one deployed AI/ML entity comprises one or more target AI/ML entities that have been deployed in the access network device, and/or one or more target AI/ML entities that have been deployed in a device other than the access network device.

69. The access network device of claim 68, wherein any one deployed AI/ML entity transmits a first response message or a second response message to the target AI/ML entity that is newly joined or newly activated;
wherein the first response message is used to indicate acceptance of the target AI/ML entity that is newly joined or newly activated, and the second response message is used to indicate rejection of the target AI/ML entity that is newly joined or newly activated.

70. The access network device of claim 69, wherein the first response message comprises at least one piece of following information of the any one deployed AI/ML entity: communication address information, identification information, supported function range information, or deployment location information; and
the second response message comprises rejection reason information and/or rejection duration information.

71. The access network device of any one of claims 48 to 70, wherein any one target AI/ML entity deployed in the access network device transmits a first notification message to at least one fifteenth designated AI/ML entity, and the first notification message is used to indicate the any one target AI/ML entity to perform a deactivation operation or a deletion operation of the any one target AI/ML entity;
wherein in a case that the any one target AI/ML entity receives an acknowledgement message transmitted by each fifteenth designated AI/ML entity, the any one target AI/ML entity performs the deactivation operation or the deletion operation of the any one target AI/ML entity;
wherein the fifteenth designated AI/ML entity comprises: other target AI/ML entity deployed in the access network device that has a communication connection with the any one target AI/ML entity, and/or a target AI/ML entity deployed in a device other than the access network device that has a communication connection with the any one target AI/ML entity.

72. The access network device of any one of claims 48 to 71, wherein any one target AI/ML entity deployed in the access network device receives a second notification message transmitted by a fifteenth designated AI/ML entity, and the second notification message is used to indicate deactivation or deletion of the any one target AI/ML entity;
wherein the any one target AI/ML entity performs, based on the second notification message, a deactivation operation or a deletion operation of the any one target AI/ML entity;
wherein the fifteenth designated AI/ML entity comprises: other target AI/ML entity deployed in the access network device that has a communication connection with the any one target AI/ML entity, and/or a target AI/ML entity deployed in a device other than the access network device that has a communication connection with the any one target AI/ML entity.

73. The access network device of any one of claims 48 to 72, wherein a communication node deployed in the access network device is enabled to transmit capability information to other communication node deployed in the access network device, or a communication node deployed in the access network device is enabled to transmit capability information to a communication node deployed in a device other than the access network device, or a communication node deployed in the access network device is enabled to receive capability information transmitted by a communication node deployed in a device other than the access network device;
wherein the capability information indicates at least one of:
whether to support to deploy an intra-node AI/ML entity;
whether to support to deploy a cross-node AI/ML entity;
a maximum number of intra-node AI/ML entities that are supported;
a maximum number of cross-node AI/ML entities that are supported;
a maximum number of sub-entities that are supported;
a target unit and/or a protocol layer entity of an intra-node AI/ML entity that is able to be deployed in the communication node;
a target unit and/or a protocol layer entity of an intra-node AI/ML entity that is unable to be deployed in the communication node;
a communication node in which at least one of an intra-node AI/ML entity or a cross-node AI/ML entity is able to be deployed simultaneously; or
a communication node in which at least one of an intra-node AI/ML entity or a cross-node AI/ML entity is unable to be deployed simultaneously;
wherein the communication node deployed in the device other than the access network device comprises at least one of: a management device, a communication node in a core network device, a terminal device, or a protocol layer entity in a terminal device;
wherein the communication node deployed in the access network device comprises at least one of: a base station, a Central unit (CU), a Distribute Unit (DU), a Central unit-Control Plane (CU-CP), a Central unit-User Plane (CU-UP), or a protocol layer entity in access network; and the protocol layer entity in the access network comprises at least one of: a Non-Access Stratum (NAS) entity, a Service Data Adaptation Protocol (SDAP) entity, a Radio Resource Control (RRC) entity, a Packet Data Convergence Protocol (PDCP) entity, a Radio Link Control (RLC) entity, a Backhaul Adaptation Protocol (BAP) entity, a Media Access Control (MAC) entity, or a Physical layer (PHY) entity.

74. A terminal device comprising at least one target Artificial Intelligence (Al)/Machine Learning (ML) entity, wherein each target AI/ML entity is configured to perform an AI/ML related task corresponding to the terminal device.

75. The terminal device of claim 74, wherein the target AI/ML entity comprises an intra-node AI/ML entity, and the intra-node AI/ML entity comprises at least one of a terminal device AI/ML entity or a protocol layer AI/ML entity;
wherein one or more terminal device AI/ML entities are deployed in the terminal device, and/or one or more protocol layer AI/ML entities are deployed in a protocol layer entity comprised in the terminal device;
wherein the terminal device AI/ML entity is configured to perform an AI/ML related task corresponding to the terminal device, and the protocol layer AI/ML entity is configured to perform an AI/ML related task corresponding to the protocol layer.

76. The terminal device of claim 74 or 75, wherein any two protocol layer AI/ML entities deployed in the terminal device directly communicate with each other through an interface protocol or indirectly communicate with each other through one or more terminal device AI/ML entities; and/or,
the terminal device AI/ML entity deployed in the terminal device and an access network AI/ML entity deployed in an access network device directly communicate through an air interface protocol, or the terminal device AI/ML entity deployed in the terminal device and a target unit AI/ML entity deployed in an access network device directly communicate through an air interface protocol; and/or,
the protocol layer AI/ML entity deployed in the terminal device and a protocol layer AI/ML entity deployed in an access network device directly communicate through an air interface protocol, or the protocol layer AI/ML entity deployed in the terminal device and a protocol layer AI/ML entity deployed in an access network device indirectly communicate through at least one of: the terminal device AI/ML entity deployed in the terminal device, the access network AI/ML entity deployed in the access network device, or the target unit AI/ML entity deployed in the access network device; and/or
the terminal device AI/ML entity deployed in the terminal device and/or the protocol layer AI/ML entity deployed in the terminal device indirectly communicate with an intra-node AI/ML entity and/or a cross-node AI/ML entity deployed in a core network device through an access network device.

77. The terminal device of any one of claims 74 to 76, wherein an intra-node AI/ML entity deployed in the terminal device comprises at least one of:
a data management unit, configured to perform at least one of: data collection, data storage, data modification, data update, data deletion, data replication, or data forwarding;
a storage management unit, configured to perform at least one of: remaining storage size indication, storage reservation, storage allocation, storage sharing, storage recovery, or storage formatting;
a computing power management unit, configured to perform at least one of: remaining computing power indication, computing power reservation, computing power allocation, computing power sharing, or computing power recovery;
a model management unit, configured to perform at least one of: model training, model verification, model testing, model deployment, model replication, model forwarding, model inference, model monitoring, model update, model activation, model deactivation, model deletion, or model switching; or
a task management unit, configured to perform at least one of: task generation, task acceptance, task rejection, task splitting, task allocation, task monitoring, task update, or task deletion.

78. The terminal device of any one of claims 74 to 77, wherein an intra-node AI/ML entity deployed in the terminal device is configured to at least one of:
transmit a task to a sixteenth designated AI/ML entity, allocate a task to a sixteenth designated AI/ML entity, or forward a task to a sixteenth designated AI/ML entity;
receive and process a task transmitted by a sixteenth designated AI/ML entity, a task allocated by a sixteenth designated AI/ML entity, or a task forwarded by a sixteenth designated AI/ML entity; or
forward a task transmitted by a sixteenth designated AI/ML entity, a task allocated by a sixteenth designated AI/ML entity, or a task forwarded by a sixteenth designated AI/ML entity;
wherein the sixteenth designated AI/ML entity comprises at least one of: an intra-node AI/ML entity deployed in an access network device, a cross-node AI/ML entity deployed in an access network device, a central entity deployed in an access network device, a sub-entity deployed in an access network device, an intra-node AI/ML entity deployed in a core network device, a cross-node AI/ML entity deployed in a core network device, an intra-node AI/ML entity deployed in a management device, or a cross-node AI/ML entity deployed in a management device.

79. The terminal device of any one of claims 74 to 78, wherein the task comprises at least one of:
a data management task comprising at least one of: data collection, data storage, data modification, data update, data deletion, data replication, or data forwarding;
a storage management task comprising at least one of: remaining storage size indication, storage reservation, storage allocation, storage sharing, storage recovery, or storage formatting;
a computing power management task comprising at least one of: remaining computing power indication, computing power reservation, computing power allocation, computing power sharing, or computing power recovery; or
a model management task comprising at least one of: model training, model verification, model testing, model deployment, model replication, model forwarding, model inference, model monitoring, model update, model activation, model deactivation, model deletion, or model switching.

80. The terminal device of any one of claims 74 to 79, wherein the terminal device is configured to receive first indication information transmitted by an access network device or a core network device, and the first indication information is used to at least one of:
indicate the terminal device to newly deploy at least one intra-node AI/ML entity;
indicate the terminal device to delete at least one intra-node AI/ML entity;
indicate the terminal device to activate at least one intra-node AI/ML entity;
indicate the terminal device to deactivate at least one intra-node AI/ML entity; or
indicate the terminal device to modify at least one intra-node AI/ML entity.

81. The terminal device of any one of claims 74 to 80, wherein the terminal device is further configured to transmit second indication information to an access network device or a core network device, and the second indication information is used to at least one of:
indicate at least one intra-node AI/ML entity that is expected to be added by the terminal device;
indicate at least one intra-node AI/ML entity that is expected to be deleted by the terminal device;
indicate at least one intra-node AI/ML entity that is expected to be activated by the terminal device;
indicate at least one intra-node AI/ML entity that is expected to be deactivated by the terminal device;
indicate at least one intra-node AI/ML entity that has been added by the terminal device;
indicate at least one intra-node AI/ML entity that has been deleted by the terminal device;
indicate at least one intra-node AI/ML entity that has been activated by the terminal device;
indicate at least one intra-node AI/ML entity that has been deactivated by the terminal device; or
indicate at least one intra-node AI/ML entity that has been modified by the terminal device.

82. The terminal device of any one of claims 74 to 81, wherein the target AI/ML entity deployed in the terminal device is enabled to transmit capability information to other target AI/ML entity deployed in the terminal device, or the terminal device is enabled to transmit capability information to a communication node deployed in a device other than the terminal device, or the terminal device is enabled to receive capability information transmitted by a communication node deployed in a device other than the terminal device,
wherein the capability information indicates at least one of:
whether to support to deploy an intra-node AI/ML entity;
whether to support to deploy a cross-node AI/ML entity;
a maximum number of intra-node AI/ML entities that are supported;
a maximum number of cross-node AI/ML entities that are supported;
a maximum number of sub-entities that are supported;
a protocol layer entity of an intra-node AI/ML entity that is able to be deployed in the terminal device;
a protocol layer entity of an intra-node AI/ML entity that is unable to be deployed in the terminal device;
a target unit and/or a protocol layer entity of an intra-node AI/ML entity that is able to be deployed in the communication node;
a target unit and/or a protocol layer entity of an intra-node AI/ML entity that is unable to be deployed in the communication node;
a communication node in which at least one of an intra-node AI/ML entity or a cross-node AI/ML entity is able to be deployed simultaneously; or
a communication node in which at least one of an intra-node AI/ML entity or a cross-node AI/ML entity is unable to be deployed simultaneously;
wherein the communication node deployed in the device other than the terminal device comprises at least one of: a management device, a communication node in a core network device, a communication node in an access network device, a target unit in an access network device, or a protocol layer entity in an access network device;
wherein the communication node deployed in the terminal device comprises at least one of: a terminal device or a protocol layer entity in the terminal device, and the protocol layer entity in the terminal device comprises at least one of: a Non-Access Stratum (NAS) entity, a Service Data Adaptation Protocol (SDAP) entity, a Radio Resource Control (RRC) entity, a Packet Data Convergence Protocol (PDCP) entity, a Radio Link Control (RLC) entity, a Backhaul Adaptation Protocol (BAP) entity, a Media Access Control (MAC) entity, or a Physical layer (PHY) entity.

83. A communication method, comprising:
performing, by a communication device, an Artificial Intelligence (Al)/Machine Learning (ML) related task corresponding to the communication device, wherein the AI/ML related task corresponding to the communication device comprises at least one of:
an AI/ML related task generated by the communication device;
an AI/ML related task requested by a target AI/ML entity deployed in a device other than the communication device;
an AI/ML related task transmitted by a target AI/ML entity deployed in a device other than the communication device; or
training, reasoning or monitoring an AI/ML model in the communication device.

84. A communication apparatus, comprising:
an execution unit, configured to perform an Artificial Intelligence (Al)/Machine Learning (ML) related task corresponding to the communication apparatus, wherein the AI/ML related task corresponding to the communication apparatus comprises at least one of:
an AI/ML related task generated by the communication apparatus;
an AI/ML related task requested by a target AI/ML entity deployed in a device other than the communication apparatus;
an AI/ML related task transmitted by a target AI/ML entity deployed in a device other than the communication apparatus; or
training, reasoning or monitoring an AI/ML model in the communication apparatus.

85. A communication device comprising: a processor and a memory,
wherein the memory is configured to store a computer program executable on a processor, and
the processor is configured to implement the method of claim 83 when executing the program.

86. A computer storage medium storing one or more programs executable by one or more processors to implement that method of claim 83.

87. A chip comprising a processor for invoking and executing a computer program from a memory to implement that method of claim 83.

88. A computer program product comprising a computer storage medium storing a computer program, wherein the computer program comprises instructions executable by at least one processor that, when executed by the at least one processor, implementing the method of claim 83.

89. A computer program causing a computer to perform that method of claim 83.
